(19) Europäisches Patentamt
European Patent Office
Office européen des brevets

(11) **EP 4 709 009 A1**

(12) **EUROPEAN PATENT APPLICATION**
published in accordance with Art. 153(4) EPC

(43) Date of publication:
**11.03.2026 Bulletin 2026/11**

(21) Application number: **24807636.6**

(22) Date of filing: **17.05.2024**

(51) International Patent Classification (IPC):
**H04W 72/23** (2023.01)    **H04B 7/06** (2006.01)
**H04L 5/00** (2006.01)    **H04W 24/10** (2009.01)
**H04W 52/02** (2009.01)

(52) Cooperative Patent Classification (CPC):
**H04B 7/06; H04L 5/00; H04W 24/10; H04W 52/02; H04W 72/23**

(86) International application number:
**PCT/KR2024/095809**

(87) International publication number:
**WO 2024/237766 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.05.2023 KR 20230063980**

(71) Applicant: Samsung Electronics Co., Ltd.
**Suwon-si, Gyeonggi-do 16677 (KR)**

(72) Inventors:
• **JANG, Youngrok**
**Suwon-si Gyeonggi-do 16677 (KR)**
• **KIM, Younsun**
**Suwon-si Gyeonggi-do 16677 (KR)**
• **YI, Junyung**
**Suwon-si Gyeonggi-do 16677 (KR)**
• **JI, Hyoungju**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR REQUESTING CHANNEL STATE INFORMATION FOR SAVING NETWORK ENERGY IN WIRELESS COMMUNICATION SYSTEM**

(57)    The present disclosure relates to a 5G or 6G communication system for supporting higher data transmission rates. A method performed by a user equipment (UE) in a wireless communication system comprises receiving, from a base station, first information comprising information on at least one configuration for a channel state information (CSI) report, wherein the information on the at least one configuration comprises information on sub-configurations, receiving, from the base station, second information for the CSI report, wherein at least one sub-configuration among the sub-configurations is indicated based on the second information and transmitting, to the base station, the CSI report for the at least one sub-configuration.

FIG.12

**Description**

[Technical Field]

The disclosure relates to a wireless communication system and, more specifically, to a method and a device for requesting channel state information for network energy saving in a wireless communication system.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure of Invention]

[Technical Problem]

Provided according to an embodiment of the disclosure are a device and a method capable of effectively providing services in a mobile communication system.

[Solution to Problem]

According to an embodiment of the disclosure, a method performed by a user equipment (UE) in a wireless communication system may include receiving, from a base station, first information including information on at least one configuration for a channel state information (CSI) report, wherein the information on the at least one configuration comprises information on sub-configurations, receiving, from the base station, second information for the CSI report, wherein at least one sub-configuration among the sub-configurations is indicated based on the second information, and transmitting the CSI report for the at least one sub-configuration to the base station.

[Advantageous Effects of Invention]

According to an embodiment of the disclosure, a device and a method capable of effectively providing services in a wireless communication system can be provided.

Advantageous effects obtainable from the disclosure may not be limited to the above-mentioned effects, and other effects which are not mentioned herein may be clearly understood from the following description by those skilled in the art to which the disclosure pertains.

[Brief Description of Drawings]

FIG. 1 illustrates a basic structure of a time-frequency domain in a wireless communication system according to an embodiment.
FIG. 2 illustrates a structure of a frame, a subframe, and a slot in a wireless communication system according to an embodiment.
FIG. 3 illustrates an example of a bandwidth part configuration in a wireless communication system according to an embodiment.
FIG. 4 illustrates radio protocol structures of a base station and a UE in single cell, carrier aggregation, and dual connectivity situations in a wireless communication system according to an embodiment.
FIG. 5 illustrates an example of an aperiodic CSI reporting method according to an embodiment.
FIG. 6 illustrates an example of a control resource set configuration of a downlink control channel in a wireless communication system according to an embodiment.
FIG. 7 illustrates a structure of a downlink control channel in a wireless communication system according to an embodiment.
FIG. 8 illustrates an example of an antenna port configuration and resource allocation for cooperative communication in a wireless communication system according to an embodiment.
FIG. 9 illustrates an example of a downlink control information (DCI) configuration for cooperative communication in a wireless communication system according to an embodiment.
FIG. 10 illustrates a structure of aperiodic CSI report signaling which may be configured for a terminal through higher layer signaling according to an embodiment.
FIG. 11 illustrates aperiodic CSI report and aperiodic CSI-RS triggering situations and restrictions according to an embodiment.
FIG. 12 illustrates a structure of a MAC CE indicating activation or deactivation of a semi-persistent CSI report transmitted through a PUCCH according to an embodiment.
FIG. 13 illustrates a situation where multiple overlapping CSI-RS resources are transmitted according to an embodiment.
FIG. 14 illustrates a structure of a MAC CE indicating activation or deactivation of a PUCCH-based semi-persistent CSI report in consideration of a detailed CSI report configuration according to an embodiment.
FIG. 15 illustrates a structure of another MAC CE indicating activation or deactivation of a PUCCH-based semi-persistent CSI report in consideration of a detailed CSI report configuration according to an embodiment.

FIG. 16 illustrates an operation of a terminal according to an embodiment.

FIG. 17 illustrates an operation of a base station according to an embodiment.

FIG. 18 illustrates a structure of a UE in a wireless communication system according to an embodiment.

FIG. 19 illustrates a structure of a base station in a wireless communication system according to an embodiment.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms, and the embodiments of the disclosure are provided merely to completely disclose the disclosure and inform those skilled in the art of the scope of the disclosure. The disclosure is defined only by the scope of the appended claims. Throughout the disclosure, the same or like reference numerals designate the same or like elements. In addition, a detailed description of known functions or configurations that may make the subject matter of the disclosure unclear will be omitted. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include at least one of a user equipment (UE), a mobile station (MS), a cellular phone, a smartphone, a computer, or a multimedia system capable of performing a communication function. In the disclosure, a "downlink (DL)" may refer to a radio link via which a base station transmits a signal to a terminal, and an "uplink (UL)" may refer to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in the disclosure may include one or more processors.

According to an embodiment, a wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

According to an embodiment, as a typical example of the broadband wireless communication system, an LTE system employs an orthogonal frequency division multiplexing (OFDM) scheme in a downlink (DL). In an uplink (UL), a single carrier frequency division multiple access (SC-FDMA) scheme may be employed. The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The multiple access scheme may separate data or control information of respective users by allocating and operating time-frequency resources for transmitting the data or control information for each user so as to avoid overlapping each other, that is, so as to establish orthogonality.

According to an embodiment, since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, e MBB aims at providing a data rate higher than that supported by existing LTE, LTE-A, or LTE-Pro. For example, in the 5G communication system, eMBB must provide a peak data rate of 20Gbps in the downlink and a peak data rate of 10Gbps in the uplink for a single base station. Furthermore, the 5G communication system must provide an increased user-perceived data rate to the UE, as well as the maximum data rate. In order to satisfy such requirements, various transmission/reception technologies including a further enhanced multi-input multi-output (MIMO) transmission technique may be required to be improved. Also, the data rate required for the 5G communication system may be obtained using a frequency bandwidth more than 20MHz in a frequency band of 3 to 6GHz or 6GHz or more, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10$^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

According to an embodiment, the three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

In the following description, the term "a/b" may be understood as at least one of a and b.

[NR time-frequency resources]

Hereinafter, a frame structure of a 5G system will be described in more detail with reference to the accompanying drawings.

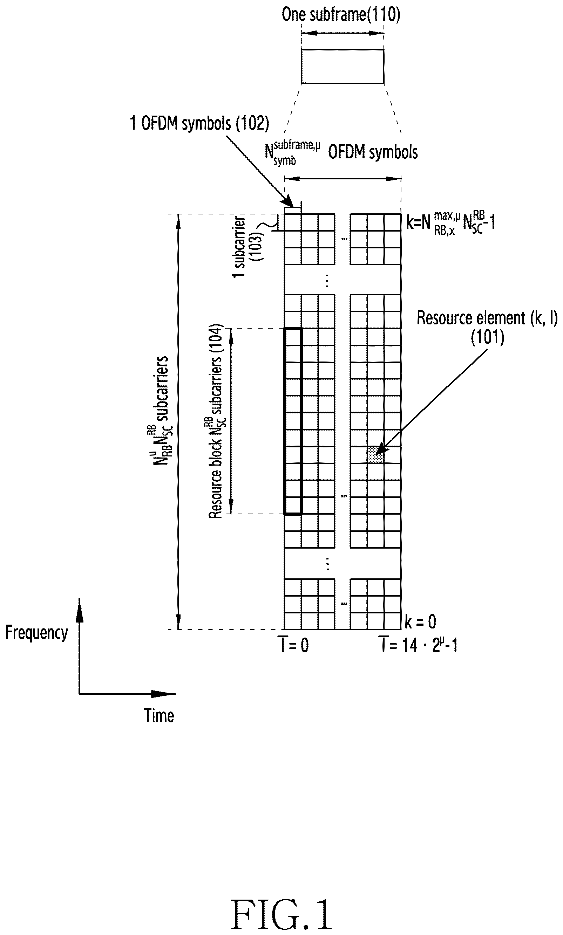

FIG. 1 illustrates a basic structure of a time-frequency domain, which is a radio resource domain used to transmit data or control channels, in a 5G system according to an embodiment.

Referring to FIG. 1, the horizontal axis in FIG. 1 represents a time domain, and the vertical axis in FIG. 1 represents a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104. In the time domain, one subframe 110 may include multiple OFDM symbols 102. For example, the length of one subframe may be 1ms.

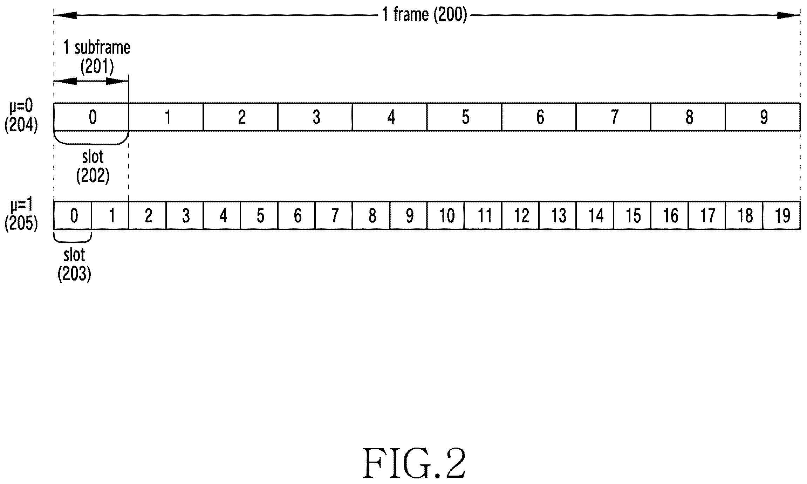

FIG. 2 illustrates a structure of a frame, a subframe, and a slot in a wireless communication system according to an embodiment.

Referring to FIG. 2, FIG. 2 illustrates an example of a structure of a frame 200, a subframe 201, and/or a slot 202. One frame 200 may be defined as 10ms. One subframe 201 may be defined as 1ms, and thus one frame 200 may include a total often subframes 201.

According to an embodiment, one slot 202 or 203 may be defined as 14 OFDM symbols. For example, the number of symbols per one slot may be referred to as $N_{symb}^{slot}=14$. One subframe 201 may include one or multiple slots 202 and 203, and the number of slots 202 and 203 per one subframe 201 may vary depending on configuration values μ 204 or 205 for the subcarrier spacing.

The example in FIG. 2 illustrates a case in which the subcarrier spacing configuration value is μ=0 (204), and a case in which μ=1 (205). In the case of μ=0 (204), one subframe 201 may include one slot 202, and in the case of μ=1 (205), one subframe 201 may include two slots 203. That is, the number of slots per one subframe $N_{slot}^{subframe,\mu}$ may differ depending on the subcarrier spacing configuration value μ, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration μ as in Table 1 below.

[Table 1]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Hereinafter, a bandwidth part (BWP) configuration in a 5G communication system will be described in detail with reference to the drawings.

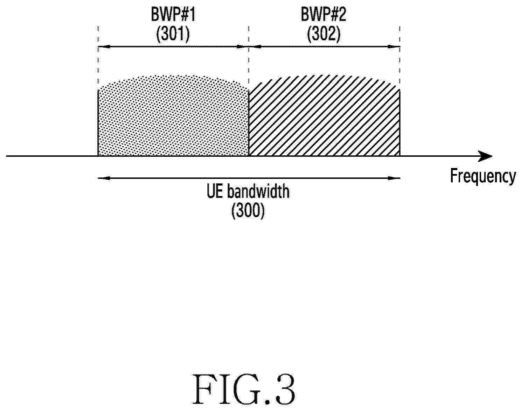

FIG. 3 illustrates an example of a bandwidth part configuration in a wireless communication system according to an embodiment.

Referring to FIG. 3, FIG. 3 illustrates an example in which a UE bandwidth 300 is configured to include two bandwidth parts, that is, bandwidth part #1 (BWP#1) 301 and bandwidth part #2(BWP#2) 302. A base station may configure one or multiple bandwidth parts for a UE, and may configure the following pieces of information with regard to each bandwidth part as given in Table 2 below.

[Table 2]

| BWP ::= | SEQUENCE { |
| --- | --- |
| bwp-Id<br>(bandwidth part identifier) | BWP-Id, |
| locationAndBandwidth<br>(bandwidth part location) | INTEGER (1..65536), |
| subcarrierSpacing<br>(subcarrier spacing) | ENUMERATED {n0, n1, n2, n3, n4, n5}, |
| cyclicPrefix<br>(cyclic prefix)<br>} | ENUMERATED { extended } |

Of course, the information configured for the UE is not limited to the above example, and in addition to the configuration information in Table 2, various parameters associated with the bandwidth part may be configured for the UE. The base station may transfer the configuration information to the UE through upper layer signaling (for example, radio resource control (RRC) signaling). At least one of the one or more bandwidth parts configured for the UE may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). For example, the UE may receive configuration information on a control resource set (CORESET) and a search space which may be used to transmit a PDCCH for receiving system information (which may correspond to remaining system information (RMSI) or system information block 1 (SIB1) necessary for initial access through the MIB in the initial access step.

According to an embodiment, each of the control resource set and the search space configured through the MIB may be considered identity (ID) 0 or identified thereby. The base station may notify the UE of configuration information, such as frequency allocation information, time allocation information, and/or numerology, regarding control resource set #0 through the MIB. In addition, the base station may notify the UE of configuration information on the monitoring cycle and occasion with regard to control resource set #0, that is, configuration information on search space #0, through the MIB. The UE may identify or consider a frequency domain configured by control resource set #0 acquired from the MIB as an initial bandwidth part for initial access. The ID of the initial bandwidth part may be considered to be 0.

According to an embodiment, the bandwidth part-related configuration supported by 5G may be used for various purposes.

According to an embodiment, if the bandwidth supported by the UE is smaller than the system bandwidth, the base station may support data communication of the UE through the bandwidth part configuration. For example, the base station may configure the frequency location (configuration information 2) of the bandwidth part for the UE, so that the UE can transmit/receive data at a specific frequency location (e.g., configured frequency location) within the system bandwidth.

According to an embodiment, the base station may configure multiple bandwidth parts for the UE for the purpose of supporting different numerologies. For example, in order to support a designated UE's data transmission/reception using both a subcarrier spacing of 15kHz and a subcarrier spacing of 30kHz, the base station may configure, for the designated UE, two bandwidth parts as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

According to an embodiment, the base station may configure bandwidth parts having different sizes of bandwidths for the UE for the purpose of reducing power consumed by the UE. For example, if the UE supports a substantially large bandwidth (e.g., bandwidth of 100MHz) and always transmits/receives data with the supported bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as indicated by the base station if data has occurred.

According to an embodiment, in connection with the bandwidth part configuring method, UEs, before RRC-connected, may receive configuration information on the initial bandwidth part (initial BWP) through an MIB in the initial access step. For example, a UE may have a control resource set (i.e., CORESET) configured for a downlink control channel which may be used to transmit DCI for scheduling a system information block (SIB) from the MIB of a physical broadcast channel (PBCH). The bandwidth of the control resource set configured by the MIB may be considered the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, and/or random access.

According to an embodiment, if one or more bandwidth parts are configured for the UE, the base station may indicate, to the UE, changing (or switching or transition) of the bandwidth parts by using a bandwidth part indicator field inside DCI. For example, if the currently activated bandwidth part of the UE is bandwidth part #1 301 in FIG. 3, the base station may indicate bandwidth part #2 302 with a bandwidth part indicator inside DCI, and the UE may change (or switch) the bandwidth part to bandwidth part #2 302 indicated by the bandwidth part indicator inside the received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined as given below, for example.

[Table 3]

| $\mu$ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

According to an embodiment, the requirements for the bandwidth part change delay time may support type 1 or type 2, depending on the capability of the UE. The UE may report the supportable bandwidth part change delay time type to the base station. For example, the bandwidth part delay time may differ depending on the capability of the UE, and the UE may report the bandwidth part change delay time type, determined based on the capability of the UE, to the base station. The bandwidth part change delay time type may indicate a bandwidth part change delay time.

According to an embodiment, if the UE has received DCI including a bandwidth part change indicator in slot n, according to (or based on) the requirement for the bandwidth part change delay time, the UE may complete a change to the new bandwidth part indicated by the bandwidth part change indicator at a time point not later than slot n+$T_{BWP}$, and the UE may transmit and/or receive a data channel scheduled by the corresponding DCI in the changed new bandwidth part.

According to an embodiment, if the base station wants to schedule a data channel by using the new bandwidth part, the base station may determine time domain resource allocation on the data channel, based on the UE's bandwidth part change delay time ($T_{BWP}$). That is, when scheduling a data channel by using the new bandwidth part, the base station may schedule the corresponding data channel at a time point after the bandwidth part change delay time, in connection with the determination of time domain resource allocation on the data channel. Accordingly, the UE may not expect that the DCI that indicates a bandwidth part change will indicate a slot offset (K0 or K2) value smaller than the bandwidth part change delay time ($T_{BWP}$).

According to an embodiment, in case that the UE has received DCI (for example, DCI format 1_1 or 0_1) indicating a bandwidth part change, the UE may perform no transmission or reception during a time interval from the third symbol of the slot used to receive a PDCCH including the corresponding DCI indicating the bandwidth part change to the start point of the slot indicated by a slot offset (K0 or K2) value. For example, the slot offset (K0 or K2) value may be indicated by a time domain resource allocation indicator field in the corresponding DCI.

For example, if the UE has received DCI indicating a bandwidth part change in slot n, and the slot offset value indicated by the corresponding DCI is K, the UE may perform no transmission or reception from the third symbol of slot n to the symbol before slot n+K (i.e., the last symbol of slot n+K-1).

[Regarding CA/DC]

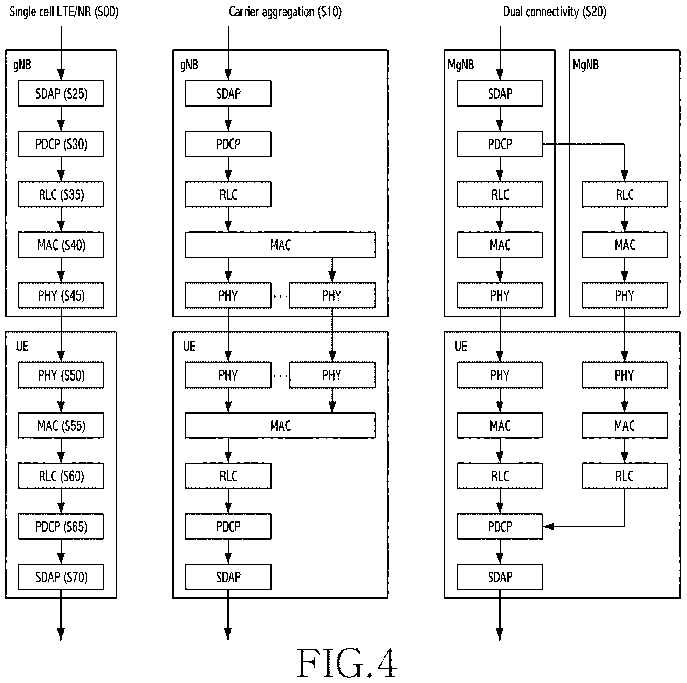

FIG. 4 illustrates radio protocol structures of a base station and a UE in single cell, carrier aggregation, and dual connectivity situations according to an embodiment.

Referring to FIG. 4, a radio protocol of a mobile communication system includes an NR service data adaptation protocol (SDAP) S25 or S70, an NR packet data convergence protocol (PDCP) S30 or S65, an NR radio link control (RLC) S35 or S60, and/or an NR medium access controls (MAC) S40 or S55, on each of UE and NR base station sides.

According to an embodiment, the main functions of the NR SDAP S25 or S70 may include at least some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

According to an embodiment, with regard to the SDAP layer device, whether to use the header of the SDAP layer device or whether to use functions of the SDAP layer device may be configured for the UE through an RRC message according to PDCP layer devices or according to bearers or according to logical channels. If an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information on the QoS flow and data bearer of the uplink and downlink. For example, the SDAP header may include QoS flow ID information indicating the QoS. For example, the QoS information may be used as data processing priority for smoothly supporting services and/or or scheduling information, etc.

The main functions of the NR PDCP S30 or S65 may include at least some of functions below.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

According to an embodiment, the reordering of the NR PDCP device may refer to a function of reordering PDCP PDUs received from a lower layer in an order based on the PDCP sequence number (SN), and may include a function of transferring data to an upper layer in the reordered sequence.

According to an embodiment, the reordering of the NR PDCP device may include a function of instantly transferring data without considering the order, and may include a function of recording PDCP PDUs lost as a result of reordering. The reordering of the NR PDCP device may include a function of reporting the state of the lost PDCP PDUs to the transmitting side, and may include a function of requesting retransmission of the lost PDCP PDUs.

The main functions of the NR RLC S35 or S60 may include at least some of functions below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

According to an embodiment, the in-sequence delivery of the NR RLC device may refer to a function of successively delivering RLC SDUs received from the lower layer to the upper layer. The out-sequence delivery of the NR RLC device may include a function of, if one original RLC SDU is segmented into multiple RLC SDUs and the segmented RLC SDUs are received, reassembling the RLC SDUs and delivering the reassembled RLC SDUs. The in-sequence delivery of the NR RLC device may include a function of reordering the received RLC PDUs with reference to the RLC sequence number (SN) or PDCP sequence number (SN), and may include a function of recording RLC PDUs lost as a result of reordering. The in-sequence delivery of the NR RLC device may include a function of reporting the state of the lost RLC PDUs to the transmitting side, and may include a function of requesting retransmission of the lost RLC PDUs.

According to an embodiment, the in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all RLC SDUs received until now to the upper layer. In addition, the in-sequence delivery of the NR RLC device may process RLC PDUs in the received order(regardless of the sequence number order, in the order of arrival) and deliver same to the PDCP device regardless of the order (out-of-sequence delivery). The in-sequence delivery of the NR RLC device may, in the case of segments, receive segments which are stored in a buffer or which are to be received later, reconfigure same into one complete RLC PDU, and then process and deliver same to the PDCP device. The NR RLC layer may include no concatenation function, which may be performed in the NR MAC layer or replaced with a multiplexing function of the NR MAC layer.

According to an embodiment, the out-of-sequence delivery of the NR RLC device may refer to a function of instantly delivering RLC SDUs received from the lower layer to the upper layer regardless of the order. The out-of-sequence delivery of the NR RLC device may include a function of, if one original RLC SDU is segmented into multiple RLC SDUs and the segmented RLC SDUs are received, reassembling the RLC SDUs and delivering the reassembled RLC SDUs, and may include a function of storing the RLC SN or PDCP SN of received RLC PDUs, and recording RLC PDUs lost as a result of reordering.

According to an embodiment, the NR MAC S40 or S55 may be connected to multiple NR RLC layer devices configured in one UE, and the main functions of the NR MAC may include at least some of functions below.

- Mapping between logical channels and transport channels
- Multiplexing/demultiplexing of MAC SDUs
- Scheduling information reporting
- HARQ (Error correction through HARQ)
- Priority handling between logical channels of one UE
- Priority handling between UEs by means of dynamic scheduling
- MBMS service identification
- Transport format selection
- Padding

According to an embodiment, an NR PHY layer S45 or S50 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

According to an embodiment, the detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as S00. On the other hand, in case that the base station transmits data to the UE, based on carrier aggregation(CA) which uses multiple carriers in a single TRP, the base station and the UE may use a protocol structure which has a single structure up to the RLC, but multiplexes the PHY layer through a MAC layer, such as S10. For example, in case that the base station transmits data to the UE, based on dual connectivity (DC)which uses multiple carriers in multiple TRPs, the base station and the UE may use a protocol structure which has a single structure up to the RLC, but multiplexes the PHY layer through a MAC layer, such as S20.

[CSI resource configuration]

According to an embodiment, in NR, a CSI framework used for a base station to indicate channel state information (CSI) measurement and reporting to a UE may exist. For example, a CSI framework of NR may be configured by two elements including at least a resource configuration (resource setting) and a report configuration (report setting). For example, a report setting may refer to one or more IDs of resource settings to have an association relation with the resource settings.

According to an embodiment, a resource setting may include information related to a reference signal (RS) for measuring channel state information by the UE. For example, the base station may configure at least one resource settings for the UE. For example, the base station and the UE may transmit and receive, to and from each other, at least some of signaling information included in [Table 4] to transfer information on a resource setting.

【Table 4】

```
ASN1START
TAG-CSI-RESOURCECONFIG-START

CSI-ResourceConfig ::=          SEQUENCE {
csi-ResourceConfigId            CSI-ResourceConfigId,
csi-RS-ResourceSetList          CHOICE {
nzp-CSI-RS-SSB                    SEQUENCE {
nzp-CSI-RS-ResourceSetList  SEQUENCE (SIZE (1..maxNrofNZP-CSI-RS-
        ResourceSetsPerConfig)) OF NZP-CSI-RS-ResourceSetId
OPTIONAL, -- Need R
csi-SSB-ResourceSetList          SEQUENCE (SIZE (1..maxNrofCSI-SSB-
        ResourceSetsPerConfig)) OF CSI-SSB-ResourceSetId
OPTIONAL    -- Need R
},
csi-IM-ResourceSetList           SEQUENCE (SIZE (1..maxNrofCSI-IM-
        ResourceSetsPerConfig)) OF CSI-IM-ResourceSetId
},

bwp-Id                           BWP-Id,
resourceType                     ENUMERATED { aperiodic, semiPersistent,
        periodic },
...
}

TAG-CSI-RESOURCECONFIG-STOP
-- ASN1STOP
```

According to an embodiment, the signaling information CSI-ResourceConfig in [Table 4] may include information on each resource setting. Based on the signaling information in [Table 4], each resource setting may include a resource setting index (csi-ResourceConfigId), a BWP index (bwp-ID), a time axis transmission configuration of a resource (resourceType), or a resource set list (csi-RS-ResourceSetList) including at least one resource set.

According to an embodiment, the time axis transmission configuration of a resource may be configured as aperiodic transmission, semi-persistent transmission, or periodic transmission.

According to an embodiment, the resource set list may be a set including resource sets for channel measurement, or a set including resource sets for interference measurement. For example, if the resource set list is a set including resource sets for channel measurement, each resource set may include at least one resource. The at least one resource may correspond to an index of a CSI reference signal (CSI-RS) resource or a synchronization/broadcast channel block (SS/PBCH block) (synchronization signal block (SSB)). For example, if the resource set list is a set including resource sets for interference measurement, each resource set may include at least one interference measurement resource (CSI interference measurement (CSI-IM)).

According to an embodiment, if a resource set includes a CSI-RS, the base station and the UE may transmit and receive, to and from each other, at least some of signaling information included in [Table 5] to transfer information on the resource set.

【Table 5】

```
-- ASN1START
-- TAG-NZP-CSI-RS-RESOURCESET-START
NZP-CSI-RS-ResourceSet ::=              SEQUENCE {
     nzp-CSI-ResourceSetId                NZP-CSI-RS-ResourceSetId,
     nzp-CSI-RS-Resources                 SEQUENCE (SIZE
     (1..maxNrofNZP-CSI-RS-ResourcesPerSet)) OF NZP-CSI-RS-ResourceId,
     repetition                           ENUMERATED { on, off }
     OPTIONAL,     -- Need S
     aperiodicTriggeringOffset            INTEGER(0..6)
     OPTIONAL,     -- Need S
     trs-Info                             ENUMERATED {true}
     OPTIONAL,     -- Need R
     ...
}

-- TAG-NZP-CSI-RS-RESOURCESET-STOP
-- ASN1STOP
```

According to an embodiment, the signaling information NZP-CSI-RS-ResourceSet in [Table 5] may include information on each resource set. Based on the signaling information in [Table 5], each resource set may include at least information on a resource set index (nzp-CSI-ResourceSetId) or an index set (nzp-CSI-RS-Resources) of CSI-RS included in the resource set, and may include some of information (repetition) on a spatial domain transmission filter of CSI-RS resources included in the resource set, or information (trs-Info) relating to whether CSI-RS resources included in the resource set have a tracking purpose.

According to an embodiment, a CSI-RS may be the most representative reference signal included in a resource set. The base station and the UE may transmit and receive, to and from each other, at least some of signaling information included in [Table 6] to transfer information on a CSI-RS resource.

【Table 6】

```
-- ASN1START
-- TAG-NZP-CSI-RS-RESOURCE-START

NZP-CSI-RS-Resource ::=                 SEQUENCE {
     nzp-CSI-RS-ResourceId                NZP-CSI-RS-ResourceId,
     resourceMapping                      CSI-RS-ResourceMapping,
     powerControlOffset                   INTEGER (-8..15),
     powerControlOffsetSS                 ENUMERATED{db-3, db0, db3,
     db6}                       OPTIONAL,     -- Need R
     scramblingID                         ScramblingId,
     periodicityAndOffset                 CSI-ResourcePeriodicityAndOffset
     OPTIONAL,     -- Cond PeriodicOrSemiPersistent
     qcl-InfoPeriodicCSI-RS               TCI-StateId
     OPTIONAL,     -- Cond Periodic
     ...
}

-- TAG-NZP-CSI-RS-RESOURCE-STOP
-- ASN1STOP
```

According to an embodiment, the signaling information NZP-CSI-RS-Resource in [Table 6] may include information on each CSI-RS. The information included in the signaling information NZP-CSI-RS-Resource in [Table 6] may have the following meanings or include the following information.

- nzp-CSI-RS-ResourceId: An index of a CSI-RS resource
- resourceMapping: Resource mapping information of a CSI-RS resource
- powerControlOffset: A ratio between PDSCH energy per RE (EPRE) and CSI-RS EPRE
- powerControlOffsetSS: A ratio between SS/PBCH block EPRE and CSI-RS EPRE
- scramblingID: A scrambling index of a CSI-RS sequence
- periodicityAndOffset: A transmission period and a slot offset of a CSI-RS resource
- qcl-InfoPeriodicCSI-RS: TCI-state information when a corresponding CSI-RS is a periodic CSI-RS

According to an embodiment, resourceMapping included in the signaling information NZP-CSI-RS-Resource represents resource mapping information of a CSI-RS resource, and the signaling information NZP-CSI-RS-Resource may include resource element (RE) mapping of a frequency resource, the number of ports, symbol mapping, a CDM type, a frequency resource density, and/or frequency band mapping information. The number of ports, the frequency resource density, the CDM type, and/or the time-frequency axis RE mapping, which may be configured through the signaling information NZP-CSI-RS-Resource, may have predetermined values for one of the rows shown in [Table 7].

[Table 7]

| Row | Ports $X$ | Density $\rho$ | *cdm-Type* | $(\bar{k},\bar{l})$ | CDM group index $j$ | $k'$ | $l'$ |
|---|---|---|---|---|---|---|---|
| 1 | 1 | 3 | No CDM | $(k_0,l_0)$, $(k_0 + 4,l_0)$, $(k_0 + 8,l_0)$ | 0,0,0 | 0 | 0 |
| 2 | 1 | 1, 0.5 | No CDM | $(k_0,l_0)$ | 0 | 0 | 0 |
| 3 | 2 | 1, 0.5 | FD-CDM2 | $(k_0,l_0)$ | 0 | 0, 1 | 0 |
| 4 | 4 | 1 | FD-CDM2 | $(k_0,l_0),(k_0 + 2,l_0)$ | 0,1 | 0, 1 | 0 |
| 5 | 4 | 1 | FD-CDM2 | $(k_0,l_0),(k_0,l_0 +1)$ | 0,1 | 0, 1 | 0 |
| 6 | 8 | 1 | FD-CDM2 | $(k_0,l_0),(k_1,l_0),(k_2,l_0),(k_3,l_0)$ | 0,1,2,3 | 0, 1 | 0 |
| 7 | 8 | 1 | FD-CDM2 | $(k_0,l_0(k_1,l_0(k_0,l_0+ 1),(k_1,l_0 + 1)$ | 0,1,2,3 | 0, 1 | 0 |
| 8 | 8 | 1 | CDM4 (FD2,TD2) | $(k_0,l_0),(k_1,l_0)$ | 0,1 | 0, 1 | 0, 1 |
| 9 | 12 | 1 | FD-CDM2 | $(k_0,l_0),(k_1,l_0),(k_2,l_0),(k_3,l_0),(k_4,l_0),(k_5,l_0)$ | 0,1,2,3,4, 5 | 0, 1 | 0 |
| 10 | 12 | 1 | CDM4 (FD2,TD2) | $(k_0,l_0),(k_1,l_0),(k_2,l_0)$ | 0,1,2 | 0, 1 | 0, 1 |
| 11 | 16 | 1, 0.5 | FD-CDM2 | $(k_0,l_0),(k_1,l_0),(k_1,l_0),(k_3,l_0),(k_0,l_0 + 1),(k_1,l_0 + 1),(k_2,l_0 + 1),(k_3,l_0 +1)$ | 0,1,2,3, 4,5,6,7 | 0, 1 | 0 |
| 12 | 16 | 1, 0.5 | CDM4 (FD2,TD2) | $(k_0,l_0),(k_1,l_0),(k_2,l_0),(k_3,l_0)$ | 0,1,2,3 | 0, 1 | 0, 1 |
| 13 | 24 | 1, 0.5 | FD-CDM2 | $(k_0,l_0)$, $(k_1,l_0)$, $(k_2,l_0)$, $(k_0,l_0 + 1)$, $(k_1,l_0 + 1)$, $(k_2,l_0 + 1)$, $(k_0,l_1)$, $(k_1,l_1)$, $(k_2,l_1)$, $(k_0, l_1 + 1)$, $(k_1,l_1 + 1)$, $(k_2,l_1 + 1)$ | 0,1,2,3,4, 5, 6,7,8,9,1 0,11 | 0, 1 | 0 |
| 14 | 24 | 1, 0.5 | CDM4 (FD2,TD2) | $(k_0,l_0)$, $(k_1,l_0)$, $(k_2,l_0)$, $(k_0,l_1)$, $(k_1,l_1)$, $(k_2, l_1)$ | 0,1,2,3,4, *5* | 0, 1 | 0, 1 |
| 15 | 24 | 1, 0.5 | CDMS (FD2,TD4) | $(k_0,l_0)$, $(k_1,l_0)$, $(k_2,l_0)$ | 0,1,2 | 0, 1 | 0, 1, 2, 3 |
| 16 | 32 | 1, 0.5 | FD-CDM2 | $(k_0,l_0)$, $(k_1,l_0)$, $(k_2,l_0)$, $(k_3,l_0)$, $(k_0,l_0 + 1)$, $(k_1,l_0 + 1)$, $(k_2,l_0 + 1)$, $(k_3,l_0 +1)$, $(k_0,l_1)$, $(k_1,l_1)$, $(k_2,l_1)$, $(k_3,l_1 )$, $(k_0,l_1 + 1)$, $(k_1,l_1 + 1)$, $(k_2,l_1 + 1)$, $(k_3,l_1 + 1)$ | 0,1,2,3, 4,5,6,7, 8,9,10,11 , 12,13,14, 15 | 0, 1 | 0 |
| 17 | 32 | 1, 0.5 | CDM4 (FD2,TD2) | $(k_0,l_0)$, $(k_0,l_0)$, $(k_2,l_0)$, $(k_3,l_0)$, $(k_0,l_1)$, $(k_1, l_1)$, $(k_2,l_0)$, $(k_3,l_1)$ | 0,1,2,3,4, 5,6,7 | 0, 1 | 0, 1 |
| 18 | 32 | 1, 0.5 | CDMS (FD2,TD4) | $(k_0,l_0 )$, $(k_1,l_0)$, $(k_2,l_0)$, $(k_3,l_0)$ | 0,1,2,3 | 0,1 | 0,1, 2, 3 |

According to an embodiment, [Table 7] may indicate a frequency resource density configurable according to the number (X) of CSI-RS ports, a CDM type, frequency and time axis starting positions ($\bar{k}, \bar{l}$) of a CSI-RS component RE pattern, and the number (k') of frequency axis REs and/or the number (l') of time axis REs of a CSI-RS component RE pattern. The CSI-RS component RE pattern described above may be a basic unit for configuring a CSI-RS resource. The CSI-RS component RE pattern may be configured by YZ number of REs through Y=1+max(k') number of REs at the frequency axis and Z=1+max(l') number of REs at the time axis.

For example, if the number of CSI-RS ports is 1, the position of a CSI-RS RE may be designated in a physical resource block (PRB) without restriction on subcarriers, and may be designated by a bitmap having 12 bits.

For example, if the number of CSI-RS ports is {2, 4, 8, 12, 16, 24, 32}, and Y is equal to 2, the position of a CSI-RS RE may be designated at every two subcarriers in a PRB, and may be designated by a bitmap having 6 bits. For example, if the number of CSI-RS ports is 4, and Y is equal to 4, the position of a CSI-RS RE may be designated at every four subcarriers in a PRB, and may be designated by a bitmap having 3 bits. Similarly, the position of a time axis RE may be designated by a bitmap having a total of 14 bits.

[CSI resource configuration]

According to an embodiment, a report setting may refer to one or more IDs of resource settings to have an association relation with the resource settings, and the resource setting(s) having an association relation with the report setting may provide configuration information including information on a reference signal for channel information measurement. For example, in a case where a resource setting(s) having an association relation (or mapping relation) with a report setting is used for channel information measurement, measured channel information may be used for channel information reporting following a reporting method configured in the report setting having the association relation.

According to an embodiment, a report setting may include configuration information related to a CSI reporting method. For example, the base station and the UE may transmit and receive, to and from each other, at least some of signaling information included in [Table 8] to transfer information on a report setting.

【Table 8】

```
-- ASN1START
-- TAG-CSI-REPORTCONFIG-START

CSI-ReportConfig ::=                    SEQUENCE {
      reportConfigId                          CSI-ReportConfigId,
      carrier                                 ServCellIndex
      OPTIONAL,     -- Need S
      resourcesForChannelMeasurement          CSI-ResourceConfigId,
      csi-IM-ResourcesForInterference         CSI-ResourceConfigId
      OPTIONAL,     -- Need R
      nzp-CSI-RS-ResourcesForInterference     CSI-ResourceConfigId
      OPTIONAL,     -- Need R
      reportConfigType                        CHOICE {
            periodic                                SEQUENCE {
                  reportSlotConfig                        CSI-
      ReportPeriodicityAndOffset,
                  pucch-CSI-ResourceList                  SEQUENCE (SIZE
      (1..maxNrofBWPs)) OF PUCCH-CSI-Resource
            },
                  semiPersistentOnPUCCH                   SEQUENCE {
                  reportSlotConfig                        CSI-
      ReportPeriodicityAndOffset,
                  pucch-CSI-ResourceList                  SEQUENCE (SIZE
      (1..maxNrofBWPs)) OF PUCCH-CSI-Resource
            },
                  semiPersistentOnPUSCH                   SEQUENCE {
```

```
                reportSlotConfig                    ENUMERATED {sl5,
    sl10, sl20, sl40, sl80, sl160, sl320},
                reportSlotOffsetList                SEQUENCE (SIZE (1..
    maxNrofUL-Allocations)) OF INTEGER(0..32),
                p0alpha                             P0-PUSCH-
    AlphaSetId
            },
```

```
            aperiodic                           SEQUENCE {
                reportSlotOffsetList            SEQUENCE (SIZE
    (1..maxNrofUL-Allocations)) OF INTEGER(0..32)
            }
        },
        reportQuantity                          CHOICE {
            none                                    NULL,
            cri-RI-PMI-CQI                          NULL,
            cri-RI-i1                               NULL,
            cri-RI-i1-CQI                           SEQUENCE {
                pdsch-BundleSizeForCSI                  ENUMERATED
    {n2, n4}                                            OPTIONAL    --
    Need S
            },
            cri-RI-CQI                              NULL,
            cri-RSRP                                NULL,
            ssb-Index-RSRP                          NULL,
            cri-RI-LI-PMI-CQI                       NULL
        },
        reportFreqConfiguration                 SEQUENCE {
            cqi-FormatIndicator                     ENUMERATED {
    widebandCQI, subbandCQI }                            OPTIONAL,
    -- Need R
            pmi-FormatIndicator                     ENUMERATED {
    widebandPMI, subbandPMI }                           OPTIONAL,
    -- Need R
            csi-ReportingBand                       CHOICE {
                subbands3                               BIT
    STRING(SIZE(3)),
                subbands4                               BIT
    STRING(SIZE(4)),
                subbands5                               BIT
    STRING(SIZE(5)),
                subbands6                               BIT
    STRING(SIZE(6)),
                subbands7                               BIT
    STRING(SIZE(7)),
                subbands8                               BIT
    STRING(SIZE(8)),
                subbands9                               BIT
    STRING(SIZE(9)),
```

```
              subbands10                        BIT
STRING(SIZE(10)),
              subbands11                        BIT
STRING(SIZE(11)),
              subbands12                        BIT
STRING(SIZE(12)),
              subbands13                        BIT
STRING(SIZE(13)),
              subbands14                        BIT
STRING(SIZE(14)),
              subbands15                        BIT
STRING(SIZE(15)),
              subbands16                        BIT
STRING(SIZE(16)),
              subbands17                        BIT
STRING(SIZE(17)),
              subbands18                        BIT
STRING(SIZE(18)),
              ...,
              subbands19-v1530                   BIT
STRING(SIZE(19))
        }    OPTIONAL      -- Need S


    }
OPTIONAL,      -- Need R
timeRestrictionForChannelMeasurements          ENUMERATED
{configured, notConfigured},
timeRestrictionForInterferenceMeasurements     ENUMERATED
{configured, notConfigured},
codebookConfig                                 CodebookConfig
OPTIONAL,      -- Need R
dummy                                          ENUMERATED
{n1, n2}                                        OPTIONAL,    --
Need R
groupBasedBeamReporting                        CHOICE {
        enabled                                  NULL,
        disabled                                 SEQUENCE {
            nrofReportedRS                       ENUMERATED
{n1, n2, n3, n4}                                 OPTIONAL    --
Need S
        }
    },
```

```
cqi-Table                     ENUMERATED {table1, table2, table3,
spare1}                                         OPTIONAL,    -- Need
R
subbandSize                   ENUMERATED {value1, value2},
non-PMI-PortIndication        SEQUENCE (SIZE (1..maxNrofNZP-CSI-RS-
ResourcesPerConfig)) OF PortIndexFor8Ranks OPTIONAL,     -- Need R
...,
```

```
[[
semiPersistentOnPUSCH-v1530          SEQUENCE {
    reportSlotConfig-v1530               ENUMERATED {sl4, sl8, sl16}
}
OPTIONAL      -- Need R
]]
}
```

According to an embodiment, the signaling information CSI-ReportConfig included in [Table 8] may include information on each report setting. The information included in the signaling information CSI-ReportConfig may have the following meanings or include the following information.

- reportConfigId: An index of a report setting
- carrier: An index of a serving cell
- resourcesForChannelMeasurement: An index of a resource setting for a channel measurement having an association relation (or mapping relation) with a report setting
- csi-IM-ResourcesForInterference: An index of a resource setting having a CSI-IM resource for interference measurement having an association relation with a report setting
- nzp-CSI-RS-ResourcesForInterference: An index of a resource setting having a CSI-RS resource for interference measurement having an association relation with a report setting
- reportConfigType: This indicates a time axis transmission configuration and a transmission channel of a channel report, and may have a configuration for aperiodic transmission, semi-persistent physical uplink control channel (PUCCH) transmission, semi-persistent PUSCH transmission, or periodic transmission.
- reportQuantity: This represents a type of reported channel information and may indicate a case where a channel report is not transmitted ("none") and a type ("cri-RI-PMI-CQI", "cri-RI-i1", "cri-RI-i1-CQI", "cri-RI-CQI", "cri-RSRP", "ssb-Index-RSRP", and "cri-RI-LI-PMI-CQI") of channel information in a case where a channel report is transmitted. An element included in the type of channel information indicates channel quality indicator (CQI), precoding matrix indicator (PMI), CSI-RS resource indicator (CRI), SS/PBCH block resource indicator (SSBRI), layer indicator (LI), rank indicator (RI), and/or reference signal received power (L1-RSRP).
- reportFreqConfiguration: This indicates whether reported channel information includes only information on the entire band (wideband) or information on each subband, and if the reported channel information includes information on each subband, this may have configuration information on a subband including the channel information.
- timeRestrictionForChannelMeasurements: Whether there is a time-axis restriction on a reference signal for channel measurement among reference signals referred to by reported channel information
- timeRestrictionForInterferenceMeasurements: Whether there is a time-axis restriction on a reference signal for interference measurement among reference signals referred to by reported channel information
- codebookConfig: Information on a codebook referred to by reported channel information
- groupBasedBeamReporting: Presence or absence of beam grouping for a channel report
- cqi-Table: An index of a CQI table referred to by reported channel information
- subbandSize: An index indicating a subband size of channel information
- non-PMI-PortIndication: Port mapping information referred to when non-PMI channel information is reported

According to an embodiment, in a case where the base station indicates channel information reporting through higher layer signaling or L1 signaling, the UE may perform channel information reporting, based on configuration information included in an indicated report setting.

According to an embodiment, the base station may indicate, to the UE, channel state information (CSI) reporting through higher layer signaling including radio resource control (RRC) signaling or medium access control (MAC)-control element (CE) signaling or L1 signaling (e.g., common DCI, group-common DCI, or UE-specific DCI).

For example, the base station may indicate an aperiodic channel information report to the UE through higher layer signaling or DCI using DCI format 0_1. The base station configures, through higher layer signaling, a parameter for the aperiodic CSI report of the UE or multiple CSI report trigger states including a parameter for the CSI report. For example, the parameter or the CSI report trigger state for a CSI report may include a slot interval between a PDCCH including DCI and a PUSCH including the CSI report or a set including possible slot intervals, a reference signal ID for channel state measurement, and/or the type of channel information.

In an example, when the base station indicates a portion of multiple CSI report trigger states to the UE through DCI, the UE reports channel information according to a CSI report configuration of a report setting configured in an indicated CSI report trigger state. For example, channel information reporting of the UE may be performed through a PUSCH scheduled by DCI format 0_1. For example, time axis resource allocation of a PUSCH including a CSI report of the UE may be performed based on a slot interval from a PDCCH indicated through DCI, and an indication of a starting symbol and/or a symbol length in a slot for time axis resource allocation of the PUSCH. For example, the position of a slot in which a PUSCH including a CSI report of the UE is transmitted may be indicated through a slot interval from a PDCCH indicated through DCI, and a starting symbol and a symbol length in the slot may be indicated through a time domain resource assignment field of the DCI.

For example, the base station may indicate a semi-persistent CSI report transmitted through a PUSCH, to the UE through DCI using DCI format 0_1. The base station may activate or deactivate the semi-persistent CSI report transmitted through the PUSCH, through DCI scrambled by an SP-CSI-RNTI. If the semi-persistent CSI report is activated, the UE may periodically report channel information according to a configured slot interval. If the semi-persistent CSI report is deactivated, the UE may stop periodic channel information reporting having been activated. The base station configures, through higher layer signaling, a parameter for the semi-persistent CSI report of the UE or multiple CSI report trigger states including a parameter for the semi-persistent CSI report.

According to an embodiment, the parameter or the CSI report trigger state for a CSI report may include a slot interval between a PDCCH including DCI indicating the CSI report and a PUSCH including the CSI report or a set including possible slot intervals, a slot interval between a slot in which higher layer signaling indicating the CSI report is activated and a PUSCH including the CSI report, a slot interval period of the CSI report, and/or a type of included channel information. If the base station activates a portion of multiple CSI report trigger states or a portion of multiple report settings for the UE through higher layer signaling or DCI, the UE may report channel information according to a CSI report configuration configured in a report setting included in an indicated CSI report trigger state or an activated report setting. Channel information reporting may be performed through a PUSCH semi-persistently scheduled by DCI format 0_1 scrambled by an SP-CSI-RNTI. Time axis resource allocation of a PUSCH including a CSI report of the UE may be performed through a slot interval period of the CSI report, a slot interval from a slot in which higher layer signaling is activated or a slot interval from a PDCCH indicated through DCI, and/or an indication of a starting symbol and a symbol length in a slot for time axis resource allocation of the PUSCH. For example, the position of a slot in which a PUSCH including a CSI report of the UE is transmitted may be indicated through a slot interval from a PDCCH indicated through DCI, and a starting symbol and symbol length in the slot may be indicated through a time domain resource assignment field of DCI format 0_1 described above.

For example, the base station may indicate a semi-persistent CSI report transmitted through a PUCCH, to the UE through higher layer signaling such as a MAC CE. The base station may activate or deactivate the semi-persistent CSI report transmitted through the PUCCH, through MAC-CE signaling.

In an example, if the semi-persistent CSI report is activated, the UE may periodically report channel information according to a configured slot interval. If the semi-persistent CSI report is deactivated, the UE may stop periodic channel information reporting having been activated. The base station may configure a parameter for the semi-persistent CSI report of the UE through higher layer signaling. The parameter for a CSI report may include a PUCCH resource on which the CSI report is transmitted, a slot interval period of the CSI report, and/or the type of channel information. The UE may transmit the CSI report through a PUCCH. Alternatively, in a case where the PUCCH for the CSI report overlaps with a PUSCH, the UE may transmit the CSI report through the PUSCH.

For example, the position of a PUCCH transmission slot including a CSI report may be indicated through a slot interval period of the CSI report configured through higher layer signaling, and/or a slot interval between a slot in which higher layer signaling is activated and the PUCCH including the CSI report. A starting symbol and a symbol length in the slot may be indicated through a starting symbol and a symbol length to which a PUCCH resource configured through higher layer signaling is allocated.

For example, the base station may indicate a periodic CSI report to the UE through higher layer signaling. The base station may activate or deactivate the periodic CSI report through higher layer signaling including RRC signaling. If the periodic CSI report is activated, the UE may periodically report channel information according to a configured slot interval. If the periodic CSI report is deactivated, the UE may stop periodic channel information reporting having been activated. The base station may configure a report setting including a parameter for the periodic CSI report of the UE through higher layer signaling.

For example, the parameter for a CSI report may include a PUCCH resource configuration for the CSI report, a slot interval between a slot in which higher layer signaling indicating the CSI report is activated and a PUCCH including the CSI report, a slot interval period of the CSI report, a reference signal ID for channel state measurement, and/or a type of channel information.

According to an embodiment, the UE may transmit the CSI report through a PUCCH. Alternatively, in a case where the PUCCH for the CSI report overlaps with a PUSCH, the UE may transmit the CSI report through the PUSCH. For example, the position of a slot in which the PUCCH including the CSI report is transmitted may be indicated through a slot interval period of the CSI report configured through higher layer signaling, and/or a slot interval between a slot in which higher layer signaling is activated and the PUCCH including the CSI report. A starting symbol and a symbol length in the slot may be indicated through a starting symbol and a symbol length to which a PUCCH resource configured through higher layer signaling is allocated.

According to an embodiment, with regard to the aforementioned CSI report configurations (CSI-ReportConfig), each report configuration CSI-ReportConfig may be associated with one downlink (DL) bandwidth part identified by a higher-layer parameter bandwidth part identifier (bwp-id) given by the CSI resource configuration CSI-ResourceConfig associated with the corresponding report configuration.

According to an embodiment, as a time domain reporting operation for each report configuration CSI-ReportConfig, "aperiodic", "semi-persistent", and "periodic" schemes may be supported, and these schemes may be configured for the UE by the base station via a reportConfigType parameter configured from a higher layer.

For example, a semi-persistent CSI report method may support a "PUCCH-based semi-persistent (semi-PersistentOnPUCCH)" method and a "PUSCH-based semi-persistent (semi-PersistentOnPUSCH)" method. For example, in the case of the periodic or semi-persistent CSI report method, a PUCCH or PUSCH resource in which CSI is to be transmitted may be configured for the UE by the base station via higher-layer signaling. A periodicity and a slot offset of the PUCCH or PUSCH resource in which CSI is to be transmitted may be given by a numerology of an uplink (UL) bandwidth part configured for CSI report transmission. For example, in the aperiodic CSI report method, a PUSCH resource in which CSI is to be transmitted may be scheduled for the UE by the base station via L1 signaling (aforementioned DCI format 0_1).

According to an embodiment, with regard to the aforementioned CSI resource configurations (CSI-ResourceConfig), each CSI resource configuration CSI-ReportConfig may include S ($\geq$1) CSI resource sets (e.g., given via a higher-layer parameter of csi-RS-ResourceSetList). For example, a CSI resource set list may include a non-zero power (NZP) CSI-RS resource set and an SS/PBCH block set or may include a CSI-interference measurement (CSI-IM) resource set.

According to an embodiment, each CSI resource configuration may be located in a downlink (DL) bandwidth part identified by higher-layer parameter bwp-id and may be connected to CSI report configuration in the same downlink bandwidth part.

According to an embodiment, a time domain operation of a CSI-RS resource in the CSI resource configuration may be configured to be one of "aperiodic", "periodic", or "semi-persistent" from the higher-layer parameter resourceType. With regard to the periodic or semi-persistent CSI resource configuration, the number of CSI-RS resource sets may be limited to S=1, and the configured periodicity and slot offset may be given based on a numerology of the downlink bandwidth part identified by bwp-id. One or more CSI resource configurations for channel or interference measurement may be configured for the UE by the base station via higher-layer signaling, and may include, for example, the following CSI resources. For example, the CSI resource configurations configure for the UE may include at least one of the following CSI resources

- CSI-IM resource for interference measurement
- NZP CSI-RS resource for interference measurement
- NZP CSI-RS resource for channel measurement

According to an embodiment, with regard to CSI-RS resource sets associated with a resource configuration in which the higher-layer parameter of resourceType is configured to be "aperiodic", "periodic", or "semi-persistent", a trigger state of CSI report configuration having reportType configured to be "aperiodic", and a resource configuration for channel or interference measurement on one or multiple component cells (CCs) may be configured via the higher-layer parameter of CSI-AperiodicTriggerStateList.

According to an embodiment, the UE may use a PUSCH in the case of performing aperiodic CSI reporting, the UE may use a PUCCH in the case of performing periodic CSI reporting, and the UE may use a PUSCH when triggered or activated via DCI in the case of performing semi-persistent CSI reporting, and use a PUCCH after activated via a MAC control element (MAC CE) in the case of performing semi-persistent CSI reporting. As described above, CSI resource configurations may also be configured to be aperiodic, periodic, or semi-persistent. A combination of CSI reporting configurations and CSI resource configurations may be supported based on Table 9 below.

[Table 9]

| CSI-RS Configuration | Periodic CSI Reporting | Semi-Persistent CSI Reporting | Aperiodic CSI Reporting |
|---|---|---|---|
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |

(continued)

| CSI-RS Configuration | Periodic CSI Reporting | Semi-Persistent CSI Reporting | Aperiodic CSI Reporting |
|---|---|---|---|
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

Table 5.2.1.4-1. Triggering/Activation of CSI Reporting for the possible CSI-RS Configurations

According to an embodiment, aperiodic CSI reporting may be triggered by a "CSI request" field in DCI format 0_1 described above, which corresponds to scheduling DCI for a PUSCH. The UE may monitor a PDCCH, may acquire DCI format 0_1, and may acquire scheduling information of a PUSCH and a CSI request indicator. The CSI request indicator may be configured to have NTS (=0, 1, 2, 3, 4, 5, or 6) bits, and may be determined by higher-layer signaling (reportTriggerSize). One trigger state among one or multiple aperiodic CSI report trigger states configurable via higher-layer signaling (CSI-AperiodicTriggerStateList) may be triggered by the CSI request indicator.

- If all bits in the CSI request field are 0, this may indicate that CSI reporting is not requested.
- If the number M of configured CSI trigger states in CSI-AperiodicTriggerStateList is greater than 2NTs-1, M CSI trigger states may be mapped to 2NTs-1 trigger states according to a predefined mapping relation, and one trigger state among the 2NTs-1 trigger states may be indicated by the CSI request field.
- If the number M of configured CSI trigger states in CSI-AperiodicTriggerStateList is less than or equal to 2NTs-1, one of the M CSI trigger states may be indicated by the CSI request field.

According to an embodiment, Table 10 below shows an example of the relationship between a CSI request indicator and a CSI trigger state that may be indicated by a corresponding indicator.

[Table 10]

| CSI request field | CSI trigger state | CSI-ReportConfigId | CSI-ResourceConfigId |
|---|---|---|---|
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

According to an embodiment, the UE may measure a CSI resource in a CSI trigger state triggered via the CSI request field, and generate CSI (including, for example, at least one of the CQI, PMI, CRI, SSBRI, LI, RI, or L1-RSRP) therefrom.

According to an embodiment, the UE may transmit the acquired CSI by using the PUSCH scheduled via corresponding DCI format 0_1. If one bit corresponding to an uplink data indicator (UL-SCH indicator) in DCI format 0_1 indicates "1", the UE may multiplex uplink data (UL-SCH) and the acquired CSI on the PUSCH resource scheduled by DCI format 0_1 so as to transmit the same. If one bit corresponding to the uplink data indicator (UL-SCH indicator) in DCI format 0_1 indicates "0", the UE may map only CSI, without uplink data (UL-SCH), to the PUSCH resource scheduled by DCI format 0_1 so as to transmit the same.

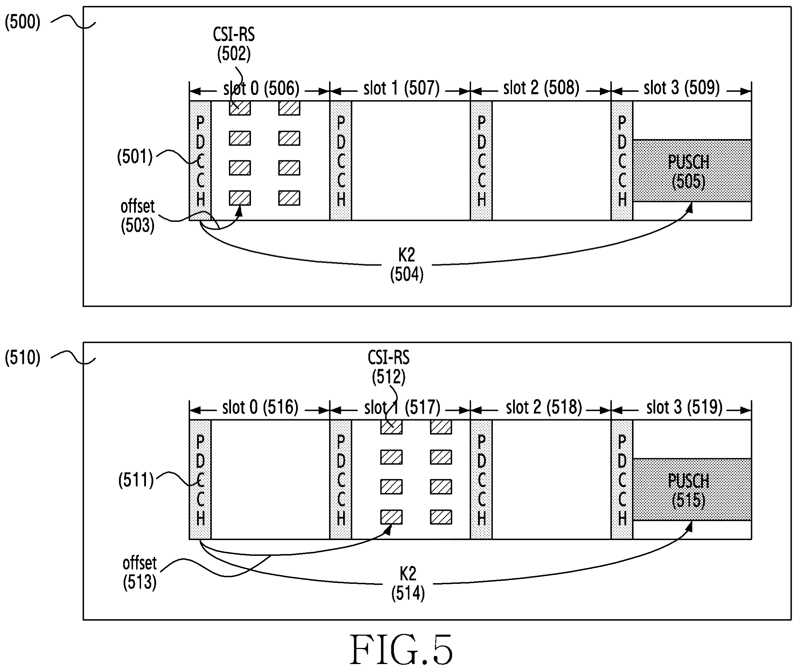

FIG. 5 illustrates an example of an aperiodic CSI reporting method according to an embodiment.

Referring to FIG. 5, in an example 500 of FIG. 5, a UE may acquire DCI format 0_1 by monitoring a PDCCH 501, and may acquire scheduling information and CSI request information for a PUSCH 505, based on the acquired DCI.

According to an embodiment, the UE may acquire, from a received CSI request indicator, resource information of a CSI-RS 502 to be measured. The UE may determine at which time point the UE needs to measure a transmitted CSI-RS resource 502, based on a time point at which DCI format 0_1 is received, and a parameter for an offset (e.g.,

aperiodicTriggeringOffset) in a CSI resource set configuration (e.g., an NZP CSI-RS resource set configuration (NZP-CSI-RS-ResourceSet)). That is, the UE may determine a time point at which the UE measures a CSI-RS resource, based on a time point at which DCI format 0_1 is received and a CSI resource set configuration..

For example, the UE may be configured with an offset value X of the parameter aperiodicTriggeringOffset in the NZP-CSI-RS resource set configuration from the base station via higher-layer signaling For example, the configured offset value X may refer to an offset between a slot in which DCI triggering aperiodic CSI reporting is received, and a slot in which the CSI-RS resource is transmitted. For example, aperiodicTriggeringOffset parameter values and offset values X may have mapping relationships as given in Table 11 below.

[Table 11]

| aperiodicTriggeringOffset | Offset X |
|---|---|
| 0 | 0 slot |
| 1 | 1 slot |
| 2 | 2 slots |
| 3 | 3 slots |
| 4 | 4 slots |
| 5 | 16 slots |
| 6 | 24 slots |

According to an embodiment, the example 500 of FIG. 5 shows an example in which aforementioned offset value X is configured to be 0 (X=0). In this case, the UE may receive the CSI-RS 502 in a slot (e.g., slot 0 506 of FIG. 5) in which DCI format 0_1 triggering aperiodic CSI reporting is received, and may report CSI information, measured based on the received CSI-RS, to the base station via the PUSCH 505.

According to an embodiment, the UE may acquire, from DCI format 0_1, scheduling information (e.g., information corresponding to each field of DCI format 0_1 described above) on the PUSCH 505 for CSI reporting. For example, in DCI format 0_1, the UE may acquire information on a slot in which the PUSCH 705 is to be transmitted, from time domain resource allocation information for the PUSCH 705 described above. For example, in the example 500 of FIG. 5, the UE acquires 3 as a K2 value corresponding to a slot offset value for PDCCH-to-PUSCH, and accordingly, the PUSCH 505 may be transmitted in slot 3 509 spaced 3 slots apart from slot 0 506 corresponding to a time point at which the PDCCH 501 has been received.

In an example 510 of FIG. 5, the UE may acquire DCI format 0_1 by monitoring a PDCCH 511, and may acquire scheduling information and CSI request information for a PUSCH 515 from the acquired DCI (or DCI format 0_1). The UE may acquire, from a received CSI request indicator, resource information of a CSI-RS 512 to be measured. The example 510 of FIG. 5 shows an example in which the offset value X for CSI-RS described above is configured to be 1 (X=1). The UE may receive the CSI-RS 512 in a slot (e.g., slot 0 516 of FIG. 5) in which DCI format 0_1 triggering aperiodic CSI reporting is received, and may report CSI information, measured based on the received CSI-RS, to the base station via the PUSCH 515.

The aperiodic CSI report may include at least one of or both CSI part 1 and CSI part 2, and if the aperiodic CSI report is transmitted via the PUSCH, the aperiodic CSI report may be multiplexed into a transport block. For multiplexing into the transport block, after a CRC is inserted into an input bit of aperiodic CSI, the aperiodic CSI report may pass through encoding and rate matching, mapped to resource elements within the PUSCH in a specific pattern, and then transmitted. The CRC insertion may be omitted depending on a coding method or a length of the input bit. The number of modulation symbols, which is calculated for rate matching during multiplexing of CSI part 1 or CSI part 2 included in the aperiodic CSI report, may be calculated as given in Table 12 below.

[Table 12]

For CSI part 1 transmission on PUSCH not using repetition type B with UL-SCH, the number of coded modulation symbols per layer for CSI part 1 transmission, denoted as $Q'_{\text{CSI-part1}}$, is determined as follows:

$$Q'_{\text{CSI-1}} = \min \left\{ \frac{(O_{\text{CSI-1}} + L_{\text{CSI-1}}) \cdot \beta_{\text{offset}}^{\text{PUSCH}} \cdot \Sigma_{l=0}^{N_{\text{symb,all}}^{\text{PUSCH}}-1} M_{\text{sc}}^{\text{UCI}}(l)}{\Sigma_{r=0}^{C_{UL-SCH}-1} K_r} , \left\lceil \alpha \cdot \Sigma_{l=0}^{N_{\text{symb,all}}^{\text{PUSCH}}-1} M_{\text{sc}}^{\text{UCI}}(l) \right\rceil - \right.$$

$$\left. Q'_{ACK/CG-UCI} \right\}$$

...

For CSI part 1 transmission on an actual repetition of a PUSCH with repetition Type B with UL-SCH, the number of coded modulation symbols per layer for CSI part 1 transmission, denoted as $Q'_{\text{CSI-part1}}$, is determined as follows:

$$Q'_{\text{CSI-1}} = \min \left\{ \left\lceil \frac{(O_{\text{CSI-1}} + L_{\text{CSI-1}}) \cdot \beta_{\text{offset}}^{\text{PUSCH}} \cdot \Sigma_{l=0}^{N_{\text{symb,nominal}}^{\text{PUSCH}}-1} M_{\text{sc,nominal}}^{\text{UCI}}(l)}{\Sigma_{r=0}^{C_{\text{UL-SCH}}-1} K_r} \right\rceil , \ \alpha \right.$$

$$\cdot \sum_{l=0}^{N_{\text{symb,nominal}}^{\text{PUSCH}}-1} M_{\text{sc,nominal}}^{\text{UCI}}(l) \ - Q'_{ACK/CG-UCI} ,$$

$$\left. \sum_{l=0}^{N_{\text{symb,actual}}^{\text{PUSCH}}-1} M_{\text{sc,actual}}^{\text{UCI}}(l) - Q'_{ACK/CG-UCI} \right\}$$

...

For CSI part 1 transmission on PUSCH without UL-SCH, the number of coded modulation symbols per layer for CSI part 1 transmission, denoted as $Q'_{\text{CSI-part1}}$, is determined as follows: if there is CSI part 2 to be transmitted on the PUSCH,

$$Q'_{\text{CSI-1}} = \min \left\{ \left\lceil \frac{\left( O_{\text{CSI-1}} + L_{\text{CSI-1}} \right) \cdot \beta_{\text{offset}}^{\text{PUSCH}}}{R \cdot Q_m} \right\rceil , \ \sum_{l=0}^{N_{\text{symb,all}}^{\text{PUSCH}}-1} M_{\text{sc}}^{\text{UCI}}(l) - Q'_{\text{ACK}} \right\}$$

else

$$Q'_{\text{CSI-1}} = \sum_{l=0}^{N_{\text{symb,all}}^{\text{PUSCH}}-1} M_{\text{sc}}^{\text{UCI}}(l) - Q'_{\text{ACK}}$$

end if

...

For CSI part 2 transmission on PUSCH not using repetition type B with UL-SCH, the number of coded modulation symbols per layer for CSI part 2 transmission, denoted as $Q'_{\text{CSI-part2}}$, is determined as follows:

$$Q'_{\text{CSI-2}} = \min \left\{ \frac{(O_{\text{CSI-2}} + L_{\text{CSI-2}}) \cdot \beta_{\text{offset}}^{\text{PUSCH}} \cdot \Sigma_{l=0}^{N_{\text{symb,all}}^{\text{PUSCH}}-1} M_{\text{sc}}^{\text{UCI}}(l)}{\Sigma_{r=0}^{C_{UL-SCH}-1} K_r} , \left\lceil \alpha \cdot \Sigma_{l=0}^{N_{\text{symb,all}}^{\text{PUSCH}}-1} M_{\text{sc}}^{\text{UCI}}(l) \right\rceil - \right.$$

$$\left. Q'_{ACK/CG-UCI} - Q'_{CSI-1} \right\}$$

For CSI part 2 transmission on an actual repetition of a PUSCH with repetition Type B with UL-SCH, the number of coded modulation symbols per layer for CSI part 2 transmission, denoted as $Q'_{\text{CSI-part2}}$, is determined as follows:

(continued)

$$Q'_{\text{CSI-2}} = \min \left\{ \frac{(O_{\text{CSI-2}} + L_{\text{CSI-2}}) \cdot \beta_{\text{offset}}^{\text{PUSCH}} \cdot \sum_{l=0}^{N_{\text{symb,nominal}}^{\text{PUSCH}}-1} M_{\text{sc,nominal}}^{\text{UCI}}(l)}{\sum_{r=0}^{C_{\text{UL-SCH}}-1} K_r}, \quad \alpha \right.$$

$$\cdot \sum_{l=0}^{N_{\text{symb,nominal}}^{\text{PUSCH}}-1} M_{\text{sc,nominal}}^{\text{UCI}}(l) - Q'_{ACK/CG-UCI} - Q'_{\text{CSI-1}},$$

$$\left. \sum_{l=0}^{N_{\text{symb,actual}}^{\text{PUSCH}}-1} M_{\text{sc,actual}}^{\text{UCI}}(l) - Q'_{ACK/CG-UCI} - Q'_{\text{CSI-1}} \right\}$$

...

For CSI part 2 transmission on PUSCH without UL-SCH, the number of coded modulation symbols per layer for CSI part 2 transmission, denoted as $Q'_{\text{CSI-part2}}$, is determined as follows:

$$Q'_{\text{CSI-2}} = \sum_{l=0}^{N_{\text{symb,all}}^{\prime\text{PUSCH}}-1} M_{\text{sc}}^{\text{UCI}}(l) - Q'_{\text{ACK}} - Q'_{\text{CSI-1}}$$

According to an embodiment, in the case of PUSCH repetition type A and B transmission schemes, the UE may multiplex the aperiodic CSI report only into the first repetition transmission among PUSCH repetition transmissions and then transmit the same. This is because aperiodic CSI report information to be multiplexed is encoded in a polar code scheme, and in this case, each PUSCH repetition needs to have the same frequency and time resource allocation in order to multiplex the aperiodic CSI report information into multiple PUSCH repetitions, and particularly, in the case of PUSCH repetition type B transmission, since each actual repetition may have different OFDM symbol durations, the aperiodic CSI report may be multiplexed only into the first repetition and then transmitted.

According to an embodiment, for PUSCH repetition type B transmission, if the UE receives DCI for activation of semi-persistent CSI reporting or scheduling of aperiodic CSI reporting without scheduling for a transport block, the UE may assume that a value of nominal repetition is 1 even if the number of PUSCH repetition transmissions, which is configured via higher-layer signaling, is greater than 1. In addition, if the aperiodic or semi-persistent CSI reporting is scheduled or activated without scheduling for a transport block, based on PUSCH repetition type B transmission, the UE may expect that a first nominal repetition is identical to the first actual repetition. With regard to the PUSCH transmitted while including semi-persistent CSI, based on repeated PUSCH transmission scheme B, without scheduling for DCI after the semi-persistent CSI reporting has been activated via the DCI, if the first nominal repetition is different from the first actual repetition, transmission for the first nominal repetition may be ignored.

According to an embodiment, when the base station indicates an aperiodic CSI report or a semi-persistent CSI report to the UE through DCI, the UE may determine or identify whether the UE is able to perform valid channel reporting through the indicated CSI report, by considering a channel computation time (CSI computation time) required for the CSI report.

According to an embodiment, with respect to an aperiodic CSI report or a semi-persistent CSI report indicated through DCI, the UE may perform valid CSI reporting (CSI report) starting from an uplink symbol after Z symbols from the end of the last symbol included in a PDCCH including the DCI indicating the CSI report.

For example, Z symbols may be determined based on a numerology of a downlink bandwidth part corresponding to a PDCCH including the DCI indicating the CSI report, a numerology of an uplink bandwidth part corresponding to a PUSCH transmitting the CSI report, and a type and/or a characteristic (report quantity, frequency band granularity, the number of ports of a reference signal, a type of a codebook, etc.) of channel information reported in the CSI report. That is, in order for a CSI report to be determined as a valid CSI report (or a CSI report to be a valid CSI report), uplink transmission of the CSI reporting needs to be performed after a $Z_{\text{ref}}$ symbol with a timing advance (TA). The $Z_{\text{ref}}$ symbol is an uplink symbol on which a cyclic prefix (CP) is started after the time $T_{\text{proc,CSI}} = (Z)(2048 + 144) \cdot \kappa 2^{-\mu} \cdot T_C$ from the moment at which the last symbol of the triggering PDCCH is ended.

According to an embodiment, a detailed value of Z follows the description below, $T_c = 1/(\Delta f_{max} \cdot N_f)$, $\Delta f_{max} = 480 \cdot 10^3$ Hz, $N_f = 4096$, $\kappa = 64$, and $\mu$ indicates a numerology. It may be promised that one of ($\mu_{PDCCH}$, $\mu_{CSI-RS}$, $\mu_{UL}$) causing the greatest $T_{\text{proc,CSI}}$ value is used as $\mu$.

$\mu_{PDCCH}$ may be referred to as a subcarrier spacing used for PDCCH transmission, $\mu_{CSI-RS}$ may be referred to as a subcarrier spacing used for CSI-RS transmission, and $\mu_{UL}$ may be referred to as a subcarrier spacing of an uplink channel used in uplink control information (UCI) transmission for CSI reporting. For example, $\mu$ may be one among ($\mu_{PDCCH}$, $\mu_{UL}$), which causes the greatest $T_{proc,CSI}$ value. The definitions of $\mu_{PDCCH}$ and $\mu_{UL}$ refer to the above description. Hereinafter, for convenience of explanation, satisfying the above condition is called satisfying CSI reporting validity condition 1.

According to an embodiment, if a reference signal for channel measurement for an aperiodic CSI report indicated to the UE through DCI is an aperiodic reference signal, the UE may perform valid CSI reporting (CSI report) starting from an uplink symbol after Z' symbols from the end of the last symbol including the reference signal.

For example, Z' symbols described above may be determined based on a numerology of a downlink bandwidth part corresponding to a PDCCH including the DCI indicating the CSI report, a numerology of a bandwidth corresponding to a reference signal for channel measurement for the CSI report, a numerology of an uplink bandwidth part corresponding to a PUSCH transmitting the CSI report, and a type and/or a characteristic (e.g., report quantity, frequency band granularity, the number of ports of a reference signal, a type of a codebook, etc.) of channel information reported in the CSI report. That is, in order for a CSI report to be determined as a valid CSI report (a CSI report to be a valid CSI report), uplink transmission of the CSI report needs to be performed after a $Z_{ref'}$ symbol with a timing advance (TA).

For example, the $Z_{ref'}$ symbol is an uplink symbol on which a cyclic prefix (CP) is started after the time

$$T'_{\text{proc,CSI}} = (Z')(2048 + 144) \cdot \kappa 2^{-\mu} \cdot T_C$$ from the moment at which the last symbol of an aperiodic CSI-RS or aperiodic CSI-IM triggered by the triggering PDCCH is ended. Here, a detailed value of Z' follows the description below, $T_c = 1/(\Delta f_{max} \cdot N_f)$, $\Delta f_{max} = 480 \cdot 10^3$ Hz, $N_f = 4096$, $\kappa = 64$, and $\mu$ indicates a numerology.

It may be promised that one of ($\mu_{PDCCH}$, $\mu_{CSI-RS}$, $\mu_{UL}$) causing the greatest $T_{proc,CSI}$ value is used as $\mu$. $\mu_{PDCCH}$ may be referred to as a subcarrier spacing used for triggering PDCCH transmission, $\mu_{CSI-RS}$ may be referred to as a subcarrier spacing used for CSI-RS transmission, and $\mu_{UL}$ may be referred to as a subcarrier spacing of an uplink channel used in uplink control information (UCI) transmission for CSI reporting. For example, it may be promised that one of ($\mu_{PDCCH}$, $\mu_{UL}$) causing the greatest $T_{proc,CSI}$ value is used as $\mu$. In this case, the definitions of $\mu_{PDCCH}$ and $\mu_{UL}$ refer to the above description. Hereinafter, for convenience of explanation, satisfying the above condition is called satisfying CSI reporting validity condition 2.

According to an embodiment, in a case where the base station indicates an aperiodic CSI report for an aperiodic reference signal to the UE through DCI, the UE may perform valid CSI reporting (CSI report) starting from a first uplink symbol satisfying both a time point after Z symbols from the end of the last symbol included in a PDCCH including the DCI indicating the CSI report and a time point after Z' symbols from the end of the last symbol including the reference signal. That is, in a case of aperiodic CSI reporting based on an aperiodic reference signal, only when both CSI reporting validity conditions 1 and 2 are satisfied, the UE may determine the aperiodic CSI reporting as a valid CSI report.

According to an embodiment, if a CSI report time point indicated by the base station fails to satisfy a CSI computation time requirement, the UE may determine that the CSI report is not valid and may not consider update of a channel information state for the CSI report.

According to an embodiment, Z and Z' symbols for calculation of a CSI computation time may be based on [Table 13] and [Table 14] below. For example, if channel information reported in a CSI report includes only wideband information, the number of ports of a reference signal is equal to or smaller than 4, there is one reference signal resource, and a codebook type is "typeI-SinglePanel" or the type (reportquantity) of the reported channel information is "cri-RI-CQI," the Z and Z' symbols follow $Z_1$, $Z'_1$ values in [Table 14]. Hereinafter, this is called delay requirement 2.

Furthermore, if a PUSCH including the CSI report does not include a TB or a HARQ-ACK and the CPU occupation of the UE is 0, the Z and Z' symbols follow $Z_1$, $Z'_1$ values in [Table 13] and this is called delay requirement 1. A description of the CPU occupation is given below in detail. In addition, if report quantity is "cri-RSRP" or "ssb-Index-RSRP," the Z and Z' symbols follow $Z_3$, $Z'_3$ values in Table 14. X1, X2, X3, and X4 in [Table 14] indicate UE capability for a beam reporting time, and KB1 and KB2 in [Table 14] mean UE capability for a beam change time. If the channel information does not correspond to a type or characteristic of channel information reported in a CSI report, the Z and Z' symbols follow $Z_2$, $Z'_2$ values in [Table 14].

[Table 13]

| $\mu$ $Z'_1$ | $Z_1$ [symbols] | |
|---|---|---|
| | $Z_1$ | |
| 0 | 10 | 8 |
| 1 | 13 | 11 |
| 2 | 25 | 21 |

(continued)

| μ  $Z_1'$ | $Z_1$ [symbols] | |
|---|---|---|
| | $Z_1$ | |
| 3 | 43 | 36 |

[Table 14]

| μ | $Z_1$ [symbols] | | $Z_2$ [symbols] | | $Z_3$ [symbols] | |
|---|---|---|---|---|---|---|
| | $Z_1$ | $Z_1'$ | $Z_2$ | $Z_2'$ | $Z_3$ | $Z_3'$ |
| 0 | 22 | 16 | 40 | 37 | 22 | $X_1$ |
| 1 | 33 | 30 | 72 | 69 | 33 | $X_2$ |
| 2 | 44 | 42 | 141 | 140 | min(44, $X_3$ + $KB_1$) | $X_3$ |
| 3 | 97 | 85 | 152 | 140 | min(97, $X_4$ + $KB_2$) | $X_4$ |

[CSI reference resource]

According to an embodiment, when the base station indicates an aperiodic/semi-persistent/periodic CSI report to the UE, the base station may configure a CSI reference resource to determine a reference time and frequency for a channel to be reported in a CSI report.

For example, the frequency of a CSI reference resource may be information on a carrier or subband in which CSI is to be measured, which is indicated in a CSI report configuration, and carrier information and subband information may correspond to carrier and reportFreqConfiguration in the higher layer signaling CSI-ReportConfig, respectively.

According to an embodiment, the time of a CSI reference resource may be defined based on a time at which a CSI report is transmitted. For example, if CSI report #X is indicated to be transmitted on uplink slot n' of a carrier and a BWP in which a CSI report is to be transmitted, the time of a CSI reference resource of CSI report #X may be defined to be downlink slot n-nCSI-ref of a carrier and a BWP in which CSI is measured. Downlink slot n is calculated by

$$n = \left\lfloor n' \cdot 2^{\mu_{DL}} \big/ 2^{\mu_{UL}} \right\rfloor$$ when the numerology of a carrier and a BWP in which CSI is measured is called $\mu$DL and

the numerology of a carrier and a BWP in which CSI report #X is transmitted is called $\mu$UL.

According to an embodiment, nCSI-ref, which is a slot interval between downlink slot n and a CSI reference signal, may be determined according to the number of CSI-RS/SSB resources for channel measurement when CSI report #X transmitted in uplink slot n' is a semi-persistent or periodic CSI report. For example, nCSI-ref, which is a slot interval between downlink slot n and a CSI reference signal, may follow $n_{CSI-ref}$ = 4 · $2^{\mu_{DL}}$ if a single CSI-RS/SSB resource is associated with (or is mapped to or corresponds to) the CSI report, and may follow $n_{CSI-ref}$ = 5 · $2^{\mu_{DL}}$ if multiple CSI-RS/SSB resources are associated with the CSI report. If CSI report #X transmitted on uplink slot n' is an aperiodic CSI report, nCSI-ref may be calculated to be $n_{CSI-ref} = \left\lfloor Z' / N_{symb}^{slot} \right\rfloor$ by considering CSI computation time Z'for channel measurement. $N_{symb}^{slot}$ described above is the number of symbols included in one slot, and $N_{symb}^{slot} = 14$ is assumed in NR.

According to an embodiment, in a case where the base station indicates the UE to transmit a CSI report in uplink slot n', through higher layer signaling or DCI, the UE may report CSI by performing channel measurement or interference measurement for a CSI-RS resource, a CSI-IM resource, or an SSB resource, among CSI-RS resources, CSI-IM resources, or SSB resources associated with (or mapped to or corresponding to) the CSI report, which has been transmitted no later than a CSI reference resource slot of the CSI report transmitted in uplink slot n'.

For example, the CSI-RS resource, the CSI-IM resource, or the SSB resource associated with (or mapped to or corresponding to) a CSI report may be a CSI-RS resource, a CSI-IM resource, or an SSB resource included in a resource set configured in a resource setting referred to by a report setting, for the CSI report of the UE, which is configured through higher layer signaling. The CSI-RS resource, the CSI-IM resource, or the SSB resource associated with a CSI report may be a CSI-RS resource, a CSI-IM resource, or an SSB resource referred to by a CSI report trigger state including a parameter for the CSI report. The CSI-RS resource, the CSI-IM resource, or the SSB resource associated with a CSI report may be a CSI-RS resource, a CSI-IM resource, or an SSB resource indicated by an ID of a reference signal (RS) set.

According to an embodiment, a CSI-RS/CSI-IM/SSB occasion may be referred to as a transmission time point of a CSI-RS/CSI-IM/SSB resource(s) determined by a higher layer configuration or a combination of a higher layer configuration and DCI triggering. For example, a slot in which a semi-persistent or periodic CSI-RS resource is transmitted may be determined according to a slot period and a slot offset configured through higher layer signaling, and a transmission symbol(s) in the slot may be determined according to resource mapping information (resourceMapping). As another example, a slot in which an aperiodic CSI-RS resource is transmitted may be determined according to a slot offset from a PDCCH including DCI indicating channel reporting, which is configured through higher layer signaling, and a transmission symbol(s) in the slot may be determined according to resource mapping information (resourceMapping).

According to an embodiment, a CSI-RS occasion may be determined by independently considering a transmission time point of each CSI-RS resource or collectively considering transmission time points of one or more CSI-RS resource(s) included in a resource set, and therefore, the following two interpretations for a CSI-RS occasion according to each resource set configuration are possible.

- Interpretation 1-1: From the start time point of an earliest symbol to the end time point of a latest symbol, one particular resource being transmitted over the earliest and latest symbols among one or more CSI-RS resources included in a resource set(s) configured in a resource setting referenced by a report setting configured for a CSI report.
- Interpretation 1-2: From the start time point of the earliest symbol on which the earliest transmitted CSI-RS resource is transmitted among all CSI-RS resources included in a resource set(s) configured in a resource setting referred to by a report setting configured for a CSI report, to the end time point of the latest symbol on which the latest transmitted CSI-RS resource is transmitted.

Hereinafter, in embodiments of the disclosure, both of the two interpretations for a CSI-RS occasion may be considered and are individually applicable. It is also possible to consider both of the two interpretations for a CSI-IM occasion and an SSB occasion as in the case of a CSI-RS occasion. However, the principle is similar to the above description, and thus the redundant description will be omitted hereinafter.

According to an embodiment, "a CSI-RS/CSI-IM/SSB occasion for CSI report #X transmitted in uplink slot n'" may be referred to as a set of CSI-RS occasions, CSI-IM occasions, and/or SSB occasions, which are not later than a CSI reference resource of CSI report #X transmitted in uplink slot n', among CSI-RS occasions, CSI-IM occasions, and SSB occasions of CSI-RS resources, CSI-IM resources, and SSB resources included in a resource set configured in a resource setting referred to by a report setting configured for CSI report #X.

According to an embodiment, the following two interpretations for "the latest CSI-RS/CSI-IM/SSB occasion among CSI-RS/CSI-IM/SSB occasions for CSI report #X transmitted in uplink slot n'" are possible.

- Interpretation 2-1: A set of occasions including the latest CSI-RS occasion among CSI-RS occasions for CSI report #X transmitted in uplink slot n', the latest CSI-IM occasion among CSI-RS occasions for CSI report #X transmitted in uplink slot n', and the latest SSB occasion among SSB occasions for CSI report #0 transmitted in uplink slot n'
- Interpretation 2-2: The latest occasion among all CSI-RS occasions, CSI-IM occasions, and SSB occasions for CSI report #X transmitted in uplink slot n'

According to an embodiment, the two interpretations for "the latest CSI-RS/CSI-IM/SSB occasion among CSI-RS/CSI-IM/SSB occasions for CSI report #X transmitted on uplink slot n'" are individually applicable. In addition, in consideration of the above two interpretations (interpretation 1-1 and interpretation 1-2) for CSI-RS occasions, CSI-IM occasions, and SSB occasions, four different interpretations (application of interpretation 1-1 and interpretation 2-1, application of interpretation 1-1 and interpretation 2-2, application of interpretation 1-2 and interpretation 2-1, and application of interpretation 1-2 and interpretation 2-2) are all individually applicable with respect to "the latest CSI-RS/CSI-IM/SSB occasion among CSI-RS/CSI-IM/SSB occasions for CSI report #X transmitted in uplink slot n'" in embodiments of the disclosure.

According to an embodiment, the base station may indicate a CSI report, based on the amount of channel information simultaneously computable by the UE for the CSI report. For example, the base station may indicate a CSI report, based on the number of channel information computation units (CSI processing units, CPUs) of the UE. If the number of CSI processing units simultaneously computable by the UE is $N_{CPU}$, the UE may not expect a CSI report indication from the base station, which requires channel information computation larger than $N_{CPU}$, or may not consider update of channel information requiring channel information computation larger than $N_{CPU}$. $N_{CPU}$ may be reported by the UE to the base station through higher layer signaling or may be configured by the base station through higher layer signaling.

According to an embodiment, it may be assumed that a CSI report indicated by the base station to the UE occupies some or all CPUs for channel information computation among $N_{CPU}$ CPUs corresponding to the total number of pieces of channel information simultaneously computable by the UE. If with respect to each CSI report, for example, the number of CSI processing units required for CSI report n (n = 0, 1, ..., N - 1) is $O_{CPU}^{(n)}$, the number of CSI processing units required for a total of N CSI reports may be referred to as $\sum_{n=0}^{N-1} O_{CPU}^{(n)}$ . CSI processing units required for each reportQuantity configured in a CSI report may be configured as in [Table 15] below.

[Table 15]

| |
|---|
| - $O_{CPU}^{(n)} = 0$ : A case where reportQuantity configured in a CSI report is configured to be "none," and trs-Info is configured in a CSI-RS resource set associated with the CSI report <br><br> - $O_{CPU}^{(n)} = 1$ : A case where reportQuantity configured in a CSI report is configured as "none," "cri-RSRP," or "ssb-Index-RSRP," and trs-Info is not configured in a CSI-RS resource set associated with the CSI report <br> - A case where reportQuantity configured in a CSI report is configured as "cri-RI-PMI-CQI," "cri-RI-i1," "cri-RI-i1-CQI," "cri-RI-CQI," or "cri-RI-LI-PMI-CQI" <br><br> >> $O_{CPU}^{(n)} = N_{CPU}$ : A case where an aperiodic CSI report is triggered and is not multiplexed with one of a TB/HARQ-ACK or both. A case where the CSI report includes wideband CSI, corresponds to a maximum of four CSI-RS ports, and corresponds to a single resource having no CRI report, and codebookType corresponds to "typeI-SinglePanel" or reportQuantity corresponds to "cri-RI-CQI" (The case correspond to the above delay requirement 1, and may correspond to a case where the UE quickly computes CSI by using all available CPUs and reports same) <br><br> >> $O_{CPU}^{(n)} = K_s$ : All the remaining cases other than the above case. $K_s$ indicates the number of CSI-RS resources in a CSI-RS resource set for channel measurement. |

According to an embodiment, when the number of CSI processings required by the UE for multiple CSI reports at a particular time point is greater than $N_{CPU}$ that is the number of CSI processing units simultaneously computable by the UE, the UE may not consider or perform an update of channel information for some CSI reports. A CSI report, among multiple indicated CSI reports, for which an update of channel information is not considered or performed is determined by considering at least a priority of reported channel information and/or a time for which channel information computation required for the CSI report occupies CPUs. For example, an update of channel information may not be considered or performed for a CSI report, for which a CPU occupation time of channel information computation required for the CSI report starts at the latest, and an update of channel information for a CSI report having a low channel information priority may not be considered or performed preferentially.

A priority of channel information may be determined by referring to the following.

[Table 16]

| |
|---|
| CSI priority value $Pri_{iCSI}(y, k, c, s) = 2 \cdot N_{cells} \cdot M_s \cdot y + N_{cells} \cdot M_s \cdot k + M_s \cdot c + s,$ <br> - *y* is equal to 0 (y=0) in a case of an aperiodic CSI report transmitted through a PUSCH, y is equal to 1 (y=1) in a case of a semi-persistent CSI report transmitted through a PUSCH, y is equal to 2 (y=2) in a case of a semi-persistent CSI report transmitted through a PUCCH, and y is equal to 3 (y=3) in a case of a periodic CSI report transmitted through a PUCCH; <br> - *k is* equal to 0 (k=0) when a CSI report includes L1-RSRP, and *k* is equal to 1 (*k*=1) when a CSI report does not include L1-RSRP; <br> - c: A serving cell index, and $N_{cells}$: A maximum number *(maxNrofServingCells)* of serving cells configured through higher layer signaling; and <br> - s: A CSI report configuration index *(reportConfigID),* and $M_s$: A maximum number *(maxNrofCSI-ReportConfigurations)* of CSI report configurations configured through higher layer signaling. |

According to an embodiment, a CSI priority for a CSI report may be determined based on the priority value PriiCSI(y,k,c,s) in [Table 16]. Referring to [Table 16], the CSI priority value may be determined based on a type of channel information included in a CSI report, a time axis reporting characteristic (aperiodic, semi-persistent, or periodic) of the CSI report, a channel (PUSCH or PUCCH) through which the CSI report is transmitted, a serving cell index, and/or a CSI report configuration index. With respect to the CSI priority for a CSI report, the CSI priority for a CSI report with a smaller priority value may be determined to be high through a comparison of the priority value of PriiCSI(y,k,c,s).

According to an embodiment, when a time for which channel information computation required for a CSI report indicated by the base station to the UE occupies CPUs is a CPU occupation time, the CPU occupation time may be determined based on a type (reportquantity) of channel information included in the CSI report, a time axis characteristic (aperiodic, semi-persistent, or periodic) of the CSI report, a slot or symbol occupied by higher layer signaling or DCI indicating the CSI report, and/or some or all of symbols or slots occupied by a reference signal for channel state measurement.

[PDCCH: regarding DCI]

Hereinafter, downlink control information (DCI) in a 5G communication system will be described in detail.

According to an embodiment, in a 5G system, scheduling information on uplink data (or physical uplink shared channel (PUSCH))or downlink data (or physical downlink shared channel (PDSCH)) may be included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH)after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted on the PDCCH, the UE may identify the CRC by using the allocated RNTI, and if the CRC identification result is right, the UE may identify or know that the corresponding message has been transmitted to the UE.

For example, DCI for scheduling a PDSCH on system information (SI) may be scrambled by an SI-RNTI. DCI for scheduling a PDSCH on a random access response (RAR) message may be scrambled by an RA-RNTI. DCI for scheduling a PDSCH on a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

According to an embodiment, DCI format 0_0 may be used as fallback DCI for scheduling a PUSCH, and in this case, the CRC may be scrambled by a C-RNTI. DCI format 0_0 in which the CRC is scrambled by a C-RNTI may include at least some of the following pieces of information given in Table 17 below, for example.

[Table 17]

| |
|---|
| - Identifier for DCI formats - [1] bit |
| - Frequency domain resource assignment $-\lceil \log_2(N_{\mathrm{RB}}^{\mathrm{UL,BWP}}(N_{\mathrm{RB}}^{\mathrm{UL,BWP}}+1)/2) \rceil$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |
| - Uplink/ supplementary uplink (UL/SUL) indicator - 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include at least some of the following pieces of information given in Table 18 below, for example.

[Table 18]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
|        * For resource allocation type 0, $\lceil N_{\mathrm{RB}}^{\mathrm{UL,BWP}}/P \rceil$ bits |

(continued)

| |
|---|
| * For resource allocation type 1, $\lceil \log_2(N_{RB}^{UL,BWP}(N_{RB}^{UL,BWP}+1)/2) \rceil$ bits |
| - Time domain resource assignment -1, 2, 3, or 4 bits |
| - Virtual resource block (VRB)-to-physical resource block (PRB) mapping - 0 or 1 bit, only for resource allocation type 1. |
|      * 0 bit if only resource allocation type 0 is configured; |
|      * 1 bit otherwise. |
| - Frequency hopping flag - 0 or 1 bit, only for resource allocation type 1. |
|      * 0 bit if only resource allocation type 0 is configured; |
|      * 1 bit otherwise. |
| - Modulation and coding scheme - 5 bits |
| - New data indicator - 1 bit |
| - Redundancy version - 2 bits |
| - HARQ process number - 4 bits |
| - 1st downlink assignment index- 1 or 2 bits |
|      * 1 bit for semi-static HARQ-ACK codebook; |
|      * 2 bits for dynamic HARQ-ACK codebook with single HARQ-ACK codebook. |
| - 2nd downlink assignment index - 0 or 2 bits |
|      * 2 bits for dynamic HARQ-ACK codebook with two HARQ-ACK sub-codebooks; |
|      * 0 bit otherwise. |
| - TPC command for scheduled PUSCH - 2 bits |
| - SRS resource indicator - $\left\lceil \log_2\left(\sum_{k=1}^{L_{max}}\binom{N_{SRS}}{k}\right)\right\rceil$ or $\lceil \log_2(N_{SRS}) \rceil$ bits |
|      * $\left\lceil \log_2\left(\sum_{k=1}^{L_{max}}\binom{N_{SRS}}{k}\right)\right\rceil$ bits for non-codebook based PUSCH transmission; |
|      * $\lceil \log_2(N_{SRS}) \rceil$ bits for codebook based PUSCH transmission. |
| - Precoding information and number of layers - up to 6 bits |
| - Antenna ports - up to 5 bits |
| - SRS request - 2 bits |
| - Channel state information (CSI) request - 0, 1, 2, 3, 4, 5, or 6 bits |
| - Code block group (CBG) transmission information - 0, 2, 4, 6, or 8 bits |
| - Phase tracking reference signal (PTRS)-demodulation reference signal (DDMRS) association - 0 or 2 bits. |
| - beta_offset indicator - 0 or 2 bits |
| - DMRS sequence initialization - 0 or 1 bit |

DCI format 1_0 may be used as fallback DCI for scheduling a PDSCH, and in this case, the CRC may be scrambled by a C-RNTI. DCI format 1_0 in which the CRC is scrambled by a C-RNTI may include at least some of the following pieces of information given in Table 19 below, for example.

[Table 19]

| |
|---|
| - Identifier for DCI formats - [1] bit |
| - Frequency domain resource assignment - $\lceil \log_2(N_{RB}^{DL,BWP}(N_{RB}^{DL,BWP}+1)/2) \rceil$ bits |
| - Time domain resource assignment - X bits |
| - VRB-to-PRB mapping - 1 bit. |
| - Modulation and coding scheme - 5 bits |
| - New data indicator - 1 bit |
| - Redundancy version - 2 bits |

(continued)

> - HARQ process number - 4 bits
> - Downlink assignment index - 2 bits
> - TPC command for scheduled PUCCH - [2] bits
> - Physical uplink control channel (PUCCH) resource indicator - 3 bits
> - PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include at least some of the following pieces of information given in Table 20 below, for example.

[Table 20]

> - Carrier indicator - 0 or 3 bits
> - Identifier for DCI formats - [1] bits
> - Bandwidth part indicator - 0, 1 or 2 bits
> - Frequency domain resource assignment
>
> $\quad$ * For resource allocation type 0, $\left\lceil N_{RB}^{DL, BWP} / P \right\rceil$ bits
>
> $\quad$ * For resource allocation type 1,
>
> $\left\lceil \log_2 (N_{RB}^{DL, BWP} (N_{RB}^{DL, BWP} + 1) / 2) \right\rceil$ bits
>
> - Time domain resource assignment -1, 2, 3, or 4 bits
> - VRB-to-PRB mapping - 0 or 1 bit, only for resource allocation type 1.
> $\quad$ * 0 bit if only resource allocation type 0 is configured;
> $\quad$ * 1 bit otherwise.
> - Physical resource block (PRB) bundling size indicator - 0 or 1 bit
> - Rate matching indicator - 0, 1, or 2 bits
> - Zero power (ZP) channel state information (CSI)-reference signal (RS) trigger - 0, 1, or 2 bits

> For transport block 1:
> - Modulation and coding scheme - 5 bits
> - New data indicator - 1 bit
> - Redundancy version - 2 bits
> For transport block 2:
> - Modulation and coding scheme - 5 bits
> - New data indicator - 1 bit
> - Redundancy version - 2 bits
> - HARQ process number - 4 bits
> - Downlink assignment index - 0 or 2 or 4 bits
> - TPC command for scheduled PUCCH - 2 bits
> - PUCCH resource indicator - 3 bits
> - PDSCH-to-HARQ _feedback timing indicator - 3 bits
> - Antenna ports - 4, 5 or 6 bits
> - Transmission configuration indication - 0 or 3 bits
> - SRS request - 2 bits
> - CBG transmission information - 0, 2, 4, 6, or 8 bits
> - CBG flushing out information - 0 or 1 bit
> - DMRS sequence initialization - 1 bit

Reference will be made to drawings illustrating a downlink control channel in a 5G communication system.

FIG. 5 illustrates an example of an aperiodic CSI reporting method.

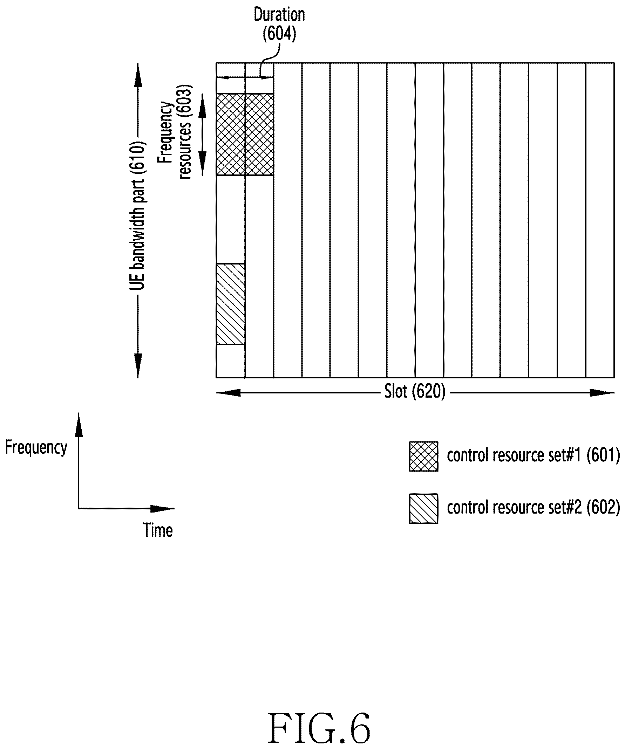

FIG. 6 illustrates an example of a control resource set (CORESET) used to transmit a downlink control channel in a 5G wireless communication system. in which a UE bandwidth part 610 is configured along the frequency domain, and two control resource sets (control resource set #1 601 and control resource set #2 602 are configured within one slot 620 along the time domain. The control resource sets 601 and 602 may be configured in a specific frequency resource 603 within the entire UE bandwidth part 610 along the frequency domain. One or multiple OFDM symbols may be configured along the time domain, and this may be defined as a control resource set duration 604. Referring to FIG. 6, control resource set #1 601 is configured to have a control resource set duration corresponding to two symbols, and control resource set #2 602 is configured to have a control resource set duration corresponding to one symbol.

According to an embodiment, a control resource set in 5G described above may be configured for a UE by a base station through higher layer signaling (for example, system information, master information block (MIB), or radio resource control (RRC) signaling). The description that a control resource set is configured for a UE means that information such as a control resource set identity, the control resource set's frequency location, and/or the control resource set's symbol duration is provided. For example, configuration information on the control resource set may include at least some of the following pieces of information given in Table 21.

[Table 21]

```
ControlResourceSet ::=                    SEQUENCE {
    -- Corresponds to L1 parameter 'CORESET-ID'

    controlResourceSetId              ControlResourceSetId,
    (control resource set identity))
    frequencyDomainResources           BIT STRING (SIZE (45)),
    (frequency domain resource assignment information)
    duration                          INTEGER (1..maxCoReSetDuration),
    (time domain resource assignment information )
    cce-REG-MappingType                       CHOICE {
    (CCE-to-REG mapping scheme)
    interleaved                       SEQUENCE {

        reg-BundleSize                     ENUMERATED {n2, n3, n6},
        (REG bundle size)

        precoderGranularity                ENUMERATED
    {sameAsREG-bundle, allContiguousRBs},

        interleaverSize                    ENUMERATED {n2, n3, n6}
        (interleaver size)

        shiftIndex             INTEGER(0..maxNrofPhysicalResourceBlocks-
    1)  OPTIONAL
        (interleaver shift)
        },
    nonInterleaved                    NULL
    },
    tci-StatesPDCCH                   SEQUENCE(SIZE
    (1..maxNrofTCI-StatesPDCCH)) OF TCI-StateId           OPTIONAL,
    (QCL configuration information)
    tci-PresentInDCI                  ENUMERATED {enabled}
            OPTIONAL,      -- Need S
    }
```

In Table 21, tci-StatesPDCCH (simply referred to as transmission configuration indication (TCI) state) configuration information may include information of one or multiple SS/PBCH block indexes and/or channel state information reference signal (CSI-RS) indexes, which are quasi-co-located (QCLed) with a DMRS transmitted in a corresponding control resource set.

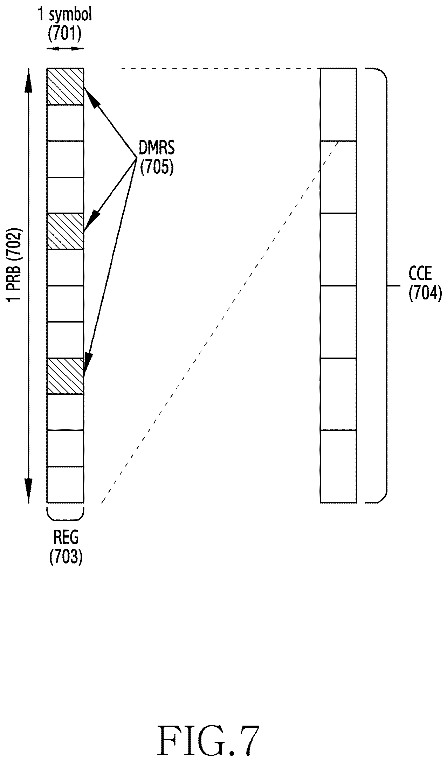

FIG. 7 illustrates an example of a basic unit of time and frequency resources constituting a downlink control channel available in a 5G system.

Referring to FIG. 7, the basic unit of time and frequency resources constituting a control channel maybe referred to as a resource element group (REG) 703. The REG 703 may be defined by one OFDM symbol 701 along the time axis and one physical resource block (PRB) 702 (i.e., 12 subcarriers) along the frequency axis. The base station may configure a downlink control channel allocation unit by concatenating the REGs 703.

According to an embodiment, provided that the basic unit of downlink control channel allocation in 5G is a control channel element (CCE) 704, one CCE 704 may include multiple REGs 703. To describe the REG 703 illustrated in FIG. 7, for example, the REG 703 may include 12 REs, and if one CCE 704 includes six REGs 703, one CCE 704 may then include 72 REs.

According to an embodiment, a downlink control resource set, once configured, may include multiple CCEs 704, and a specific downlink control channel may be mapped to one or multiple CCEs 704 and then transmitted according to the aggregation level (AL) in the control resource set. The CCEs 704 in the control resource set are distinguished by numbers, and the numbers of CCEs 704 may be allocated or indicated according to a logical mapping scheme.

The basic unit of the downlink control channel illustrated in FIG. 7, that is, the REG 703 may include both REs to which DCI is mapped, and an area to which a reference signal (DMRS 705) for decoding the same is mapped. As in FIG. 7, three DRMSs 705 may be transmitted inside one REG 703.

According to an embodiment, the number of CCEs necessary to transmit a PDCCH may be 1, 2, 4, 8, or 16 according to the aggregation level (AL), and different number of CCEs may be used to implement link adaption of the downlink control channel. For example, when AL=L, one downlink control channel may be transmitted through L CCEs. The UE needs to detect a signal while being no information on the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

According to an embodiment, search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. For example, in the case of a common search space, a group of UEs or all UEs need to receive the PDCCH, and the common search space may thus be defined as a predetermined set of CCEs. Scheduling allocation information on a UE-specific PDSCH or PUSCH may be received by searching the UE-specific search space of the PDCCH. The UE-specific search space may be defined UE-specifically as a function of various system parameters and the identity of the UE.

According to an embodiment, in 5G, a parameter for a search space regarding a PDCCH may be configured for the UE by the base station through upper layer signaling (for example, SIB, MIB, RRC signaling). For example, the base station may configure, for the UE, the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, and/or a control resource set index for monitoring the search space, etc. For example, the information configured for the UE may include at least some of the following pieces of information given in Table 22 below.

[Table 22]

```
SearchSpace ::=                        SEQUENCE {
-- Identity of the search space. SearchSpaceId = 0 identifies the SearchSpace configured via
    PBCH (MIB) or ServingCellConfigCommon.
searchSpaceId                     SearchSpaceId,
    (search space identity)
controlResourceSetId              ControlResourceSetId,
    (control resource set identity)
monitoringSlotPeriodicityAndOffset    CHOICE {
```

```
       (monitoring slot level periodicity)
       sl1                                   NULL,
       sl2                                   INTEGER (0..1),
       sl4                                   INTEGER (0..3),
       sl5                                   INTEGER (0..4),
       sl8                                   INTEGER (0..7),
       sl10                                  INTEGER (0..9),
       sl16                                  INTEGER (0..15),
       sl20                                  INTEGER (0..19)
   }
       OPTIONAL,
       duration(monitoring duration)              INTEGER (2..2559)
   monitoringSymbolsWithinSlot                BIT STRING (SIZE (14))
       OPTIONAL,
       (monitoring symbols within slot)
   nrofCandidates                            SEQUENCE {
       (number of PDCCH candidates for each aggregation level)
       aggregationLevel1                     ENUMERATED {n0, n1, n2, n3, n4, n5, n6,
       n8},
       aggregationLevel2                     ENUMERATED {n0, n1, n2, n3, n4, n5, n6,
       n8},
       aggregationLevel4                     ENUMERATED {n0, n1, n2, n3, n4, n5, n6,
       n8},
       aggregationLevel8                     ENUMERATED {n0, n1, n2, n3, n4, n5, n6,
       n8},
       aggregationLevel16                    ENUMERATED {n0, n1, n2, n3, n4, n5, n6,
       n8}
   },

   searchSpaceType                           CHOICE {
   (search space type)
       -- Configures this search space as common search space (CSS) and DCI formats to
       monitor.
       common                                SEQUENCE {
   (common search space)
           }
       ue-Specific                           SEQUENCE {
```

```
(UE-specific search space)
    -- Indicates whether the UE monitors in this USS for DCI formats 0-0 and 1-0 or for
    formats 0-1 and 1-1.
    formats                                ENUMERATED  {formats0-0-And-1-
    0, formats0-1-And-1-1},
        ...
    }
```

According to an embodiment, based on configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to an embodiment, one or multiple search space sets may exist in a common search space or a UE-specific search space according to configuration information. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

According to an embodiment, combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command on a PUSCH
Transmit power control for PUCCH RNTI (TPC-PUCCH-RNTI): used to indicate a power control command on a PUCCH
Transmit power control for SRS RNTI (TPC-SRS-RNTI): used to indicate a power control command on an SRS
The DCI formats enumerated above may follow the definitions given in Table 23 below.

Table 23]

| DCI format | Usage |
|---|---|
| 0_0 | Scheduling of PUSCH in one cell |
| 0_1 | Scheduling of PUSCH in one cell |

(continued)

| DCI format | Usage |
|---|---|
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PU SCH |
| 2_3 | Transmission of a group of TPC commands for SRS transmissions by one or more UEs |

In 5G, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- $L$: aggregation level
- $n_{CI}$: carrier index
- $N_{CCE,p}$: total number of CCEs existing in control resource set $p$
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} - 1$ : PDCCH candidate index at aggregation level L
-

$$i = 0, \ldots, L - 1$$

-

$$Y_{p,n_{s,f}^{\mu}} = \left( A_p \cdot Y_{p,n_{s,f}^{\mu}-1} \right) \bmod D \quad ,$$

$Y_{p,-1} = n_{RNTI} \neq 0$ , $A_p = 39827$ *for pmod*3 = 0 , $A_p = 39829$ *for pmod*3 = 1 , $A_p = 39839$ *for pmod*3 = 2, $D = 65537$
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

According to an embodiment, in 5G, multiple search space sets may be configured by different parameters (for example, parameters in Table 22), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

[Regarding UE capability report]

In LTE and NR, a UE may perform a procedure in which, while being connected to a serving base station, the UE may report capability supported by the UE to the corresponding base station. In the following description, this procedure may be referred to as a UE capability report.

According to an embodiment, the base station may transfer a UE capability enquiry message to the UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times.

According to an embodiment, in next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

According to an embodiment, upon receiving the UE capability report request from the base station, the UE may configure UE capability according to band information and RAT type requested by the base station. The method in which the UE configures UE capability in an NR system is summarized below.

1. If the UE receives a list regarding LTE and/or NR bands from the base station at a UE capability request, the UE constructs band combinations (BCs) regarding EN-DC and NR standalone(SA). For example, the UE may configure a candidate list of BCs regarding EN-DC and NR SA, based on bands received from the base station at a request through FreqBandList. In addition, bands may have priority in the order described in FreqBandList.

2. If the base station has set "eutra-nr-only" flag or "eutra" flag and requested a UE capability report, the UE may remove everything related to NR SA BCs from the configured BC candidate list. Such an operation may occur only if an LTE base station (eNB) requests "eutra" capability.

3. The UE may then remove fallback BCs from the BC candidate list configured in the above step. As used herein, a fallback BC may refer to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".

4. The UE may select BCs appropriate for the requested RAT type from the final "candidate BC list" and select BCs to report. In this step, the UE may configure supportedBandCombinationList in a determined order. That is, the UE configures BCs and UE capability to report according to a preconfigured rat-Type order. (nr - > eutra-nr -> eutra). In addition, the UE may configure featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of containers of UE-NR-Capabilities and UE-MRDC-Capabilities.

5. If the requested RAT type is eutra-nr and has an influence, featureSetCombinations may be included on both containers of UE-MRDC-Capabilities and UE-NR-Capabilities. However, the feature set of NR may be included only in UE-NR-Capabilities.

According to an embodiment, after the UE capability is configured, the UE may transfer a UE capability information message including the UE capability to the base station. The base station may perform scheduling and transmission/reception management appropriate for the UE, based on the UE capability received from the UE.

[Regarding NC-JT]

According to an embodiment, non-coherent joint transmission (NC-JT) may be used for the UE to receive PDSCHs from multiple TRPs.

According to an embodiment, a 5G wireless communication system may support all of the service having very short transmission latency and the service requiring a high connectivity density as well as the service requiring a high transmission rate unlike the conventional system. In a wireless communication network including a plurality of cells, transmission and reception points (TRPs), or beams, coordinated transmission between respective cells, TRPs, and/or beams may satisfy various service requirements by increasing the strength of a signal received by the UE or efficiently controlling interference between the cells, TRPs, and/or beams.

According to an embodiment, joint transmission (JT) is a representative transmission technology for the coordinated communication and may increase the strength of a signal received by the UE or throughput by transmitting signals to one UE through different cells, TRPs, and/or beams. Here, a channel between respective cells, TRPs, and/or beam and the UE may have different characteristics, and particularly, non-coherent joint transmission (NC-JT) supporting non-coherent precoding between respective cells, TRPs, and/or beams may need individual precoding, MCS, resource allocation, and TCI indication according to the channel characteristics for each link between respective cells, TRPs, and/or beam and the UE.

The above-described NC-JT transmission may be applied to at least one of a downlink data channel (PDSCH), a downlink control channel (PDCCH), an uplink data channel (PUSCH), and an uplink control channel (PUCCH). During PDSCH transmission, transmission information such as precoding, MCS, resource allocation, and TCI may be indicated through DL DCI. For the NC-JT transmission, the above transmission information should be independently indicated for each cell, TRP, and/or beam. This is a significant factor that increases payload required for DL DCI transmission, which may have a bad influence on reception performance of a PDCCH for transmitting the DCI. Accordingly, in order to support JT of the PDSCH, carefully designing a tradeoff between an amount of DCI information and reception performance of control information is required.

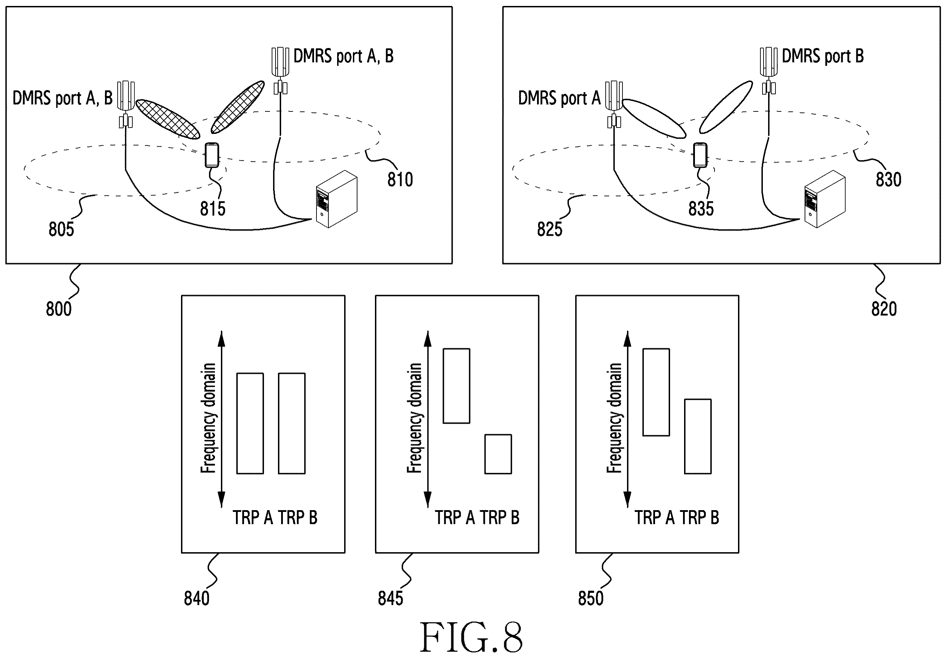

FIG. 8 illustrates an example of an antenna port configuration and resource allocation for PDSCH transmission using cooperative communication in a wireless communication system according to an embodiment.

Referring to FIG. 8, an example for PDSCH transmission is described for each scheme of joint transmission (JT), and examples for allocating radio resources for each TRP are illustrated.

Referring to FIG. 8, an example 800 of coherent joint transmission (C-JT) supporting coherent precoding between respective cells, TRPs, and/or beams is illustrated.

According to an embodiment, in the case of C-JT, TRP A 805 and TRP B 810 may transmit single data (PDSCH) to a UE 815, and multiple TRPs may perform joint precoding. This may indicate that DMRSs are transmitted through identical DMRS ports in order for TRP A 805 and TRP B 810 to transmit the same PDSCH. For example, TRP A 805 and TRP B 810 may transmit DRMSs to the UE through DMRS port A and DMRS port B, respectively. In this case, the UE may receive one piece of DCI information for receiving one PDSCH demodulated based on the DMRSs transmitted through the DMRS port A and the DMRS port B.

FIG. 8 illustrates an example 820 of non-coherent joint transmission (NC-JT) supporting non-coherent precoding between respective cells, TRPs, or/and beams for PDSCH transmission.

According to an embodiment, in the case of NC-JT, the PDSCH may be transmitted to a UE 835 per cell, per TPR, and/or per beam, and individual precoding may be applied to each PDSCH. Respective cells, TRPs, and/or beams may transmit different PDSCHs or different PDSCH layers to the UE, thereby improving throughput compared to single cell, TRP, and/or beam transmission. Furthermore, the respective cells, TRPs, and/or beams may repeatedly transmit the same PDSCH to the UE, thereby improving reliability as compared to single cell, TRP, and/or beam transmission. For the sake of descriptive convenience, a cell, a TRP, and/or a beam may be collectively referred to as a TRP.

In this case, various radio resource allocations may be considered, such as a case 840 where frequency and time resources used in multiple TRPs for PDSCH transmission are all identical, a case 845 where frequency and time resources used in multiple TRPs do not overlap at all, and a case 850 where some of frequency and time resources used in multiple TRPs overlap.

In order to support NC-JT, DCI of various types, structures, and relations may be considered to assign multiple PDSCHs simultaneously to a single UE.

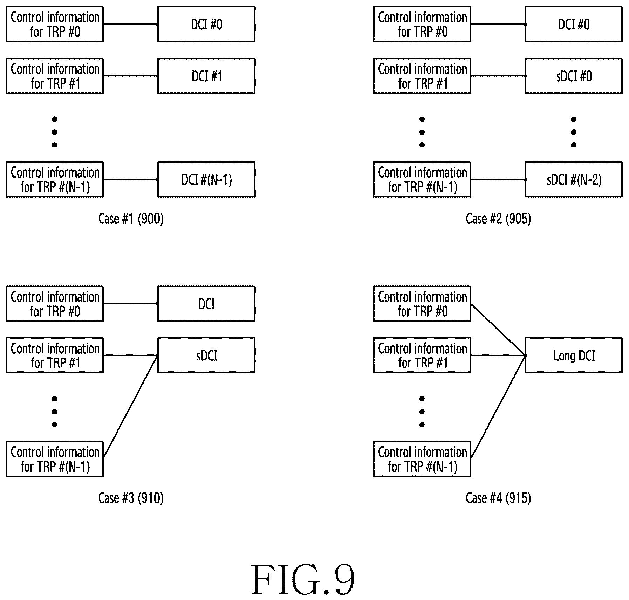

FIG. 9 illustrates an example of a downlink control information (DCI) configuration for NC-JT in which respective TRPs transmit different PDSCHs or different PDSCH layers to a UE in a wireless communication system according to an embodiment.

Referring to FIG. 9, case #1 900 according to an embodiment is an example in which, in a situation where different N-1 PDSCHs are transmitted from N-1 additional TRPs (TRP#1 to TRP#N-1) in addition to a serving TRP (TRP#0) used during single PDSCH transmission, control information for PDSCHs transmitted in the additional N-1 TRPs is transmitted independently of control information for a PDSCH transmitted in the serving TRP. That is, the UE may acquire control information for PDSCHs transmitted from different TRPs (TRP #0 to TRP #(N-1)) through independent DCIs (DC1 #0 to DCI #(N-1)). Formats between the independent pieces of DCI may be the same or different from each other, and payloads between the pieces of DCI may also be the same or different from each other. In case #1 described above, a degree of freedom of PDSCH control or allocation may be completely guaranteed, but when respective pieces of the DCI are transmitted by different TRPs, a difference between DCI coverages may be generated and reception performance may deteriorate.

According to an embodiment, case #2 905 is an example in which pieces of control information (DCI) for PDSCHs of (N-1) additional TRPs are transmitted and each piece of the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, DCI#0, which is control information for the PDSCH transmitted from the serving TRP (TRP#0), includes all information elements of DCI format 1_0, DCI format 1_1, and DCI format 1_2, but shortened DCI (hereinafter, sDCI) (sDCI#0 to sDCI#N-2), which is control information for the PDSCHs transmitted from the cooperative TRPs (TRP#1 to TRP#N-1), may include only some of the information elements of DCI format 1_0, DCI format 1_1, and DCI format 1_2. Accordingly, in the case of sDCI for transmission of the control information for the PDSCHs transmitted from the cooperative TRPs, a payload is small compared to normal DCI (nDCI) for transmission of the control information related to the PDSCH transmitted from the serving TRP, so that reserved bits may be included in comparison with nDCI.

According to an embodiment, in the case of sDCI for transmission of the control information for the PDSCHs transmitted from the cooperative TRPs, a payload is small compared to normal DCI (nDCI) for transmission of the control information related to the PDSCH transmitted from the serving TRP, so that reserved bits may be included in comparison with nDCI.

According to an embodiment, case #3 910 illustrates an example in which one piece of control information for PDSCHs of (N-1) additional TRPs is transmitted and the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, DCI #0 that is control information for the PDSCH transmitted from the serving TRP (TRP #0) may include all information elements of DCI format 1_0, DCI format 1_1, and DCI format 1_2. In the case of control information for PDSCHs transmitted from cooperative TRPs (TRP #1 to TRP #(N-1)), only some of the information elements of DCI format 1_0, DCI format 1_1, and DCI format 1_2 may be gathered in one "secondary" DCI (sDCI) and transmitted. For example, the sDCI may include at least one piece of HARQ-related information, such as frequency domain resource assignment, time domain resource assignment, and MCS of cooperative TRPs. In addition, information that is not included in the sDCI such as a bandwidth part (BWP) indicator and a carrier indicator may follow the DCI (DCI #0, normal DCI, or nDCI) of the serving TRP.

According to an embodiment, in case #3 910, each PDSCH control or allocation freedom may be restricted according to content of the information element included in the sDCI, but sDCI reception performance may be adjustable, and complexity of DCI blind decoding of the UE may be reduced compared to case #1 900 or case #2 905.

According to an embodiment, case #4 915 illustrates an example in which, in a situation where N-1 different PDSCHs are transmitted from N-1 additional TRPs (TRP#1 to TRP#N-1) in addition to a serving TRP (TRP#0) used during single PDSCH transmission, control information for PDSCHs transmitted from the N-1 additional TRPs is transmitted in the same DCI (long DCI) as that for the control information for the PDSCH transmitted from the serving TRP. That is, the UE may acquire the control information for the PDSCHs transmitted from different TRPs (TRP#0 to TRP#N-1) via a single piece of DCI. In case #4 915, complexity of DCI blind decoding of the UE may not be increased, but a degree of freedom of PDSCH control or allocation may be low since the number of cooperative TRPs is limited according to long DCI payload restriction.

In the following description and embodiments, sDCI may refer to various pieces of supplementary DCI such as shortened DCI, secondary DCI, or normal DCI (DCI formats 1_0 and 1_1 described above) including PDSCH control information transmitted in the cooperative TRP, and unless specific restriction is mentioned, the corresponding description may be similarly applied to the various pieces of supplementary DCI.

In the following descriptions and embodiments, aforementioned cases #1 900, case #2 905, and case #3 910, in which one or more pieces of DCI are used for NC-JT support, may be classified as multiple-PDCCH-based NC-JT. The aforementioned case #4 915, in which a single piece of DCI (PDCCH) is used for NC-JT support, may be classified as single-PDCCH-based NC-JT. In multiple PDCCH-based PDSCH transmission, a CORESET for scheduling the DCI of the serving TRP (TRP #0) is separated from CORESETs for scheduling the DCI of cooperative TRPs (TRP #1 to TRP #(N-1)). A method of distinguishing the CORESETs may include a distinguishing method through a higher-layer indicator for each CORESET and a distinguishing method through a beam configuration for each CORESET. Furthermore, in single PDCCH-based NC-JT, single DCI schedules a single PDSCH having a plurality of layers instead of scheduling a plurality of PDSCHs, and the plurality of layers may be transmitted from a plurality of TRPs. In this case, association between a layer and a TRP transmitting the corresponding layer may be indicated through a transmission configuration indicator (TCI) indication for the layer.

In embodiments of the disclosure, "cooperative TRP" may be replaced with various terms, such as "cooperative panel" or "cooperative beam" when actually applied.

In embodiments of the disclosure, "the case in which NC-JT is applied" may be variously interpreted as "the case in which the UE simultaneously receives one or more PDSCHs in one BWP", "the case in which the UE simultaneously receives PDSCHs based on two or more transmission configuration indicator (TCI) indications in one BWP", and "the case in which the PDSCHs received by the UE are associated with one or more DMRS port groups" according to circumstances, but is used by means of one expression for the sake of descriptive convenience.

In the disclosure, a wireless protocol structure for NC-JT may be variously used according to a TRP development scenario. For example, if there is a small backhaul delay or no backhaul delay between cooperative TRPs, a method (CA-like method) using a structure based on MAC layer multiplexing is possible in a similar manner to reference numeral "S10" of FIG. 4. Contrarily, if a backhaul delay between cooperative TRPs is so large that the backhaul delay cannot be ignored (e.g., when a time of 2ms or longer is required for exchange of information, such as CSI, scheduling, and HARQ-ACK, between the cooperative TRPs), a method (DC-like method) of securing characteristics robust to a delay by using an independent structure for each TRP starting from the RLC layer is possible in a similar manner to reference numeral "S20" of FIG. 4.

The UE supporting C-JT/NC-JT may receive a C-JT/NC-JT-related parameter or a setting value from a higher-layer configuration and set an RRC parameter of the UE, based on the C-JT/NC-JT-related parameter or setting value. For the higher-layer configuration, the UE may use a UE capability parameter (e.g., tci-StatePDSCH). For example, the UE capability parameter (e.g., tci-StatePDSCH) may define TCI states for PDSCH transmission. The number of TCI states may be configured as 4, 8, 16, 32, 64, and 128 in FR1 and as 64 and 128 in FR2. A maximum of 8 states which can be indicated by 3 bits of a TCI field of the DCI may be configured through an MAC CE message among the configured numbers. A maximum value 128 may refer to a value indicated by maxNumberConfiguredTCI statesPerCC within the parameter tci-StatePDSCH which is included in capability signaling of the UE. In this way, a series of configuration procedures from the higher-layer configuration to the MAC CE configuration may be applied to a beamforming change command or a beamforming indication for at least one PDSCH in one TRP.

Hereinafter, the operation principle of the disclosure will be described in detail in conjunction with the accompanying drawings. The contents of the disclosure may be applied to frequency division duplex (FDD) and time division duplex (TDD) systems, As used herein, upper signaling (or upper layer signaling) is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

As used herein, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

Hereinafter, for the sake of descriptive convenience, a cell, a transmission point, a panel, a beam, and/or a transmission direction which can be distinguished through an upper layer/L1 parameter such as a TCI state or spatial relation information, a cell ID, a TRP ID, or a panel ID may be described as a TRP, a beam, or a TCI state as a whole. Therefore, when actually applied, a TRP, a beam, or a TCI state may be appropriately replaced with one of the above terms.

As used herein, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, embodiments of the disclosure will be described in detail in conjunction with the accompanying drawings. In the following description, a base station is an entity that allocates resources to terminals, and may be at least one of a gNode B, a gNB, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the following description of embodiments of the disclosure, 5G systems will be described by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD and TDD systems.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, higher layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

As used herein, the term "slot" may generally refer to a specific time unit corresponding to a transmit time interval (TTI), may specifically refer to a slot used in a 5G NR system, or may refer to a slot or a subframe used in a 4G LTE system.

As used herein, reception of a CSI-RS resource may be understood as reception of a CSI-RS corresponding to the CSI-RS resource. In addition, channel estimation or CSI calculation for a CSI-RS port may be understood as channel estimation or CSI calculation performed by measuring a CSI-RS corresponding to the CSI-RS port.

Hereinafter, the above examples may be described through several embodiments, but they are not independent of each other, and one or more embodiments may be applied simultaneously or in combination.

According to an embodiment, a CSI report and CSI resource configuration method for network energy saving is described.

As an embodiment of the disclosure, CSI report and CSI resource configuration methods for network energy saving on UE and base station sides are described. This embodiment may be operated in combination with other embodiments.

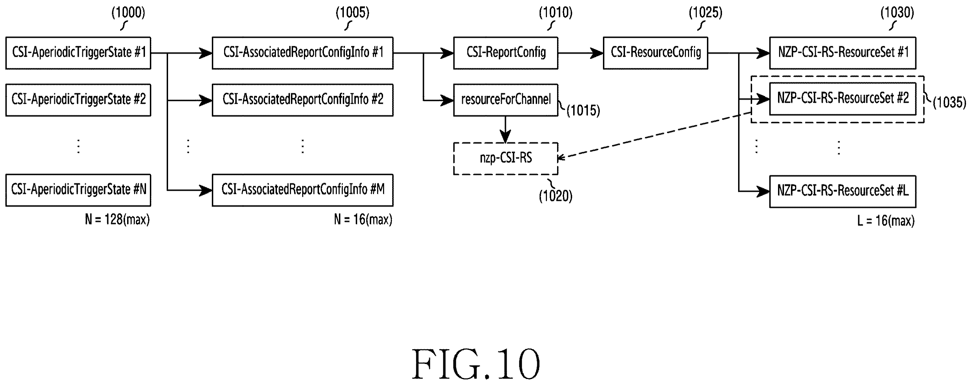

FIG. 10 is a diagram illustrating an example of a structure of aperiodic CSI report signaling which may be configured for a UE through higher layer signaling according to an embodiment.

Referring to FIG. 10, a maximum of 128 CSI-AperiodicTriggerStates 10-00, that is higher layer signaling, may be configured for a UE by a base station. A single CSI-AperiodicTriggerState may be mapped to a codepoint in a CSI request field in DCI.

According to an embodiment, the higher layer signaling reportTriggerSize associated with the number of codepoints of a CSI request may be configured for the UE by the base station. reportTriggerSize may be an integer among 0 to 6, and when this value is NTs, the UE may expect that there are 2NTs codepoints in a CSI request field.

- If all bits in a CSI request field in DCI received by the UE are 0, the UE may consider or identify that there is no information that triggers aperiodic CSI report transmission (additionally, aperiodic CSI-RS reception may also be indicated).
- If the number of CSI-AperiodicTriggerStates configured for the UE through higher layer signaling is greater than 2NTs-1, the UE receives a MAC CE from the base station, and the MAC CE may select (2NTs-1) number of CSI-AperiodicTriggerStates among the plurailty of CSI-AperiodicTriggerStates configured through higher layer signaling.
- If the number of the CSI-AperiodicTriggerStates configured for the UE through higher layer signaling is smaller than or equal to 2NTs-1, the plurailty of CSI-AperiodicTriggerStates configured through higher layer signaling may be mapped to codepoints of each CSI request field in sequence. For example, if 32 CSI-AperiodicTriggerStates are configured for the UE through higher layer signaling and the higher layer signaling reportTriggerSize is configured to be 6, that is, 63 (=$2^6$-1) codepoints of a CSI request field are available for an aperiodic CSI report, the UE may understand or identify that the CSI-AperiodicTriggerStates are mapped to codepoints of the CSI request in ascending order according to the sequence thereof since the number of the configured CSI-AperiodicTriggerStates is smaller than the number of the codepoints of the CSI request field.

According to an embodiment, one to a maximum of 16 CSI-AssociatedReportConfigInfos may be configured for the UE in the higher layer signaling CSI-AperiodicTriggerState (10-05). A single CSI-ReportConfig 10-10 may be included in one piece of CSI-AssociatedReportConfigInfo configuration information, CSI-ResourceConfig 10-25 may be included in CSI-ReportConfig, and in a case of an aperiodic CSI report, one to a maximum of 16 NZP-CSI-RS-ResourceSets 10-30 may be included in CSI-ResourceConfig.

According to an embodiment, resourceForChannel 10-15 may be included in CSI-AssociatedReportConfigInfo configuration information. In a case of an aperiodic CSI report, one of a plurality of NZP-CSI-RS-ResourceSets, which may be included in CSI-ResourceConfig may be selected through the parameter nzp-CSI-RS 10-20 which may be configured through a parameter (e.g., resourceForChannel) (10-35). That is, in a case of an aperiodic CSI report, even when a single CSI-AssociatedReportConfigInfo is associated with (or is mapped to or corresponds to) a plurality of NZP-CSI-RS-ResourceSets, one aperiodic CSI-RS resource set associated with one aperiodic CSI report configuration may be considered for a single CSI-AssociatedReportConfigInfo.

In the following, an association relation (or mapping relation) between a CSI report and a CSI-RS resource set is described according to a time domain behavior of a CSI report and a CSI-RS resource.

- When considering a periodic CSI report, the UE may expect that there is one periodic CSI-RS resource set which may be associated with the report and used.
- When considering a semi-persistent CSI report, the UE may expect that there is one periodic or semi-persistent CSI-RS resource set which may be associated with (or be mapped to or correspond to) the semi-persistent CSI report and used.
- When the UE considers an aperiodic CSI report, if the aperiodic CSI report is associated with (or is mapped to or corresponds to) a periodic and semi-persistent CSI-RS resource set, the number of NZP-CSI-RS-ResourceSets which may be included in the higher layer signaling CSI-ResourceConfig may be limited to 1. If the aperiodic CSI report is associated with (or is mapped to or corresponds to) an aperiodic CSI-RS resource set, even when a plurality of (a maximum of 16) NZP-CSI-RS-ResourceSets, which may be included in the higher layer signaling CSI-Resource-Config, are possible, the UE may select and consider one aperiodic CSI-RS resource set associated with one aperiodic CSI report configuration for a single CSI-AssociatedReportConfigInfo through the higher layer signaling resourceForChannel.

In the following, a method of triggering and activating a semi-persistent CSI report of the UE by the base station is described.

According to an embodiment, for a semi-persistent CSI report transmitted through a PUSCH, a set of multiple trigger states may be configured for the UE by the base station through the higher layer signaling CSI-SemiPersistentOnPUSCH-TriggerStateList. A configuration for a maximum of 64 (= maxNrOfSemiPersistentPUSCH-Triggers) semi-persistent CSI trigger states may be configured, for the UE by the base station, to be included in CSI-SemiPersistentOnPUSCH-TriggerStateList. One of the multiple trigger states configured through CSI-SemiPersistentOnPUSCH-TriggerStateList may be activated for the UE through a CSI request field in DCI received from the base station, and a CRC of the DCI may be scrambled by a SP-CSI-RNTI.

According to an embodiment, the UE may not expect to receive DCI (a CRC of the DCI may be scrambled by a SP-CSI-RNTI) additionally activating a semi-persistent CSI report having the same ID (e.g., CSI-ReportConfigId) as that of a semi-persistent CSI report having already been activated through DCI (a CRC of the DCI may be scrambled by a SP-CSI-RNTI) received from the base station.

According to an embodiment, for a semi-persistent CSI report transmitted through a PUCCH, a PUCCH resource to be used for reporting the semi-persistent CSI report may be configured for the UE through pucch-CSI-ResourceList in the higher layer signaling reportConfigType. A maximum number of PUCCH resources may be 4 which is a maximum number of bandwidth parts which may be configured for the UE by the base station through higher layer signaling.

According to an embodiment, the UE may receive, from the base station, a MAC CE including an activation command for a semi-persistent CSI report, the received MAC CE may notify the UE of one of multiple semi-persistent CSI report configurations or transfer same to the UE, or a semi-persistent CSI report corresponding to the notified semi-persistent CSI report configuration may be transmitted through a configured PUCCH resource described above. If the UE receives a PDSCH including the MAC CE including the activation command for the semi-persistent CSI report, the UE may apply the semi-persistent CSI report configuration activated through the MAC CE, starting from the first slot after 3 ms from a slot in which a PUCCH including HARQ-ACK information for the PDSCH is transmitted.

According to an embodiment, each codepoint of a CSI request field in DCI including a CRC scrambled by an SP-CSI-RNTI may be associated with one trigger state of a semi-persistent CSI report. An association between a codepoint of the CSI request field and a trigger state of the semi-persistent CSI report may be established according to the order of multiple trigger states in the higher layer signaling CSI-SemiPersistentOnPUSCH-TriggerStateList. For example, a first trigger state among the multiple trigger states in the higher layer signaling CSI-SemiPersistentOnPUSCH-TriggerState-List may be associated with a first codepoint of the CSI request field. If the UE verifies validity for activation or deactivation of the semi-persistent CSI report, the UE may identify or check whether the following conditions for the DCI are satisfied.

- If the UE verifies validity for activation or deactivation of a semi-persistent CSI report, the UE may identify whether a CRC of corresponding DCI has been scrambled by an SP-CSI-RNTI, which may be configured by the base station through the higher layer signaling SP-CSI-RNTI.
- If the UE verifies validity for activation of a semi-persistent CSI report, the UE may identify or check whether all the bits in a HARQ process number field (if present) in DCI format 0_1 or 0_2 are indicated as 0, and/or whether all the bits in an RV field (if present) in DCI format 0_1 or 0_2 are indicated as 0.
- If the UE verifies validity for deactivation of a semi-persistent CSI report, the UE may identify whether all the bits in a HARQ process number field (if present) in DCI format 0_1 or 0_2 are indicated as 0, whether all the bits in an MCS field in DCI format 0_1 or 0_2 are indicated as 1, whether all the bits in an RV field (if present) in DCI format 0_1 or 0_2 are indicated as 0, and/or whether a frequency domain resource assignment (FDRA) field in DCI format 0_1 or 0_2 satisfies the following items.

  - If FDRA type 0 is configured for the UE by the base station through higher layer signaling, the UE may identify whether all the bits in the FDRA field are indicated as 0.
  - If FDRA type 1 is configured for the UE by the base station through higher layer signaling, the UE may identify whether all the bits in the FDRA field are indicated as 1.
  - A capability of dynamic switching between FDRA types 0 and 1 is configured for the UE by the base station through higher layer signaling, if the most significant bit (MSB) of the FDRA field is 0, the UE may identify whether all the bits in the FDRA field are indicated as 0, and otherwise (if the MSB of the FDRA field is 1), the UE may identify whether all the bits in the FDRA field are indicated as 1.
  - With respect to DCI format 0_1, FDRA type 2 is configured for the UE by the base station through higher layer signaling, if the subcarrier spacing is 15 kHz, the UE may identify or check whether all the bits in the FDRA field are indicated as 1, and if the subcarrier spacing is 30 kHz, the UE may identify or check whether all the bits in the FDRA field are indicated as 0.

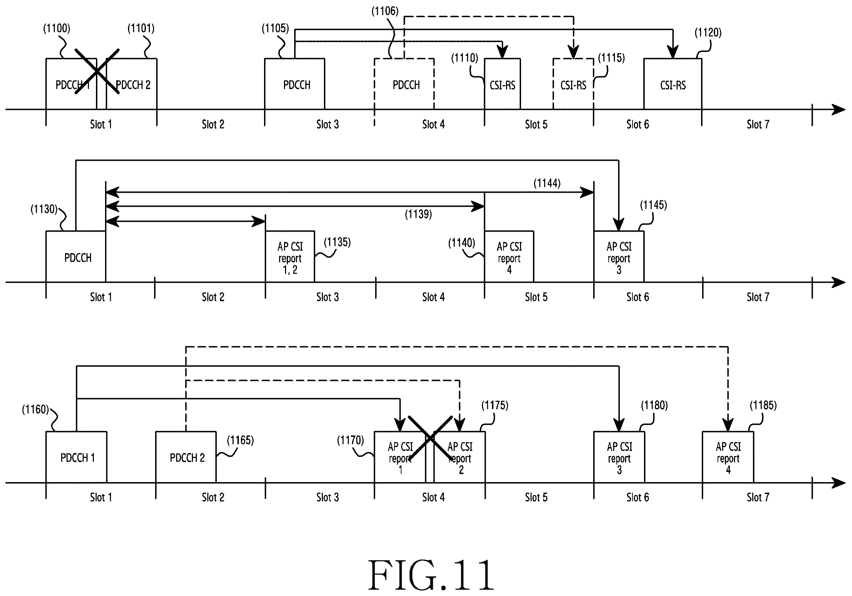

FIG. 11 is a diagram illustrating an example of aperiodic CSI report and aperiodic CSI-RS triggering situations and restrictions according to an embodiment.

Referring to FIG. 11, a UE according to an embodiment may not expect to receive multiple DCIs each having a CSI request field including information that triggers aperiodic CSI report transmission in one slot in one cell. The information that triggers aperiodic CSI report may also indicate aperiodic CSI-RS reception.

Therefore, if both PDCCH 1 1100 and PDCCH 2 1101 have a CSI request field including information that triggers aperiodic CSI report transmission (additionally, aperiodic CSI-RS reception may also be indicated), the UE may not expect that the two PDCCHs are received within one slot. Therefore, if a base station desires to transmit, to the UE, multiple PDCCHs each having a CSI request field including information that triggers aperiodic CSI report transmission (additionally, aperiodic CSI-RS reception may also be indicated), the UE may receive respective PDCCHs 1105 and 1106 in two different slots.

According to an embodiment, if the UE receives DCI having a CSI request field including information that triggers aperiodic CSI report transmission (additionally, aperiodic CSI-RS reception may also be indicated) in a particular slot in the same cell group, the UE may not expect to receive another DCI having a CSI request field including information that triggers aperiodic CSI report transmission (additionally, aperiodic CSI-RS reception may also be indicated) in any other slots overlapping with the slot in the cell group.

According to an embodiment, the UE may transmit, to the base station through a UE capability report, a restriction on the number of CSI-RS resources simultaneously activatable in each cell and a restriction on the number of CSI-RS ports simultaneously activatable in each cell. The UE may report, to the base station, a natural number among 1 to 32 as the number of CSI-RS resources simultaneously activatable in each cell. The UE may report, to the base station, a multiple of 8 among 8 to 128 as the number of CSI-RS ports simultaneously activatable in each cell. Whether the UE receives multiple aperiodic CSI-RS resources in one slot or receives one aperiodic CSI-RS resource in each slot, the UE may receive aperiodic CSI-RS resources 1110, 1115, and 1120 triggered through PDCCHs from the base station under the restrictions on the number of CSI-RS resources and the number of CSI-RS ports.

According to an embodiment, the UE may, based on a slot offset corresponding to the largest value among the same or different slot offsets which are configured by higher layer signaling for multiple aperiodic CSI reports that are triggered through one PDCCH, in one cell, transmit a PUSCH including all the triggered aperiodic CSI reports. The PUSCH may include all the aperiodic CSI reports triggered through the DCI or some of the reports, and whether each aperiodic CSI report is included may be determined according to the priority of the aperiodic CSI report and the resource amount of the PUSCH. If aperiodic CSI report 1 1135, aperiodic CSI report 2 1135, aperiodic CSI report 3 1145, and aperiodic CSI report 4 1140 are triggered by one PDCCH 1130, a slot offset 1134 for aperiodic CSI report 1 1135 and aperiodic CSI report 2 1135 is 2 slots, a slot offset 1139 for aperiodic CSI report 4 1140 is 4 slots, and a slot offset 1144 for aperiodic CSI report 3 1145 is 5 slots, the UE may include, in a PUSCH, and transmit aperiodic CSI reports 1 to 4 after 5 slots after the PDCCH, based on the longest slot offset 5 slots.

According to an embodiment, the UE may not expect that respective aperiodic CSI reports triggered by different PDCCHs exist in the same slot. For example, the UE may not expect that aperiodic CSI report 1 1170 triggered by PDCCH 1 1160 and aperiodic CSI report 2 1175 triggered by PDCCH 2 1165 exist in the same slot.

According to an embodiment, the UE may expect that it is possible that respective aperiodic CSI reports triggered by different PDCCHs are transmitted in different slots. For example, only one CSI report existing in each slot may be allowed such as aperiodic CSI report 3 1180 triggered by PDCCH 1 1160 and aperiodic CSI report 4 1185 triggered by PDCCH 2 1165.

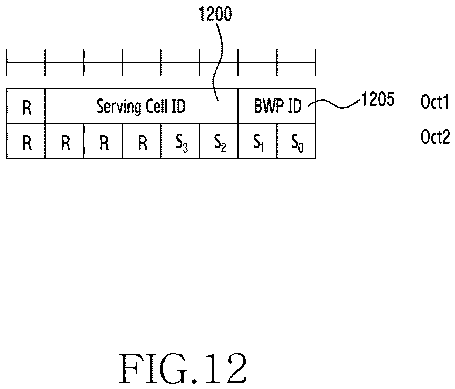

FIG. 12 is a diagram illustrating a structure of a MAC CE indicating activation or deactivation of a semi-persistent CSI report transmitted through a PUCCH according to an embodiment.

Referring to FIG. 12, a MAC CE indicating activation or deactivation of a semi-persistent CSI report transmitted through a PUCCH according to an embodiment may be determined through a MAC subheader including a logical channel ID (LCID), and may have a fixed length of 16 bits. A description of each field in the MAC CE may be as follows.

- Serving Cell ID 1200: This field may indicate an ID of a serving cell to which the MAC CE is to be applied, and the length thereof may be 5 bits.
- BWP ID 1205: This field may indicate an uplink bandwidth part to which the MAC CE is to be applied, may indicate a codepoint in a bandwidth part indicator field in DCI, and the length thereof may be 2 bits.
- $S_i$ 1210: This field may indicate an activated or deactivated state of a semi-persistent CSI report configuration in the higher layer signaling csi-ReportConfigToAddModList.

  - An $S_0$ field may indicate a CSI report configuration which includes a PUCCH resource associated with or included in a bandwidth part indicated through the BWP ID field, and has type configured as semiPersistentOnPUCCH and the lowest ID (e.g., CSI-ReportConfigId) among CSI-ReportConfigs in the higher layer signaling csi-ReportConfigToAddModList.
  - An $S_1$ field may indicate a CSI report configuration which includes a PUCCH resource associated with or included in a bandwidth part indicated through the BWP ID field, and has type configured as semiPersistentOnPUCCH and the second lowest ID (e.g., CSI-ReportConfigId) among CSI-ReportConfigs in the higher layer signaling csi-ReportConfigToAddModList.
  - In the same way, $S_2$ and $S_3$ fields may also be considered.
  - PUCCH format 2, 3, or 4 may be available for a PUCCH resource associated with or included in a particular bandwidth part, and the format may be identified using an ID of a PUCCH resource configured in the higher layer signaling PUCCH-Config.
  - If the number of semi-persistent CSI report configurations which have type configured as semiPersistentOnPUCCH among CSI-ReportConfigs in the higher layer signaling csi-ReportConfigToAddModList and include a PUCCH resource associated with or included in a bandwidth part indicated through the BWP ID field is smaller than i+1, the UE may disregard the $S_i$ field. For example, if the number of the semi-persistent CSI report configurations is 2, the UE may interpret the $S_0$ field and the $S_1$ field, but disregard the $S_2$ field and the $S_3$ field.
  - If the $S_i$ field is indicated as 1, the UE may understand that this implies that a corresponding semi-persistent CSI report configuration needs to be activated.
  - If the $S_i$ field is indicated as 0, the UE may understand that this implies that a corresponding semi-persistent CSI report configuration needs to be deactivated.

- R: This indicates a reserved bit and may be configured as 0.

Through a MAC CE illustrated in FIG. 12, a maximum of four semi-persistent CSI reports may be activated for the UE in a particular bandwidth part.

According to an embodiment, a base station may activate or deactivate some or all of power amplifiers used for downlink transmission for network energy saving. If the base station activates or deactivates some or all of power amplifiers, the downlink performance of all UEs supported by the base station may be affected thereby. Therefore, the base station may consider the effect on the UE performance when adjusting the activation or deactivation for the power amplifiers.

To this end, in order to identify a difference in the UE performance when activating or deactivating a particular number or particular region of power amplifiers, the base station may transmit CSI-RSs having different numbers of ports to a UE, and expect that the UE computes a CSI report for each of the CSI-RSs having the different numbers of ports and report the CSI report to the base station. The base station having received the CSI report may determine which performance the UE exhibits for each of the CSI-RSs having the different numbers of ports, and may finally determine which power amplifier is to be deactivated or activated by collecting and referring to reports from multiple UEs capable of reporting a CSI report.

According to an embodiment, the UE may include, for network energy saving, multiple detailed CSI report configurations in the higher layer signaling CSI-ReportConfig configured by the base station. The UE may use a CSI report corresponding to each detailed CSI report configuration to report CSI calculated by the UE when the base station operates some or all of antenna ports. When CSI-ReportConfig including multiple detailed CSI report configurations is configured for the UE by base station, a combination of at least one of the following configuration methods may be possible.

- The UE may include a configuration for a PUCCH-based periodic CSI report in CSI-ReportConfig including multiple detailed CSI report configurations from the base station for network energy saving.
- The UE may include a configuration for a PUCCH-based semi-persistent CSI report in CSI-ReportConfig including multiple detailed CSI report configurations from the base station for network energy saving.
- The UE may include a configuration for a PUSCH-based semi-persistent CSI report in CSI-ReportConfig including multiple detailed CSI report configurations from the base station for network energy saving.
- The UE may include a configuration for a PUSCH-based aperiodic CSI report in CSI-ReportConfig including multiple detailed CSI report configurations from the base station for network energy saving.

For example, the UE may combine all the above items to include a configuration or configuration information for at least one of a PUCCH-based periodic CSI report, a PUCCH-based semi-persistent CSI report, a PUSCH-based semi-persistent CSI report, or a PUSCH-based aperiodic CSI report in CSI-ReportConfig including multiple detailed CSI report configurations from the base station for network energy saving. That is, the UE may receive a CSI report configuration for network energy saving from the base station through a PUCCH-based periodic CSI report, a PUCCH-based semi-persistent CSI report, a PUSCH-based semi-persistent CSI report, or a PUSCH-based aperiodic CSI report, and the UE may transmit the CSI report, based on the received configuration. All types of CSI reports being available may enable more flexible signaling for network energy saving between the UE and the base station.

For example, the UE may include, among the above items, only a configuration for a PUSCH-based aperiodic CSI report in CSI-ReportConfig including multiple detailed CSI report configurations from the base station for network energy saving. That is, as a CSI report configuration for network energy saving, a PUCCH-based periodic CSI report, a PUCCH-based semi-persistent CSI report, and a PUSCH-based semi-persistent CSI report may not be configured and only a configuration (or configuration information) for a PUSCH-based aperiodic CSI report may be configured for the UE. As described above, only a configuration for a PUSCH-based aperiodic CSI report is available, since the size of CSI required for the UE to include in a CSI report according to multiple detailed CSI report configurations for network energy saving may be large and the computation amount required for this may be burdensome, so performing such a periodic CSI report may be inefficient.

The above description is merely an example, and as described above, different combinations from the example may also be possible.

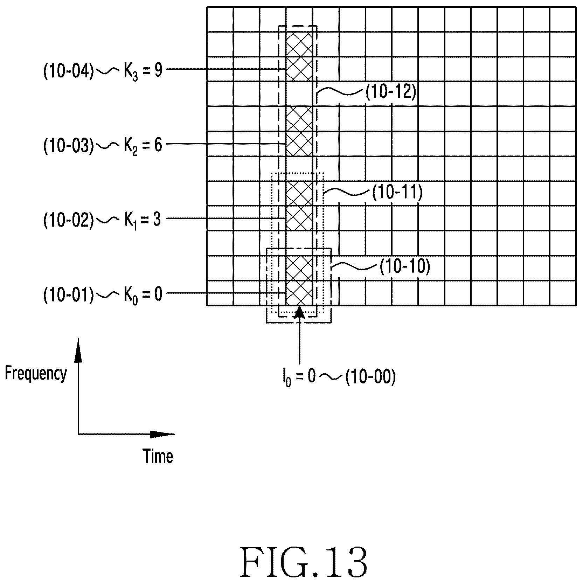

FIG. 13 is a diagram illustrating an example of a transmission situation of multiple overlapping CSI-RS resources according to an embodiment of the disclosure.

Referring to FIG. 13, resource element (RE) mapping of a CSI-RS resource 10-10 of two ports, a CSI-RS resource 10-11 of four ports, and/or a CSI-RS resource 10-12 of eight ports may be configured to overlap with each other for the UE by the base station through higher layer signaling as illustrated in FIG. 13.

According to an embodiment, the CSI-RS resource of two ports may be defined based on Row 3 in [Table 7] above, and $l_0=3$ (10-00) and $k_0=0$ (10-01) may be configured for the UE by the base station through higher layer signaling. Accordingly, the UE may determine that the CSI-RS resource of two ports is mapped to a third symbol among symbol indexes starting from number 0 in an RB in a particular slot, and a 0-th RE and a first RE among RE indexes starting from number 0 (10-10).

In addition, the CSI-RS resource of four ports may be defined based on Row 4 in [Table 7] above, and $l_0=3$ (10-00) and $k_0=0$ (10-01) may be configured for the UE by the base station through higher layer signaling. Accordingly, the UE may determine that the CSI-RS resource of four ports is mapped to a third symbol among symbol indexes starting from number 0 in an RB in a particular slot, and a 0-th RE, a first RE, a third RE, and a fourth RE among RE indexes starting from number 0 (10-11).

In addition, the CSI-RS resource of eight ports may be defined based on Row 6 in [Table 7] above, and $l_0$=3 (10-00), $k_0$=0 (10-01), $k_1$=3 (10-02), $k_2$=6 (10-03), and $k_3$=9 (10-04) may be configured for the UE by the base station through higher layer signaling. Accordingly, the UE may determine that the CSI-RS resource of four ports is mapped to a third symbol among symbol indexes starting from number 0 in an RB in a particular slot, and a 0-th RE, a first RE, a third RE, a fourth RE, a sixth RE, a seventh RE, a ninth RE, and a tenth RE among RE indexes starting from number 0 (10-12).

Therefore, the UE may expect that the three CSI-RS resources of two, four, and eight ports overlap on the 0-th RE and the first RE of the third symbol, and the UE may expect that the two CSI-RS resources of four and eight ports overlap on the third RE and the fourth RE of the third symbol. As described above, when the base station transmits multiple different CSI-RS resources having different numbers of ports to the UE on the same symbol, the base station may avoid CSI-RS resource transmission on different time resources to reduce energy consumption.

However, in order for the UE to report a CSI report for multiple CSI-RS resources having different numbers of CSI-RS ports to the base station in an aperiodic CSI report type as described above, a plurality of CSI-AssociatedReport-ConfigInfos may need to be configured for the UE in the higher layer signaling CSI-AperiodicTriggerState mapped to one codepoint of a CSI request field in DCI which may be received from the base station, CSI-ReportConfig and a CSI-RS resource set may need to be configured in each CSI-AssociatedReportConfigInfo, and each CSI-RS resource set associated with each CSI-ReportConfig may need to have a different number of CSI-RS ports.

For example, three CSI-AssociatedReportConfigInfos may be configured for the UE in a particular CSI-AperiodicTriggerState, and a CSI-RS resource set associated with CSI-ReportConfig included in a first CSI-AssociatedReportConfigInfo may include one or more CSI-RS resources of two ports. A CSI-RS resource set associated with CSI-ReportConfig included in a second CSI-AssociatedReportConfigInfo may include one or more CSI-RS resources of four ports. A CSI-RS resource set associated with CSI-ReportConfig included in a third CSI-AssociatedReportConfigInfo may include one or more CSI-RS resources of eight ports.

In an example, under the above configuration, if the UE receives a CSI request field having a corresponding codepoint value through one DCI, the UE is unable to transmit two or more of respective aperiodic CSI reports corresponding to the first, second and third CSI-AssociatedReportConfigInfos in the same slot, and may report only a single CSI report in each slot.

As described above, even if the UE receives multiple CSI-RS resources, some REs of which overlap on the same symbol position as illustrated in FIG. 13, the UE needs to report respective CSI reports in different slots. Therefore, this operation may be inefficient in view of time resource usage.

If the UE desires to report such multiple CSI reports in the same slot as one CSI report, the UE may need to receive two or more DCIs including aperiodic CSI report trigger information in different slots. Even in this case, it may be still inefficient in that the UE needs to transmit aperiodic CSI reports by receiving multiple DCIs.

Furthermore, in this case, the UE may fail to transmit some or all of the aperiodic CSI reports triggered by the base station for the purpose of network energy saving management, according to a CPU occupation time and a priority rule by which a CSI report having a low priority is disregarded according to a priority when multiple CSI reports overlap in the time dimension. Therefore, when the base station needs to trigger a CSI report again or fails to receive the CSI report from the UE within a particular time, the base station may need to perform network energy saving management without corresponding information. Eventually, even from the perspective of scheduling, it may be inflexible and inefficient.

Therefore, the base station may transmit multiple CSI-RS resources having different numbers of ports (hereinafter, interchangeably referred to as antenna ports) to the UE, and then configure flexible higher layer signaling so as to receive respective CSI reports for the CSI-RS resources having the different numbers of ports from the UE. To this end, the UE may receive a higher layer signaling configuration for a CSI report and a CSI-RS resource, based on a combination of at least one of the following various methods from the base station.

[Method 1-1]

According to an embodiment, if a CSI report corresponding to CSI-RS resources having different numbers of ports is configured for the UE by the base station through higher layer signaling for the purpose of network energy saving, a plurality of CSI-ReportConfigs are configured for the UE by the base station, and the plurality of CSI-ReportConfigs may be associated to CSI-RS resource sets each including a CSI-RS resource of a different number of ports, respectively. In order to configure the CSI report corresponding to the CSI-RS resources having the different numbers of ports, the plurality of CSI-ReportConfigs may be configured for the UE by the base station to be associated through higher layer signaling. The signaling that associates the plurality of CSI-ReportConfigs may be referred to as linkage. Linkage which may be configured for the UE through higher layer signaling may be configured through the following examples.

- As one method, it may be assumed that a plurality of CSI-ReportConfigs may be configured for the UE in one CSI-AssociatedReportConfigInfo configuration. When a plurality of CSI-ReportConfigs are configured in a single CSI-AssociatedReportConfigInfo as described above, the plurality of CSI-ReportConfigs may be considered or identified as being implicitly associated with each other, or IDs for linkage may be explicitly configured in the plurality of CSI-ReportConfigs through higher layer signaling so that two or more CSI-ReportConfig having the same ID values may be considered or identified as being associated with each other. Additionally, since a plurality of CSI-ReportConfigs are configured for the UE in one CSI-AssociatedReportConfigInfo configuration, the time domain behaviors of the CSI-ReportConfigs may be assumed to be the same. If the plurality of CSI-ReportConfigs all relate to an aperiodic CSI report, the UE may expect that a number of the higher layer signaling resourceForChannel corresponding to the number of the CSI-ReportConfigs are configured in the CSI-AssociatedReportConfigInfo configuration. In addition, the UE may select one of a plurality of NZP-CSI-RS-ResourceSets, which may be included in CSI-ResourceConfig in a case of each aperiodic CSI report, by using the parameter nzp-CSI-RS which may be configured through each resourceForChannel.

  - For example, first to third CSI-ReportConfigs may be configured for the UE in one CSI-AssociatedReport-ConfigInfo configuration, a CSI-RS resource set including a CSI-RS resource of two ports may be associated with the first CSI-ReportConfig, a CSI-RS resource set including a CSI-RS resource of four ports may be associated with the second CSI-ReportConfig, and a CSI-RS resource set including a CSI-RS resource of four ports may be associated with the third CSI-ReportConfig. In this case, since three CSI-ReportConfigs are configured in one CSI-AssociatedReportConfigInfo configuration, the UE may consider or identify that the three CSI-ReportConfigs are implicitly associated with each other, even with no additional higher layer signaling. Alternatively, if respective linkage IDs of the three CSI-ReportConfigs are configured as 0 in the one CSI-AssociatedReport-ConfigInfo configuration, the UE may consider that the three CSI-ReportConfigs are explicitly associated with each other.

- As another method, the UE may consider or identify that two or more CSI-AssociatedReportConfigInfos are associated with each other. In this case, the UE may consider or identify that a single CSI-ReportConfig is configured in each CSI-AssociatedReportConfigInfo. A plurality of CSI-AssociatedReportConfigInfos may be configured for the UE in the higher layer signaling CSI-AperiodicTriggerState, and an ID for linkage may be explicitly configured in each of the plurality of CSI-AssociatedReportConfigInfos through higher layer signaling. The UE may consider or identify that two or more CSI-AssociatedReportConfigInfos having the same ID value are associated with each other. Alternatively, the UE may expect that additional higher layer signaling such as CSI-linkedReportConfiglist is configured in an association relation between the higher layer signalings CSI-AperiodicTriggerState and CSI-AssociatedReportConfigInfo, CSI-linkedReportConfiglist is configured in CSI-AperiodicTriggerState, and a plurality of CSI-AssociatedReportConfigInfos are configured in the CSI-linkedReportConfiglist. In this case, the UE may consider or identify that the plurality of CSI-AssociatedReportConfigInfos configured in the CSI-linkedReportConfiglist are implicitly associated with each other.
- For example, the UE may consider or identify that two or more CSI-AperiodicTriggerStates are associated with each other. The UE may receive DCI from the base station, and aperiodic CSI report transmission related to one of a plurality of CSI-AperiodicTriggerStates may be triggered through a CSI request field in the DCI. In this case, if two or more CSI-AperiodicTriggerStates are associated with each other, even when aperiodic CSI report transmission related to a single CSI-AperiodicTriggerState is triggered through DCI, the UE may consider or identify that the UE has received a trigger indication for a CSI-AperiodicTriggerState associated therewith from the base station. In this case, the UE may expect that one or more CSI-AssociatedReportConfigInfos are configured in the higher layer signaling CSI-AperiodicTriggerState, and a single CSI-ReportConfig is configured in each CSI-AssociatedReportConfigInfo. The UE may consider or identify that, with respect to an association between two or more CSI-AperiodicTriggerState, an ID for linkage is explicitly configured in each of the plurality of CSI-AperiodicTriggerStates through higher layer signaling, and two or more CSI-AperiodicTriggerStates having the same ID value are associated with each other.

Alternatively, if the number of the CSI-AperiodicTriggerStates configured through higher layer signaling is greater than a value smaller by 1 than the number of codepoints of a CSI request field in DCI, the UE may map some of all the CSI-AperiodicTriggerStates to codepoints of the CSI request field through a MAC CE. In this case, two or more CSI-AperiodicTriggerStates may be mapped to one codepoint of the CSI request field through a MAC CE. In this case, if two or more CSI-AperiodicTriggerStates are mapped to one codepoint of a CSI request field, the UE may consider or identify that the plurality of CSI-AperiodicTriggerStates are associated with each other. Even when the number of the CSI-AperiodicTriggerState configured through higher layer signaling is smaller than or equal to a value smaller by 1 than the number of codepoints of a CSI request field in DCI, two or more CSI-AperiodicTriggerStates may be mapped to one codepoint of the CSI request field according to a particular rule. For example, if the same ID value for linkage is configured in two or more CSI-AperiodicTriggerStates, the UE may determine that the plurality of CSI-AperiodicTriggerStates having the same ID for linkage are mapped to one codepoint of a CSI request field.

According to an embodiment, in order to configure a CSI report corresponding to CSI-RS resources having different numbers of ports, the plurality of CSI-ReportConfigs may be configured for the UE by the base station to be associated through higher layer signaling.

According to an embodiment, in order to configure a CSI report corresponding to CSI-RS resources having different numbers of CSI-RS ports, the UE may associate a plurality of CSI-ReportConfigs from the base station, and the UE may perform CSI report transmission to the base station on the same time position (e.g., the same slot and/or the same symbol) even though the CSI report transmission has been triggered through one DCI with respect to the plurality of associated CSI-ReportConfigs.

According to an embodiment, a plurality of CSI-ReportConfigs may be associated, and a CSI-RS resource set existing in CSI-ResourceConfig included in each CSI-ReportConfig may include CSI-RS resources having the same number of CSI-RS ports. For example, CSI-ReportConfigs, such as first to third CSI-ReportConfigs, may be associated with each other through the above various methods, a CSI-RS resource set including a CSI-RS resource of two ports may be associated with the first CSI-ReportConfig, a CSI-RS resource set including a CSI-RS resource of four ports may be associated with the second CSI-ReportConfig, and a CSI-RS resource set including a CSI-RS resource of four ports may be associated with the third CSI-ReportConfig.

However, when the base station transmits overlapping CSI-RS resources having different numbers of CSI-RS ports to the UE, that is, when REs corresponding to a CSI-RS resource having a smaller number of CSI-RS ports are included in REs corresponding to a CSI-RS resource having a larger number of CSI-RS ports, the following method may be used additionally to a method of individually defining CSI-RS resources having different numbers of CSI-RS ports.

According to an embodiment, one CSI-RS resource having the largest number of CSI-RS ports among different numbers of CSI-RS ports for which channel estimation is to be performed may be defined (e.g., the CSI-RS resource may be defined as a CSI-RS resource having eight CSI-RS ports when channel estimation is to be performed on two, four, and eight CSI-RS ports), and the UE may use a method of estimating channel states according to different numbers of CSI-RS ports by using a part or the entirety of RE mapping of the resource. That is, the UE may identify or check one CSI-RS resource having the largest number of CSI-RS ports among different numbers of CSI-RS ports for which channel estimation is to be performed, and may assume that the CSI-RS resource is commonly included in all the respective CSI-RS resource sets included in the first to third CSI-ReportConfigs.

Although the CSI-RS resource has a particular number of CSI-RS ports based on higher layer signaling (e.g., the CSI-RS resource may be defined as a CSI-RS resource having eight CSI-RS ports when channel estimation is to be performed on two, four, and eight CSI-RS ports), the UE may be configured to, according to which CSI-ReportConfig is associated with the CSI-RS resource, estimate channels for some or all ports of the CSI-RS resource and report a CSI report for the estimated channels to the base station. The base station may configure, for the UE, a definition of the number of CSI-RS ports to be used at the time of actual channel estimation rather than the number of CSI-RS ports based on a higher layer signaling configuration, in each CSI-RS resource set configuration, in a CSI-ReportConfig configuration, in a CSI-AssociatedReportConfigInfo configuration, or in CSI-AperiodicTriggerState.

[Method 1-2]

According to an embodiment, in a case where an association scheme between multiple pieces of CSI-ReportConfig configuration information is used, a plurality of CSI-ReportConfigs are associated with one identical CSI-RS resource set, and the CSI-RS resource set may include multiple CSI-RS resources having different numbers of CSI-RS ports. For example, first to third CSI-ReportConfigs may be configured for the UE in one CSI-AssociatedReportConfigInfo configuration, the three CSI-ReportConfigs are all associated with one CSI-RS resource set, and the CSI-RS resource set may include a CSI-RS resource of two ports, a CSI-RS resource of four ports, and a CSI-RS resource of eight ports.

If the association scheme between multiple pieces of CSI-ReportConfig configuration information is used, a restriction that only CSI-RS resources configured to have the same number of ports may be included in a single CSI-RS resource set is released, and the base station may configure, for the UE and through higher layer signaling, that multiple CSI-RS resources configured to have different numbers of ports are included in a single CSI-RS resource set. In this case, information related to a particular number of CSI-RS ports is configured in each CSI-ReportConfig through higher layer signaling as additional information, whereby the UE may compute CSI through a CSI report configuration, based on the information related to the particular number of CSI-RS ports. For example, if additional information on CSI computation for two ports is configured in the first CSI-ReportConfig and, similarly, additional information on CSI computation for four and eight ports is configured in the second and third CSI-ReportConfigs, when the UE computes CSI to transmit a CSI report based on the first, second, and third CSI-ReportConfig, the UE may use respective CSI-RS resources having two, four, and eight CSI-RS ports included in the same CSI-RS resource set associated with the first, second, and third CSI-ReportConfig.

According to an embodiment, when the base station transmits overlapping CSI-RS resources having different numbers of CSI-RS ports to the UE, that is, when REs corresponding to a CSI-RS resource having a smaller number of CSI-RS ports are included in REs corresponding to a CSI-RS resource having a larger number of CSI-RS ports, the method described below may be used additionally to a method of individually defining CSI-RS resources having different numbers of CSI-RS ports.

According to an embodiment, one CSI-RS resource having the largest number of CSI-RS ports among different numbers of CSI-RS ports for which the UE is to perform channel estimation may be defined. For example, the CSI-RS resource may be defined as a CSI-RS resource having eight CSI-RS ports when the UE is to perform channel estimation on a case of two, four, and eight CSI-RS ports. The UE may also use a method of estimating channel states according to different numbers of CSI-RS ports by using a part or the entirety of RE mapping of the defined CSI-RS resource. That is, the UE may identify or check one CSI-RS resource having the largest number of CSI-RS ports among different numbers of CSI-RS ports for which channel estimation is to be performed, and may assume or identify that the CSI-RS resource having the largest number of CSI-RS ports is included in the same CSI-RS resource set associated with the first to third CSI-ReportConfigs.

Although the CSI-RS resource has a particular number of CSI-RS ports based on higher layer signaling (e.g., the CSI-RS resource may be defined as a CSI-RS resource having eight CSI-RS ports when channel estimation is to be performed on two, four, and eight CSI-RS ports), the UE may be configured to, according to which CSI-ReportConfig is associated with the CSI-RS resource, estimate channels for some or all ports of the CSI-RS resource and transmit a CSI report for the estimated channels to the base station.

According to an embodiment, the base station may configure or include information on the number of CSI-RS ports to be used at the time of actual channel estimation rather than the number of CSI-RS ports based on a higher layer signaling configuration, in each CSI-RS resource set configuration, in a CSI-ReportConfig configuration, in a CSI-AssociatedReportConfigInfo configuration, and/or in CSI-AperiodicTriggerState, and may configure the information on the number of CSI-RS ports for the UE. For example, the base station may configure the information for the UE, based on each CSI-RS resource set configuration, a CSI-ReportConfig configuration, a CSI-AssociatedReportConfigInfo configuration, and/or a CSI-AperiodicTriggerState configuration.

According to an embodiment, in order to configure a CSI report corresponding to multiple CSI-RS resources having different numbers of CSI-RS ports, a plurality of CSI-ReportConfigs may be associated with each other, the associated CSI-ReportConfigs are associated with one identical CSI-RS resource set, and the CSI-RS resource set may include multiple CSI-RS resources having different numbers of CSI-RS ports. Even though CSI report transmission has been triggered through one DCI with respect to the plurality of associated CSI-ReportConfigs, the UE may perform the CSI report transmission to the base station on the same time position (e.g., the same slot and/or the same symbol).

[Method 1-3]

According to an embodiment, the UE may expect or identify that a single CSI-ReportConfig is associated with multiple CSI-RS resource sets. For example, the UE may expect or identify that a single CSI-ReportConfig is configured in a single CSI-AssociatedReportConfigInfo that is higher layer signaling, and three CSI-RS resource sets are included in the CSI-ReportConfig. In this case, a CSI-RS resource included in a first CSI-RS resource set has two CSI-RS ports and, similarly, respective CSI-RS resources included in second and third CSI-RS resource sets has four and eight CSI-RS ports. Accordingly, the UE may include CSI for different numbers of CSI-RS ports in a CSI report for a single CSI-ReportConfig, and report the CSI report to the base station.

Multiple CSI-RS resource sets being associated with a single CSI-ReportConfig are possible when the CSI-RS resource sets are periodic or semi-persistent CSI-RS resource sets. In a case of an aperiodic CSI-RS resource set, a plurality of resourceForChannels may be included in a single CSI-AssociatedReportConfigInfo that is higher layer signaling, a CSI-RS resource set may be selected for the UE, based on each resourceForChannel, and multiple CSI-RS resource sets may be associated with a single CSI-ReportConfig, based on the selected CSI-RS resource set. The UE may select the multiple associated CSI-RS resource sets and reflect same on a corresponding CSI report.

For example, if new reportQuantity, which may indicate CSI computation for different numbers of ports, is defined in CSI-ReportConfig and thus reportQuantity is configured, the UE may associate different CSI-RS resource sets in the CSI-ReportConfig to compute CSI and report a report.

According to an embodiment, with respect to [Method 1-3], a CSI-RS resource having the same number of CSI-RS ports may be commonly included in multiple CSI-RS resource sets included in a single CSI-ReportConfig, and the CSI-RS resource may have the largest number of CSI-RS ports among different numbers of CSI-RS ports.

That is, similarly to the method of configuring an additional CSI-RS resource described in the above [Method 1-1], one CSI-RS resource having the largest number of CSI-RS ports among different numbers of CSI-RS ports for which channel estimation is to be performed may be defined (e.g., the CSI-RS resource may be defined as a CSI-RS resource having eight CSI-RS ports when channel estimation is to be performed on two, four, and eight CSI-RS ports), and the UE may estimate channel states according to different numbers of CSI-RS ports by using a part or the entirety of RE mapping of the resource.

That is, one CSI-RS resource having the largest number of CSI-RS ports among different numbers of CSI-RS ports for which channel estimation is to be performed may be defined, and the CSI-RS resource may be commonly included in all of multiple CSI-RS resource sets included in a corresponding CSI-ReportConfig.

Although the CSI-RS resource has a particular number of CSI-RS ports based on higher layer signaling (e.g., the CSI-RS resource may be defined as a CSI-RS resource having eight CSI-RS ports when channel estimation is to be performed on two, four, and eight CSI-RS ports), the UE may define, according to which CSI-RS resource set in which the CSI-RS resource is included, estimation of channels for some or all ports of the CSI-RS resource and reporting of a CSI report for the estimated channels to the base station. For example, the UE may perform channel estimation for eight ports for a CSI-RS resource of eight ports included in CSI-RS resource set 0, and perform channel estimation for four ports for the same CSI-RS resource included in CSI-RS resource set 1. The base station may configure, for the UE, a definition of the number of CSI-RS ports to be used at the time of actual channel estimation rather than the number of CSI-RS ports based on a higher layer signaling configuration, in each CSI-RS resource set configuration, in a CSI-ReportConfig configuration, in a CSI-AssociatedReportConfigInfo configuration, and/or in CSI-AperiodicTriggerState.

According to an embodiment, in order to configure a CSI report corresponding to multiple CSI-RS resources having different numbers of CSI-RS ports, the UE may report a CSI report to the base station by using multiple CSI-RS resource sets in a single CSI-ReportConfig from the base station. Each CSI-RS resource set may include a CSI-RS resource having a different number of CSI-RS ports, or include one CSI-RS resource having the largest number of CSI-RS ports among different numbers of CSI-RS ports. The UE may perform CSI report transmission to the base station on the same time position (e.g., the same slot and/or the same symbol) by using one CSI report with respect to CSI-ReportConfig.

According to an embodiment, with respect to [Method 1-3], one or more detailed CSI report configurations may be configured for the UE in one CSI-ReportConfig configuration through higher layer signaling. Each detailed CSI report configuration may be associated with one of the multiple CSI-RS resource sets, and the number of the detailed CSI report configurations may be the same as the number of the multiple CSI-RS resource sets.

[Method 1-4]

According to an embodiment, the UE may expect or identify that a single CSI-ReportConfig is associated with one CSI-RS resource set including multiple CSI-RS resources having different numbers of ports. For example, a single CSI-ReportConfig may be configured in a single CSI-AssociatedReportConfigInfo that is higher layer signaling, one CSI-RS resource set may be included in the CSI-ReportConfig, the CSI-RS resource set may include a first CSI-RS resource having two CSI-RS ports, the CSI-RS resource set may include a second CSI-RS resource having four CSI-RS ports, and the CSI-RS resource set may include a third CSI-RS resource having eight CSI-RS ports. Based on the CSI-ReportConfig and the CSI-RS resource set, the UE may compute CSI according to different numbers of ports and report the computed CSI to the base station.

In this case, allowance of multiple CSI-RS resources having different numbers of CSI-RS ports being included in the CSI-RS resource set associated with the CSI-ReportConfig may be indicated through a particular higher layer signaling configured in CSI-AperiodicTriggerState, the CSI-AssociatedReportConfigInfo, the CSI-ReportConfig, and/or the CSI-RS resource set. The particular higher layer signaling may exist in various forms.

For example, if the particular higher layer signaling exists in CSI-ReportConfig, the particular higher layer signaling may exist in a form of new reportQuantity. If the particular higher layer signaling exists in CSI-AperiodicTrigger-State, the particular higher layer signaling may be defined as a new parameter so as to allow CSI calculation based on multiple CSI-RS resources having different numbers of CSI-RS ports instead of a method of selecting one of multiple CSI-RS resources associated with CSI-ReportConfig, based on resourceForChannel. For example, the new parameter may be multipleNrofPortsForresourceForChannel. The name of the parameter is merely an example and does not limit the disclosure. Based on the signaling, the UE may select CSI-RS resources having multiple different numbers of ports associated with a single CSI-ReportConfig, and reflect same for CSI computation and reporting.

According to an embodiment, in order to configure a CSI report corresponding to CSI-RS resources having different numbers of CSI-RS ports, an association between the single CSI-ReportConfig and one CSI-RS resource set may be configured for the UE by the base station, and the CSI-RS resource set may include multiple CSI-RS resources having different numbers of CSI-RS ports. Based on the CSI-ReportConfig associated with the CSI-RS resource set including multiple CSI-RS resources having different numbers of CSI-RS ports, the UE may estimate channels, based on the different numbers of CSI-RS ports, to compute CSI for each channel and then perform CSI report transmission for the estimated channels to the base station on the same time position (e.g., the same slot and/or symbol).

According to an embodiment, with respect to [Method 1-4], one or more detailed CSI report configurations may be configured for the UE in one CSI-ReportConfig configuration through higher layer signaling. Each detailed CSI report configuration may be associated with one of the multiple CSI-RS resources having different numbers of ports configured in the one CSI-RS resource set, and the number of the detailed CSI report configurations may be the same as the number of the multiple CSI-RS resources having different numbers of ports configured in the one CSI-RS resource set.

[Method 1-5]

According to an embodiment, in order for the UE to compute CSI for multiple CSI-RS resources having different numbers of ports and report the computed CSI to the base station, the base station may configure, in one CSI-RS resource set, a CSI-RS resource configured to have the largest number of ports among the different numbers of ports, and the CSI-RS resource set may be associated with a single CSI-ReportConfig.

That is, instead of the method of individually defining CSI-RS resources having different numbers of CSI-RS ports, one CSI-RS resource having the largest number of CSI-RS ports among different numbers of CSI-RS ports for which channel estimation is to be performed may be defined (e.g., the CSI-RS resource may be defined as a CSI-RS resource having eight CSI-RS ports when the UE is to perform channel estimation on two, four, and eight CSI-RS ports), and a method of estimating different numbers of CSI-RS ports by using a part or the entirety of RE mapping of the resource may be used.

That is, a CSI-RS resource is included in one CSI-RS resource set included in CSI-ReportConfig, and the CSI-RS resource has a particular number of CSI-RS ports based on higher layer signaling (e.g., the CSI-RS resource may be defined as a CSI-RS resource having eight CSI-RS ports when channel estimation is to be performed on two, four, and eight CSI-RS ports). However, the UE may estimate channels for some or all CSI-RS ports of the CSI-RS resource, compute individual CSI for the estimated channels, and report the computed CSI.

According to an embodiment, in order to configure a CSI report corresponding to CSI-RS resources having different numbers of CSI-RS ports, an association between the single CSI-ReportConfig and one CSI-RS resource set may be configured for the UE by the base station. The CSI-RS resource set may include a CSI-RS resource having the largest number of CSI-RS ports among different numbers of CSI-RS ports. The UE may estimate channels for some or all CSI-RS ports of the CSI-RS resource, compute individual CSI for each channel, and perform CSI report transmission for the computed CSI to the base station on the same time position (e.g., the same slot and/or symbol).

According to an embodiment, with respect to [Method 1-5], one or more detailed CSI report configurations may be configured for the UE in one CSI-ReportConfig configuration through higher layer signaling. Each detailed CSI report configuration may be associated with one CSI-RS resource configured in one CSI-RS resource set. A detailed CSI report configuration may include a value corresponding to some or all of the CSI-RS ports of the associated one CSI-RS resource. For example, in a case where the number of the CSI-RS ports of the associated one CSI-RS resource is 8, if there are three detailed CSI report configurations, the detailed CSI report configurations may include respective CSI report configurations for two, four, and eight CSI-RS ports.

According to an embodiment, with respect to [Method 1-3] to [Method 1-5] described above, if there are one or more detailed CSI report configurations in CSI-ReportConfig, the UE may expect or identify that at least one piece of configuration information among the higher layer signaling reportQuantity, reportFreqConfiguration, timeRestriction-ForChannelMeasurements, timeRestrictionForInterferenceMeasurements, codebookConfig, dummy, groupBased-BeamReporting, cqi-Table, subbandSize, non-PMI-Port-Indication, semiPersistentOnPUSCH-v1530, semiPersistentOnPUSCH-v1610, aperiodic-v1610, reportQuantity-r16, codebookConfig-r16, cqi-BitsPerSubband-r17, groupBased-BeamReporting-v1710, codebookConfig-r17, sharedCMR-r17, csi-ReportMode-r17, numberOfSingleTRP-CSI-Model-r17, reportQuantity-r17, semiPersistentOnPUSCH-v1720, aperiodic-v1720, or codebookConfig-v1730, which may be configured in CSI-ReportConfig, exists individually for each of the detailed CSI report configurations, or the UE may expect or identify that single configuration information as the at least one piece of configuration information is commonly applied to all the detailed CSI report configurations. For example, with respect to all the detailed CSI report configurations, reportQuantity, reportFreqConfiguration, cqi-Table, and/or subbandSize may be received through common configuration information, and other parameters may be received through configuration information individually for each of the detailed CSI report configurations.

According to an embodiment, the UE may report, as a UE capability, a maximum number of detailed CSI report configurations configurable in a single CSI reportConfig with respect to a detailed CSI report configuration which may be considered for [Method 1-3] to [Method 1-5] described above. For example, the maximum number may be one of integers equal to or smaller than 32. In addition, the UE may report, as a UE capability, a maximum value of a total number of detailed CSI report configurations configurable in the entire CSI reportConfig.

According to an embodiment, with respect to a detailed CSI report configuration which may be considered for [Method 1-3] to [Method 1-5] described above, one of the following items related to a detailed CSI report configuration may be configured for the UE by the base station through higher layer signaling.

- [Method 1-1-1] The UE may autonomously select some or all of detailed CSI report configurations configured by the base station and report same to the base station. In this case, the UE may include, in a CSI report, information on a detailed CSI report configuration selected by the UE among all the detailed CSI report configurations.

- [Method 1-1-2] The number of detailed CSI report configurations which the UE is to select and report to the base station among all detailed CSI report configurations may be configured in a single CSI-ReportConfig for the UE by the base station through higher layer signaling. In this case, the UE may include, in a CSI report, information on a detailed CSI report configuration selected by the UE among all the detailed report configurations.

- [Method 1-1-3] an ID of a particular detailed CSI report configuration which the UE is to report to the base station among all detailed CSI report configurations may be configured in a single CSI-ReportConfig for the UE by the base station through higher layer signaling. In this case, the UE does not include, in a CSI report, the ID of the detailed CSI report configuration configured by the base station, and the UE may include CSI corresponding to each detailed CSI report configuration in the CSI report in a particular order of IDs of detailed CSI report configurations which the base station configures the UE to report. For example, if four detailed CSI report configurations (e.g., ID1 to ID4) are configured in a single CSI-ReportConfig for the UE by the base station through higher layer signaling and the UE is additionally configured by the base station to perform reporting for ID2 and ID3, the UE may include CSI corresponding to detailed CSI report configuration ID2 in a CSI report first in ascending order of IDs, and then include CSI corresponding to detailed CSI report configuration ID3. In this case, in a case where a CSI report of a detailed CSI report configuration is divided into two parts, the UE may include parts 1 of detailed CSI report configurations ID2 and ID3 in a CSI report first and then place parts 2 of detailed CSI report configurations ID2 and ID3, or may include part 1 and part 2 of detailed CSI report configuration ID2 in a CSI report and then include part 1 and part 2 of detailed CSI report configuration ID3 in the CSI report.

- [Method 1-1-4] A combination of at least one of [Method 1-1-1] to [Method 1-1-3] may be configured for the UE by the base station through higher layer signaling.

According to an embodiment, the UE may report whether the UE supports a combination of at least one of [Method 1-1] to [Method 1-5] and [Method 1-1-1] to [Method 1-1-4] above, to the base station through UE capability signaling. A combination of at least one of [Method 1-1] to [Method 1-5] and [Method 1-1-1] to [Method 1-1-4] above may be configured for the UE by the base station through higher layer signaling, may be activated through MAC CE, may be indicated through L1 signaling, or may be notified through a combination of at least one of higher layer signaling, MAC CE, and L1 signaling. Alternatively, the UE may follow a scheme fixedly supported in a specification.

According to an embodiment, a method of requesting PUSCH-based aperiodic channel state information for network energy saving is described.

According to an embodiment of the disclosure, a PUSCH-based aperiodic channel state information request method for network energy saving in a UE and a base station is described. This embodiment may be operated in combination with other embodiments of the disclosure.

According to an embodiment, the UE may report, to the base station as a UE capability, a maximum number of detailed CSI report configurations configurable for the UE in CSI-ReportConfig, a maximum number of detailed CSI report configurations actually reportable by the UE in CSI-ReportConfig, and/or a maximum number of detailed CSI report configuration lists configurable for the UE in CSI-ReportConfig. The UE capability may be limited to an aperiodic CSI report, or may be a value considering all aperiodic, semi-persistent, and periodic CSI reports.

According to an embodiment, the UE may receive an aperiodic CSI report request through a CSI request field in DCI from the base station. If the UE includes one or more detailed CSI report configurations in CSI-ReportConfig for network energy saving, the UE may receive, from the base station, an aperiodic CSI report request based on a CSI-ReportConfig configuration including a detailed CSI report configuration by using at least one of the following methods.

[Method 2-1]

According to an embodiment, one or more CSI-AssociatedReportConfigInfos being associated with each codepoint of a CSI request field in DCI may be configured for the UE. The UE may include a single CSI-ReportConfig in a single CSI-AssociatedReportConfigInfo through higher layer signaling. Multiple detailed CSI report configurations may be configured in a single CSI-ReportConfig for the UE by the base station through higher layer signaling.

Under a higher layer signaling configuration, if a particular codepoint is indicated to the UE by the base station through a CSI request field in DCI, the UE may report, to the base station, an aperiodic CSI report for all the multiple detailed CSI report configurations in CSI-ReportConfig included in CSI-AssociatedReportConfigInfo associated with the codepoint. That is, the UE may need to perform reporting for all the multiple detailed CSI report configurations configured in CSI-ReportConfig by the base station, and the base station may adjust the CSI computation burden of the UE by adjusting the number of detailed CSI report configurations configured in CSI-ReportConfig. However, it may be disadvantageous in that the adjustment of the base station is necessarily semi-static.

According to an embodiment, the base station may configure, for the UE through higher layer signaling, two CSI-ReportConfigs having different two CSI-ReportConfigIds wherein among all pieces of configuration information of the two CSI-ReportConfigs, only the numbers of detailed CSI report configurations are different and the remaining pieces of configuration information are the same. The two CSI-ReportConfigs may be associated with different CSI-AssociatedReportConfigInfos, and the different CSI-AssociatedReportConfigInfos may be associated with a codepoint of the same or different CSI requests or may be triggered by the same or different DCIs received from the base station.

For example, a first CSI-ReportConfig and a second CSI-ReportConfig may be configured for the UE, and a total of four detailed CSI report configurations indicating 2, 4, 8, and 16 antenna ports may be configured in the first CSI-ReportConfig. A total of two detailed CSI report configurations indicating 8 and 16 antenna ports may be configured in the second CSI-ReportConfig, and the remaining configuration information of the first CSI-ReportConfig and the second CSI-ReportConfig may be assumed to be all the same.

The first CSI-ReportConifig may be associated with a first CSI-AssociatedReportConfigInfo, the second CSI-ReportConifig may be associated with a second CSI-AssociatedReportConfigInfo, and the first CSI-AssociatedReportConfigInfo and the second CSI-AssociatedReportConfigInfo may be mapped to the same codepoint or different codepoints in a CSI request field. If the CSI-AssociatedReportConfigInfos are mapped to different codepoints, the base station may transfer a particular codepoint of a CSI request field to the UE, thereby determining a detailed CSI report configuration, among detailed CSI report configurations of CSI-ReportConfig, for which a CSI report is to be received from the UE, or a detailed CSI report configuration for which the UE is to compute and report. This indication may involve a trade-off between the CSI computation overhead at the UE and the reception of information from the UE for network energy saving at the base station. However, different CSI-ReportConfigs including all the same configuration information except for detailed CSI report configurations being configured may correspond to an inefficient higher layer signaling configuration scheme, considering the constraint on the UE capable of receiving up to 48 different CSI-ReportConfig configurations.

[Method 2-2]

According to an embodiment, one or more CSI-AssociatedReportConfigInfos being associated with each codepoint of a CSI request field in DCI may be configured for the UE. The UE may include a single CSI-ReportConfig in a single CSI-AssociatedReportConfigInfo through higher layer signaling. Multiple detailed CSI report configurations may be configured in a single CSI-ReportConfig for the UE.

Under a higher layer signaling configuration, the UE may expect or identify that additional higher layer signaling is configured in CSI-AssociatedReportConfigInfo associated with each codepoint of a CSI request field in DCI. For example, the additional higher layer signaling may be signaling for selecting some or all of the multiple detailed CSI report configurations configured in CSI-ReportConfig included in CSI-AssociatedReportConfigInfo.

- For example, the UE may assume that a first CSI-AssociatedReportConfigInfo is associated with a first codepoint of a CSI request field in DCI and a second CSI-AssociatedReportConfigInfo is associated with a second codepoint. The same CSI-ReportConfig is configured in both the first CSI-AssociatedReportConfigInfo and the second CSI-AssociatedReportConfigInfo, and four detailed CSI report configurations may be included in the CSI-ReportConfig. In this case, the UE may expect that configuration information for selecting some (e.g., first and second detailed CSI report configurations) of the four detailed CSI report configurations included in the CSI-ReportConfig is included in the first CSI-AssociatedReportConfigInfo associated with the first codepoint of the CSI request field. In addition, the UE may expect that configuration information for selecting all (e.g., first to fourth detailed CSI report configurations) of the four detailed CSI report configurations included in the CSI-ReportConfig is included in the second CSI-AssociatedReportConfigInfo associated with the second codepoint of the CSI request field.

- As another example, the UE may assume that a first CSI-AssociatedReportConfigInfo is associated with a first codepoint of a CSI request field in DCI and a second CSI-AssociatedReportConfigInfo is associated with a second codepoint. The same CSI-ReportConfig is configured in both the first CSI-AssociatedReportConfigInfo and the second CSI-AssociatedReportConfigInfo, and two detailed CSI report configuration lists may be included in the CSI-ReportConfig. Each detailed CSI report configuration list may be referred to as a list including one or more detailed CSI report configurations. For example, if the CSI-ReportConfig includes four detailed CSI report configurations, a first detailed CSI report configuration list may include a first detailed CSI report configuration list and a second detailed CSI report configuration, and a second detailed CSI report configuration list may include third and fourth detailed CSI report configurations. In this case, the UE may expect that configuration information for selecting the first list (e.g., including the first and second detailed CSI report configurations) among the two detailed CSI report configuration lists included in the CSI-ReportConfig is included in the first CSI-AssociatedReportConfigInfo associated with the first codepoint of the CSI request field. In addition, the UE may expect that configuration information for selecting the second list (e.g., including the third and fourth detailed CSI report configurations) among the two detailed CSI report configuration lists included in the CSI-ReportConfig is included in the second CSI-AssociatedReportConfigInfo associated with the second codepoint of the CSI request field.

According to an embodiment, the above higher layer signaling is introduced, so that the UE and the base station may configure, in each CSI-ReportConfig, all the multiple detailed CSI report configurations applicable to the CSI-ReportConfig, and select some or all of the multiple detailed CSI report configurations by using additional configuration information which may be included in CSI-AssociatedReportConfigInfo associated with a CSI request codepoint. Through this method, by using different CSI-AssociatedReportConfigInfos associated with the same CSI-ReportConfig, the base station may select, for the UE, different detailed CSI report configurations in the same CSI-ReportConfig so as to adjust the CSI computation overhead at the UE and the information amount for network energy saving.

According to an embodiment, the above higher layer signaling is introduced, whereby the UE may use a method of configuring as much information as possible for multiple detailed CSI report configurations which may exist in CSI-ReportConfig and, when the base station triggers an aperiodic CSI report through a CSI request field, selecting some of the multiple detailed CSI report configurations, similarly to using a method of selecting, by the UE and the base station, one of a plurality NZP-CSI-RS-ResourceSets configured in CSI-ReportConfig for an aperiodic CSI report by using configuration information in CSI-AssociatedReportConfigInfo.

[Method 2-3]

According to an embodiment, one or more CSI-AssociatedReportConfigInfos being associated with each codepoint of a CSI request field in DCI may be configured for the UE. The UE may include a single CSI-ReportConfig in a single CSI-AssociatedReportConfigInfo through higher layer signaling. Multiple detailed CSI report configurations may be configured in a single CSI-ReportConfig for the UE.

Under a higher layer signaling configuration, some or all of the entire detailed CSI report configurations configured in CSI-ReportConfig included in CSI-AssociatedReportConfigInfo associated with a codepoint indicated through a CSI request field in DCI may be indicated to the UE, based on a new field defined in the same DCI or an additional bit in the CSI request field. For example, the new field or the additional bit in a CSI request field may be expressed in a bitmap form according to a maximum number of detailed CSI report configurations or may employ a scheme of indicating a particular combination among all the detailed CSI report configurations. The new field being defined based on other methods may not be excluded.

- In a case of a bitmap form, if a maximum number of detailed CSI report configurations configurable for the UE in CSI-ReportConfig is N, an N-bit bitmap may be used. If a bitmap form is used, even when a maximum number M of detailed CSI report configurations actually reportable by the UE in CSI-ReportConfig is smaller than the maximum number N of detailed CSI report configurations configurable for the UE in CSI-ReportConfig, the length of the field in DCI needs to be N rather than M. Therefore, overhead may increase. For example, if N is equal to 4 and M is equal to 2, the UE may consider or identify 4 bits as a new field. In this case, even if the maximum number of detailed CSI report configurations configurable for the UE in CSI-ReportConfig is N, when the number of detailed CSI report configurations configured in a particular CSI-ReportConfig is smaller than N (e.g., the number is equal to N'), a detailed CSI report configuration for which reporting is to be performed may be indicated to the UE by the base station by considering only N' bits starting from the MSB (or LSB) of the new field. For example, if N is equal to 4 and the number N' of detailed CSI report configurations configured in a particular CSI-ReportConfig is equal to 3, a detailed CSI report configuration for which reporting is to be performed may be indicated to the UE by the base station, based on only 3 bits starting from the MSB (or LSB) of a new field configured by 4 bits. In addition, the UE may expect or identify that the number of bits having a value of 1 in the new field is smaller than or equal to M.
- In a case of a method of indicating a particular combination, if the maximum number of detailed CSI report configurations configurable for the UE in CSI-ReportConfig is N and the maximum number of detailed CSI report configurations actually reportable by the UE in CSI-ReportConfig is M, the UE may consider or identify a bit length capable of representing the number of possible selections of M out of the N configurations as the length of a new field. For example, if N is equal to 4 and M is equal to 2, the UE may consider or identify 3 bits capable of representing a total of six cases as the length of a new field. In this case, even if the maximum number N of detailed CSI report configurations configurable for the UE is 4, when the number of detailed CSI report configurations configured in a particular CSI-ReportConfig is smaller than N (e.g., the number is equal to N'), the UE and the base station may assume to use only as many codepoints as the number of possible selections of M out of the N' configurations, starting from the first codepoint of a new field, and may process the remaining codepoints as reserved. For example, if N is equal to 4, M is equal to 2, and the number N' of detailed CSI report configurations configured in a particular CSI-ReportConfig is equal to 3, the UE and the base station may assume to use three codepoints corresponding to the number of possible selections of M (=2) out of the N'(=3) configurations, starting from the first codepoint among all the eight codepoints of a new field representable by 3 bits and may process the remaining five codepoints as reserved.

- The UE and the base station may expect that a maximum of E detailed CSI report configuration lists are included in CSI-ReportConfig, and may transmit a CSI report for the CSI-ReportConfig by selecting one of E' (<=E) lists through a CSI request field in DCI or a new field. Each detailed CSI report configuration list may be referred to as a list including one or more detailed CSI report configurations. For example, if the UE includes a total of three (=N') detailed CSI report configurations in a particular CSI-ReportConfig and includes a total of two (=E') detailed CSI report configuration lists, a first detailed CSI report configuration list may include a first detailed CSI report configuration, a second detailed CSI report configuration, and a third detailed CSI report configuration. A second detailed CSI report configuration list may include the second detailed CSI report configuration and the third detailed CSI report configuration. In this case, one of the two detailed CSI report configuration lists may be indicated to the UE by the base station through an additional bit of a CSI request field in DCI or a new field, and the UE may report a CSI report corresponding to the detailed CSI report configurations included in the list to the base station. The bit length of the additional bits of the CSI request field or the new field may be related to the value of E and, more specifically, may be the number of bits capable of representing E lists (e.g., the bit length may be expressed as ceil(log2(E)), ceil(.) denote may a ceiling function, and log2(.) may denote a logarithm to base 2.).

According to an embodiment, the UE may report, to the base station as a UE capability, N (a maximum number of detailed CSI report configurations configurable for the UE in CSI-ReportConfig), M (a maximum number of detailed CSI report configurations actually reportable by the UE in CSI-ReportConfig), or E (a maximum number of detailed CSI report configuration lists configurable for the UE in CSI-ReportConfig).

According to an embodiment, when the UE uses a method of selecting some or all of detailed CSI report configurations in CSI-ReportConfig for network energy saving by using a CSI request field in DCI, and an additional bit in the CSI request field or a new field, the UE may expect or identify that there may be a single CSI-ReportConfig including a detailed CSI report configuration among aperiodic CSI reports triggered by the DCI. If there are two or more CSI-ReportConfigs including a detailed CSI report configuration among aperiodic CSI reports triggered by DCI, the UE may expect that the defined new field or additional bit in a CSI request field is commonly applied to all the plurality of CSI-ReportConfigs including a detailed CSI report configuration and triggered by the DCI.

If there are two or more CSI-ReportConfigs including a detailed CSI report configuration among aperiodic CSI reports triggered by DCI, the UE may expect or identify that defined additional bits in a CSI request field or new fields are defined to be as many as the number of the plurality of CSI-ReportConfigs including a detailed CSI report configuration and triggered by the DCI, and are to be applied to the respective CSI-ReportConfigs.

According to an embodiment, when the UE uses a method of selecting some or all of detailed CSI report configurations in CSI-ReportConfig for network energy saving by using a CSI request field in DCI, and an additional bit in the CSI request field or a new field, some or all of multiple detailed CSI report configurations in configured CSI-ReportConfig may be dynamically selected for the UE by the base station. Thus, the UE and the base station may employ the fastest signaling method and consider low latency. However, DCI overhead may be incurred. If the length of the additional bits in the CSI request field or the new field is constrained to account for DCI overhead, some flexibility inherent in L1 signaling may be lost.

[Method 2-4]

According to an embodiment, one or more CSI-AssociatedReportConfigInfos being associated with each codepoint of a CSI request field in DCI may be configured for the UE. The UE may include a single CSI-ReportConfig in a single CSI-AssociatedReportConfigInfo through higher layer signaling. Multiple detailed CSI report configurations may be configured in a single CSI-ReportConfig for the UE. The UE may receive a MAC CE from the base station so that reporting of a CSI report for some or all of multiple detailed CSI report configurations in a single CSI-ReportConfig may be activated.

For example, if there are five detailed CSI report configurations corresponding to 2, 4, 8, 16, and 32 antenna ports in a single CSI-ReportConfig, the UE may receive a MAC CE from the base station to receive activation information relating to which detailed CSI report configurations, among the total of five detailed CSI report configurations, for which the UE is to transmit a CSI report. For example, if three detailed CSI report configurations corresponding to 2, 8, and 32 antenna ports are activated through a MAC CE, and a codepoint of a CSI request including the CSI-ReportConfig is indicated to the UE through DCI, the UE may report a CSI report for the activated three detailed CSI report configurations to the base station.

According to an embodiment, based on whether there is a need for network energy saving at the base station, and the CSI computation burden at the UE, whether to report a CSI report for some or all of detailed CSI report configurations may be activated for the UE through a MAC CE transmitted by the base station, and the UE may report the CSI report.

Although there may be a latency until the UE receives the MAC CE from the base station and activation thereof is completed, it is likely that the situation in which the base station needs to change the amount of information required from the UE for network energy saving does not dynamically change, unlike the layer 1 (layer 1) signaling based on DCI.

Therefore, a method of selecting some or all of the entire detailed CSI report configurations through a MAC CE may provide appropriate signaling flexibility, while not causing unnecessary overhead of CSI-ReportConfig configuration information as in [Method] 2-1.

However, if it is possible to select some or all of the detailed CSI report configurations for only a single CSI-ReportConfig through one MAC CE signaling, multiple MAC CEs may be required when changes for a plurality of CSI-ReportConfigs are needed. To this end, a method of changing detailed CSI report configurations of a maximum of N CSI-ReportConfigs through one MAC CE may also be possible. N may be configured through higher layer signaling, may be fixedly defined in a specification, or may be associated with a maximum length of a MAC CE.

According to an embodiment, the UE may report whether the UE supports at least one of [Method 2-1] to [Method 2-4] above, to the base station through UE capability signaling. At least one of [Method 2-1] to [Method 2-4] may be configured for the UE by the base station through higher layer signaling, may be activated through MAC CE, may be indicated through L1 signaling, or may be notified through a combination of at least one of higher layer signaling, MAC CE, and L1 signaling. Alternatively, the UE may follow a scheme fixedly supported in a specification.

According to an embodiment, the UE and the base station may use a combination of a combination of at least one of [Method 2-1] to [Method 2-4] and a combination of at least one of [Method 1-1-1] to [Method 1-1-4] above. For example, the UE may report a CSI report to the base station only for a particular number of detailed CSI report configurations among multiple detailed CSI report configurations in a particular CSI-ReportConfig from the base station as in [Method 1-1-2] above. For example, if there are four detailed CSI report configurations in a particular CSI-ReportConfig and the UE is notified by the base station to transmit a CSI report for particular two detailed CSI report configurations thereamong, the UE may autonomously select actually reported two detailed CSI report configurations among the four detailed CSI report configurations. To this end, as a method of notifying the UE by the base station, [Method 2-1] based on higher layer signaling, [Method 2-2] for configuring based on another higher layer signaling in CSI-AssociatedReportConfigInfo, and [Method 2-3] for indicating through a new field in DCI or an additional bit in a CSI request field may be considered.

For example, as in [Method 2-2] above, higher layer signaling that indicates the UE to transmit a CSI report for a particular number of detailed CSI report configurations among all the detailed CSI report configurations in a particular CSI-ReportConfig may be additionally configured in CSI-AssociatedReportConfigInfo for the UE by the base station.

According to an embodiment, a method of requesting PUSCH-based semi-persistent channel state information for network energy saving is described.

According to an embodiment of the disclosure, a PUSCH-based semi-persistent channel state information request method for network energy saving in a UE and a base station is described. This embodiment may be operated in combination with other embodiments of the disclosure.

According to an embodiment, the UE may report, to the base station as a UE capability, a maximum number of detailed CSI report configurations configurable for the UE in CSI-ReportConfig, a maximum number of detailed CSI report configurations actually reportable by the UE in CSI-ReportConfig, and/or a maximum number of detailed CSI report configuration lists configurable for the UE in CSI-ReportConfig. The UE capability may be limited to a PUSCH-based semi-persistent CSI report, or may be a value considering all aperiodic, semi-persistent, and periodic CSI reports.

According to an embodiment, the UE may receive a PUSCH-based semi-persistent CSI report request through a CSI request field in DCI from the base station. If one or more detailed CSI report configurations are configured for the UE in CSI-ReportConfig for network energy saving, the UE may receive, from the base station, a PUSCH-based semi-persistent CSI report request based on a CSI-ReportConfig configuration including a detailed CSI report configuration by using a combination of at least one of the following methods.

[Method 3-1]

According to an embodiment, a single CSI-SemiPersistentOnPUSCH-TriggerState being associated with each codepoint of a CSI request field in DCI may be configured for the UE, and the UE may expect that a single CSI-ReportConfigId is included in a single CSI-SemiPersistentOnPUSCH-TriggerState. Therefore, a single CSI-ReportConfig may be indicated through one codepoint of a CSI request field. Multiple detailed CSI report configurations may be configured in a single CSI-ReportConfig for the UE by the base station through higher layer signaling.

According to an embodiment, under a higher layer signaling configuration, if a particular codepoint is indicated to the UE by the base station through a CSI request field in DCI, the UE may report, to the base station, a PUSCH-based semi-persistent CSI report for all the multiple detailed CSI report configurations in CSI-ReportConfig associated with CSI-SemiPersistentOnPUSCH-TriggerState with the codepoint. That is, the UE needs to perform reporting for all the multiple detailed CSI report configurations configured in CSI-ReportConfig by the base station, and the base station may adjust the CSI computation burden of the UE by adjusting the number of detailed CSI report configurations configured in CSI-ReportConfig. However, it may be disadvantageous in that the adjustment of the base station is necessarily semi-static.

According to an embodiment, the base station may configure, for the UE through higher layer signaling, two CSI-ReportConfigs having different two CSI-ReportConfigIds wherein among all pieces of configuration information of the two CSI-ReportConfigs, only the numbers of detailed CSI report configurations are different and the remaining pieces of configuration information are the same. The two CSI-ReportConfigs may be associated with different CSI-SemiPersistentOnPUSCH-TriggerStates, and the different CSI-SemiPersistentOnPUSCH-TriggerStates may be associated with codepoints of different CSI requests and thus be triggered by different DCIs from the base station. For example, a first CSI-ReportConfig and a second CSI-ReportConfig may be configured for the UE, and a total of four detailed CSI report configurations indicating 2, 4, 8, and 16 antenna ports may be configured in the first CSI-ReportConfig. A total of two detailed CSI report configurations indicating 8 and 16 antenna ports may be configured in the second CSI-ReportConfig, and the remaining configuration information of the first CSI-ReportConfig and the second CSI-ReportConfig may be assumed to be all the same. The first CSI-ReportConifig may be associated with a first CSI-SemiPersistentOnPUSCH-TriggerState, the second CSI-ReportConifig may be associated with a second CSI-SemiPersistentOnPUSCH-Trigger-State, and the first CSI-SemiPersistentOnPUSCH-TriggerState and the second CSI-SemiPersistentOnPUSCH-Trigger-State may be mapped to different codepoints.

In this case, the base station may transfer a particular codepoint of a CSI request field to the UE, thereby determining a detailed CSI report configuration, among detailed CSI report configurations of a corresponding CSI-ReportConfig, for which a CSI report is to be received from the UE, or a detailed CSI report configuration for which the UE is to compute and report. This indication may involve a trade-off between the CSI computation overhead at the UE and the reception of information from the UE for network energy saving at the base station. However, different CSI-ReportConfigs including all the same configuration information except for detailed CSI report configurations being configured may correspond to an inefficient higher layer signaling configuration scheme in consideration of the constraint on the UE capable of receiving up to 48 different CSI-ReportConfig configurations and the points that the number of CSI-SemiPersistentOnPUSCH-TriggerStates is up to 64 and only a single CSI-ReportConfig is associable with a single CSI-SemiPersistentOnPUSCH-TriggerState.

[Method 3-2]

According to an embodiment, a single CSI-SemiPersistentOnPUSCH-TriggerState being associated with each codepoint of a CSI request field in DCI may be configured for the UE, and the UE may expect that a single CSI-ReportConfigId is included in a single CSI-SemiPersistentOnPUSCH-TriggerState. Therefore, a single CSI-ReportConfig may be indicated through one codepoint of a CSI request field. Multiple detailed CSI report configurations may be configured in a single CSI-ReportConfig for the UE by the base station through higher layer signaling.

According to an embodiment, under a higher layer signaling configuration, the UE may expect that additional higher layer signaling is configured in CSI-SemiPersistentOnPUSCH-TriggerState associated with each codepoint of a CSI request field in DCI. The additional higher layer signaling may be signaling for selecting some or all of the multiple detailed CSI report configurations configured in CSI-ReportConfig associated with CSI-SemiPersistentOnPUSCH-TriggerState.

- For example, the UE may assume that a first CSI-SemiPersistentOnPUSCH-TriggerState is associated with a first codepoint of a CSI request field in DCI and a second CSI-SemiPersistentOnPUSCH-TriggerState is associated with a second codepoint. The same CSI-ReportConfig is configured in both the first CSI-SemiPersistentOnPUSCH-TriggerState and the second CSI-SemiPersistentOnPUSCH-TriggerState, and four detailed CSI report configurations may be included in the CSI-ReportConfig. In this case, the UE may expect that configuration information for selecting some (e.g., first and second detailed CSI report configurations) of the four detailed CSI report configurations included in the CSI-ReportConfig is included in the first CSI-SemiPersistentOnPUSCH-TriggerState associated with the first codepoint of the CSI request field. In addition, the UE may expect that configuration information for selecting all (e.g., first to fourth detailed CSI report configurations) of the four detailed CSI report configurations included in the CSI-ReportConfig is included in the second CSI-SemiPersistentOnPUSCH-TriggerState associated with the second codepoint of the CSI request field.

- As another example, the UE may assume that a first CSI-SemiPersistentOnPUSCH-TriggerState is associated with a first codepoint of a CSI request field in DCI and a second CSI-SemiPersistentOnPUSCH-TriggerState is associated with a second codepoint. The same CSI-ReportConfig is configured in both the first CSI-SemiPersistentOnPUSCH-TriggerState and the second CSI-SemiPersistentOnPUSCH-TriggerState, and two detailed CSI report configuration lists may be included in the CSI-ReportConfig. Each detailed CSI report configuration list may be referred to as a list including one or more detailed CSI report configurations. For example, if the CSI-ReportConfig includes four detailed CSI report configurations, a first detailed CSI report configuration list may include a first detailed CSI report configuration and a second detailed CSI report configuration. A second detailed CSI report configuration list may include a third detailed CSI report configuration and a fourth detailed CSI report configuration. In this case, the UE may expect or identify that configuration information for selecting the first list (e.g., including the first and second detailed CSI report configurations) of the two detailed CSI report configuration lists included in the CSI-ReportConfig is included in the first CSI-SemiPersistentOnPUSCH-TriggerState associated with the first codepoint of the CSI request field. In addition, the UE may expect or identify that configuration information for selecting the second list (e.g., including the third and fourth detailed CSI report configurations) among the two detailed CSI report configuration lists included in the CSI-ReportConfig is included in the second CSI-SemiPersistentOnPUSCH-TriggerState associated with the second codepoint of the CSI request field.

According to an embodiment, higher layer signaling is introduced, so that the UE and the base station may configure, in each CSI-ReportConfig, all the multiple detailed CSI report configurations applicable to the CSI-Report-Config, and select some or all of the multiple detailed CSI report configurations by using additional configuration information which may be included in CSI-SemiPersistentOnPUSCH-TriggerState associated with a CSI request codepoint. Through this method, by using different CSI-SemiPersistentOnPUSCH-TriggerStates associated with the same CSI-ReportConfig, the base station may select, for the UE, different detailed CSI report configurations in the same CSI-ReportConfig so as to adjust the CSI computation overhead at the UE and the information amount for network energy saving.

[Method 3-3]

According to an embodiment, a single CSI-SemiPersistentOnPUSCH-TriggerState being associated with each codepoint of a CSI request field in DCI may be configured for the UE, and the UE may expect or identify that a single CSI-ReportConfigId is included in a single CSI-SemiPersistentOnPUSCH-TriggerState. Therefore, a single CSI-ReportConfig may be indicated through one codepoint of a CSI request field. Multiple detailed CSI report configurations may be configured in a single CSI-ReportConfig for the UE by the base station through higher layer signaling.

According to an embodiment, under a higher layer signaling configuration, some or all of the entire detailed CSI report configurations configured in CSI-ReportConfig associated with CSI-SemiPersistentOnPUSCH-TriggerState associated with a codepoint indicated through a CSI request field in DCI may be indicated to the UE, based on a new field defined in the same DCI or an additional bit in the CSI request field. For example, the new field or the additional bit in a CSI request field may be expressed in a bitmap form according to a maximum number of detailed CSI report configurations or may employ a scheme of indicating a particular combination among all the detailed CSI report configurations. The new field being defined based on other methods may not be excluded.

- In a case of a bitmap form, if a maximum number of detailed CSI report configurations configurable for the UE in CSI-ReportConfig is N, an N-bit bitmap may be used. If a bitmap form is used, even when a maximum number M of detailed CSI report configurations actually reportable by the UE in CSI-ReportConfig is smaller than the maximum number N of detailed CSI report configurations configurable for the UE in CSI-ReportConfig, the length of the field in DCI needs to be N rather than M. Therefore, overhead may increase. For example, if N is equal to 4 and M is equal to 2, the UE may consider or identify 4 bits as a new field. In this case, even if the maximum number of detailed CSI report configurations configurable for the UE in CSI-ReportConfig is N, when the number of detailed CSI report configurations configured in a particular CSI-ReportConfig is smaller than N (e.g., the number is equal to N'), a detailed CSI report configuration for which reporting is to be performed may be indicated to the UE by the base station by considering only N' bits starting from the MSB (or LSB) of the new field. For example, if N is equal to 4 and the number N' of detailed CSI report configurations configured in a particular CSI-ReportConfig is equal to 3, a detailed CSI report configuration for which reporting is to be performed may be indicated to the UE by the base station, based on only 3 bits starting from the MSB (or LSB) of a new field configured by 4 bits. In addition, the UE may expect or identify that the number of bits having a value of 1 in the new field is smaller than or equal to M.
- In a case of a method of indicating a particular combination, if the maximum number of detailed CSI report configurations configurable for the UE in CSI-ReportConfig is N and the maximum number of detailed CSI report configurations actually reportable by the UE in CSI-ReportConfig is M, the UE may consider a bit length capable of representing the number of possible selections of M out of the N configurations as the length of a new field. For example, if N is equal to 4 and M is equal to 2, the UE may consider or identify 3 bits capable of representing a total of six cases as the length of a new field. In this case, even if the maximum number N of detailed CSI report configurations configurable for the UE is 4, when the number of detailed CSI report configurations configured in a particular CSI-ReportConfig is smaller than N (e.g., the number is equal to N'), the UE and the base station may assume to use only as many codepoints as the number of possible selections of M out of the N' configurations, starting from the first codepoint of a new field, and may process the remaining codepoints as reserved. For example, if N is equal to 4, M is equal to 2, and the number N' of detailed CSI report configurations configured in a particular CSI-ReportConfig is equal to 3, the UE and the base station may assume to use three codepoints corresponding to the number of possible selections of M (=2) out of the N'(=3) configurations, starting from the first codepoint among all the eight codepoints of a new field representable by 3 bits and may process the remaining five codepoints as reserved.

- The UE and the base station may expect that a maximum of E detailed CSI report configuration lists are included in CSI-ReportConfig, and may transmit a CSI report for the CSI-ReportConfig by selecting one of E' (<=E) lists through a CSI request field in DCI or a new field. Each detailed CSI report configuration list may be referred to as a list including one or more detailed CSI report configurations. For example, if the UE includes a total of three (=N') detailed CSI report configurations in a particular CSI-ReportConfig and includes a total of two (=E') detailed CSI report configuration lists, a first detailed CSI report configuration list may include a first detailed CSI report configuration, a second detailed CSI report configuration, and a third detailed CSI report configuration. A second detailed CSI report configuration list may include the second detailed CSI report configuration and the third detailed CSI report configuration. In this case, one of the two detailed CSI report configuration lists may be indicated to the UE by the base station through an additional bit of a CSI request field in DCI or a new field. The UE may report a CSI report corresponding to the detailed CSI report configurations included in the list to the base station. The bit length of the additional bits of the CSI request field or the new field may be related to the value of E and, more specifically, may be the number of bits capable of representing E lists (e.g., the bit length may be expressed as ceil(log2(E)), ceil(.) denote may a ceiling function, and log2(.) may denote a logarithm to base 2.).

According to an embodiment, the UE may report, to the base station as a UE capability, N (a maximum number of detailed CSI report configurations configurable for the UE in CSI-ReportConfig), M (a maximum number of detailed CSI report configurations actually reportable by the UE in CSI-ReportConfig), and/or E (a maximum number of detailed CSI report configuration lists configurable for the UE in CSI-ReportConfig).

According to an embodiment, when the UE uses a method of selecting some or all of detailed CSI report configurations in CSI-ReportConfig for network energy saving by using a CSI request field in DCI, and an additional bit in the CSI request field or a new field, the UE may expect or identify that there may be a single CSI-ReportConfig including a detailed CSI report configuration among aperiodic CSI reports triggered by the DCI.

If there are two or more CSI-ReportConfigs including a detailed CSI report configuration among aperiodic CSI reports triggered by DCI, the UE may expect or identify that the defined new field or additional bit in a CSI request field is commonly applied to all the plurality of CSI-ReportConfigs including a detailed CSI report configuration and triggered by the DCI. If there are two or more CSI-ReportConfigs including a detailed CSI report configuration among aperiodic CSI reports triggered by DCI, the UE may expect or identify that defined additional bits in a CSI request field or new fields are defined to be as many as the number of the plurality of CSI-ReportConfigs including a detailed CSI report configuration and triggered by the DCI, and are to be applied to the respective CSI-ReportConfigs.

According to an embodiment, when the UE uses a method of selecting some or all of detailed CSI report configurations in CSI-ReportConfig for network energy saving by using a CSI request field in DCI, and an additional bit in the CSI request field or a new field, some or all of multiple detailed CSI report configurations in configured CSI-ReportConfig may be dynamically selected for the UE by the base station. Thus, the UE and the base station may employ the fastest signaling method and consider low latency. However, DCI overhead may be incurred. If the length of the additional bits in the CSI request field or the new field is constrained to account for DCI overhead, the UE and the base station may lost some flexibility inherent in L1 signaling.

[Method 3-4]

According to an embodiment, a single CSI-SemiPersistentOnPUSCH-TriggerState being associated with each codepoint of a CSI request field in DCI may be configured for the UE, and the UE may expect or identify that a single CSI-ReportConfigId is included in a single CSI-SemiPersistentOnPUSCH-TriggerState. Therefore, a single CSI-ReportConfig may be indicated through one codepoint of a CSI request field. Multiple detailed CSI report configurations may be configured in a single CSI-ReportConfig for the UE by the base station through higher layer signaling.

According to an embodiment, the UE may receive a MAC CE from the base station so that reporting of a CSI report for some or all of the multiple detailed CSI report configurations in the single of CSI-ReportConfig may be activated. For example, if there are five detailed CSI report configurations corresponding to 2, 4, 8, 16, and 32 antenna ports in a single CSI-ReportConfig, the UE may receive a MAC CE from the base station to receive activation information relating to which detailed CSI report configurations, among the total of five detailed CSI report configurations, for which the UE is to transmit a CSI report. For example, if three detailed CSI report configurations corresponding to 2, 8, and 32 antenna ports are activated through a MAC CE, and a codepoint of a CSI request including the CSI-ReportConfig is indicated to the UE through DCI, the UE may report a CSI report for the activated three detailed CSI report configurations to the base station.

According to an embodiment, based on whether there is a need for network energy saving at the base station, and the CSI computation burden at the UE, whether to report a CSI report for some or all of detailed CSI report configurations may be activated for the UE through a MAC CE transmitted by the base station, and the UE may report the CSI report. Although there may be a latency until the UE receives the MAC CE from the base station and activation thereof is completed, it is likely that the situation in which the base station needs to change the amount of information required from the UE for network energy saving does not dynamically change, unlike the L1 signaling based on DCI. Therefore, a method of selecting some or all of the entire detailed CSI report configurations through a MAC CE may provide appropriate signaling flexibility, while not causing unnecessary overhead of CSI-ReportConfig configuration information as in [Method] 3-1.

However, if it is possible to select some or all of the detailed CSI report configurations for only a single CSI-ReportConfig through one MAC CE signaling, multiple MAC CEs may be required when changes for a plurality of CSI-ReportConfigs are needed. To this end, a method of changing detailed CSI report configurations of a maximum of N CSI-ReportConfigs through one MAC CE may also be possible. N may be configured through higher layer signaling, may be fixedly defined in a specification, or may be associated with a maximum length of a MAC CE.

According to an embodiment, the UE may report whether the UE supports a combination of at least one of [Method 3-1] to [Method 3-4] above, to the base station through UE capability signaling. A combination of at least one of [Method 3-1] to [Method 3-4] above may be configured for the UE by the base station through higher layer signaling, may be activated through MAC CE, may be indicated through L1 signaling, or may be notified through a combination of at least one of higher layer signaling, MAC CE, and L1 signaling. Alternatively, the UE may follow a scheme fixedly supported in a specification.

According to an embodiment, the UE and the base station may use a combination of a combination of at least one of [Method 3-1] to [Method 3-4] and a combination of at least one of [Method 1-1-1] to [Method 1-1-4] above. For example, the UE may transmit a CSI report to the base station only for a particular number of detailed CSI report configurations among multiple detailed CSI report configurations in a particular CSI-ReportConfig from the base station as in [Method 1-1-2] above. For example, if there are four detailed CSI report configurations in a particular CSI-ReportConfig and the UE is notified by the base station to transmit a CSI report for particular two detailed CSI report configurations thereamong, the UE may autonomously select actually reported two detailed CSI report configurations among the four detailed CSI report configurations. To this end, as a method of notifying the UE by the base station, [Method 3-1] based on higher layer signaling, [Method 3-2] for configuring based on another higher layer signaling in CSI-SemiPersistentOnPUSCH-TriggerState, and [Method 3-3] for indicating through a new field in DCI or an additional bit in a CSI request field may be considered. For example, as in [Method 3-2] above, higher layer signaling that indicates the UE to transmit a CSI report for a particular number of detailed CSI report configurations among all the detailed CSI report configurations in a particular CSI-ReportConfig may be additionally configured in CSI-SemiPersistentOnPUSCH-TriggerState for the UE by the base station.

According to an embodiment, p0alpha in semiPersistentOnPUSCH in the higher layer signaling CSI-Report-Config may be configured for the UE by the base station, and the configured p0alpha (e.g., P0-PUSCH-AlphaSetId) may indicate p0 and alpha values used for power control of a PUSCH including a semi-persistent CSI report and transmitted from the UE.

According to an embodiment, in a case where a unified TCI state described above is configured in a particular serving cell for the UE by the base station through higher layer signaling, that is, in a case where the higher layer signaling unifiedTCI-State Type is configured in the serving cell, when the UE performs power control of a PUSCH transmitted from the UE in the same serving cell, the UE may use p0, alpha, and closedLoopIndex values configurable through p0AlphaSetforPUSCH-r17 included in the higher layer signaling ul-powerControl-r17 included in the unified TCI state indicated to the UE (e.g., joint TCI (TCI-State) or separate UL TCI (TCI-UL-State)).

Therefore, in a case where a unified TCI state described above is configured in a particular serving cell for the UE by the base station through higher layer signaling, that is, in a case where the higher layer signaling unifiedTCI-StateType is configured in the serving cell, a combination of at least one of the following methods may be considered as a method of processing p0alpha in semiPersistentOnPUSCH in CSI-ReportConfig.

- Use of P0alpha (Used even in case of UTCI)

    ▪ Regardless of whether the higher layer signaling unifiedTCI-StateType is configured or not configured in the serving cell, if reportConfigType in CSI-ReportConfig is configured as semiPersistentOnPUSCH, p0alpha may be always configured in semiPersistentOnPUSCH for the UE by the base station. If the higher layer signaling unifiedTCI-StateType is not configured in the serving cell, the UE may use p0alpha as a power control parameter when transmitting a PUSCH including a semi-persistent CSI report. In addition, even if the higher layer signaling unifiedTCI-StateType is configured in the serving cell, the UE may not use p0, alpha, and closedLoopIndex values configurable through p0AlphaSetforPUSCH-r17 included in the higher layer signaling ul-powerControl-r17 included in the unified TCI state indicated to the UE (e.g., joint TCI (TCI-State) or separate UL TCI (TCI-UL-State)), and may use p0alpha as a power control parameter used when transmitting a PUSCH including a semi-persistent CSI report.

- Disregard of P0alpha (description modified, always configured)

■ Regardless of whether the higher layer signaling unifiedTCI-StateType is configured or not configured for the UE in the serving cell, if reportConfigType in CSI-ReportConfig is configured as semiPersistentOnPUSCH, p0alpha may be always configured in semiPersistentOnPUSCH for the UE by the base station. If the higher layer signaling unifiedTCI-StateType is configured for the UE in the serving cell, the UE may disregard the P0alpha, and use p0, alpha, and closedLoopIndex values configurable through p0AlphaSetforPUSCH-r17 included in the higher layer signaling ul-powerControl-r17 included in the unified TCI state indicated to the UE (e.g., joint TCI (TCI-State) or separate UL TCI (TCI-UL-State)), as a power control parameter when transmitting a PUSCH including a semi-persistent CSI report. If the higher layer signaling unifiedTCI-StateType is not configured in the serving cell, the UE may use p0alpha as a power control parameter used when transmitting a PUSCH including a semi-persistent CSI report.

- Change of P0alpha configuration condition (Cond NoUnifiedTCI, OPTIONAL configured)

■ The UE may consider a condition for configuring the P0alpha according to whether a unified TCI state is configured. This condition may be referred to as Cond NoUnifiedTCI (OPTIONAL, Need R), and the P0alpha may be optionally (OPTIONAL, Need R) configured for the UE according to a particular condition. If the higher layer signaling unifiedTCI-StateType is configured for the UE in the serving cell, and/or if reportConfigType in CSI-ReportConfig is configured as semiPersistentOnPUSCH, p0alpha may not be configured in semiPersistentOn-PUSCH for the UE by the base station. In this case, the UE may use p0, alpha, and closedLoopIndex values configurable through p0AlphaSetforPUSCH-r17 included in the higher layer signaling ul-powerControl-r17 included in the unified TCI state indicated to the UE (e.g., joint TCI (TCI-State) or separate UL TCI (TCI-UL-State)), as a power control parameter used when transmitting a PUSCH including a semi-persistent CSI report. If the higher layer signaling unifiedTCI-StateType is not configured in the serving cell, and/or if reportConfigType in CSI-ReportConfig is configured as semiPersistentOnPUSCH, the UE may expect that the p0alpha is configured therefor, and use the p0alpha as a power control parameter used when transmitting a PUSCH including a semi-persistent CSI report.

According to an embodiment, a method of requesting PUCCH-based semi-persistent channel state information for network energy saving is described.

According to an embodiment of the disclosure, a PUCCH-based semi-persistent channel state information request method for network energy saving in a UE and a base station is described. This embodiment may be operated in combination with other embodiments of the disclosure.

According to an embodiment, the UE may report, to the base station as a UE capability, a maximum number of detailed CSI report configurations configurable for the UE in CSI-ReportConfig, a maximum number of detailed CSI report configurations actually reportable by the UE in CSI-ReportConfig, and/or a maximum number of detailed CSI report configuration lists configurable for the UE in CSI-ReportConfig. The UE capability may be limited to a PUCCH-based semi-persistent CSI report, or may be a value considering all aperiodic, semi-persistent, and periodic CSI reports.

The UE may receive a PUCCH-based semi-persistent CSI report request from the base station through a MAC CE. For the PUCCH-based semi-persistent CSI report, reportConfigType in the higher layer signaling CSI-ReportConfig may be configured for the UE as semiPersistentOnPUSCH. If the UE includes one or more detailed CSI report configurations in CSI-ReportConfig, as in the above embodiments, for network energy saving, the UE may receive, from the base station, a PUCCH-based semi-persistent CSI report request based on a CSI-ReportConfig configuration including a detailed CSI report configuration by using a combination of at least one of the following methods.

[Method 4-1]

According to an embodiment, the UE may receive a MAC CE of FIG. 12 from the base station and transmit a PUCCH-based semi-persistent CSI report. That is, the UE needs to report CSI reports for all CSI-ReportConfigs activated through a MAC CE, and the UE may need to perform reporting even for all detailed CSI report configurations configured in each CSI-ReportConfig. That is, the UE needs to perform reporting for all the multiple detailed CSI report configurations configured in CSI-ReportConfig by the base station, and the base station may adjust the CSI computation burden of the UE by adjusting the number of detailed CSI report configurations configured in CSI-ReportConfig. However, it may be disadvantageous in that the adjustment of the base station is necessarily semi-static.

According to an embodiment, the UE may receive activation for a maximum of four PUCCH-based semi-persistent CSI reports within one bandwidth part by using CSI-ReportConfig having no detailed CSI report configuration. The UE may report, as a UE capability, a maximum number of PUCCH-based semi-persistent CSI reports for which the UE is able to receive activation, when receiving activation for PUCCH-based semi-persistent CSI reports within one bandwidth part by using CSI-ReportConfig having a detailed CSI report configuration.

According to an embodiment, the base station may configure, for the UE through higher layer signaling, two CSI-ReportConfigs having different two CSI-ReportConfigIds wherein among all pieces of configuration information of the two CSI-ReportConfigs, only the numbers of detailed CSI report configurations are different and the remaining pieces of configuration information are the same (in this case, reportSlotConfig and/or pucch-CSI-ResourceList may be different). The two CSI-ReportConfigs may be transferred to the UE through the same or different MAC CEs. For example, a first CSI-ReportConfig and a second CSI-ReportConfig may be configured for the UE, and a total of four detailed CSI report configurations indicating 2, 4, 8, and 16 antenna ports may be configured in the first CSI-ReportConfig. A total of two detailed CSI report configurations indicating 8 and 16 antenna ports may be configured in the second CSI-ReportConfig. The remaining configuration information of the first CSI-ReportConfig and the second CSI-ReportConfig may be assumed to be all the same. The first CSI-ReportConfig and the second CSI-ReportConfig may be indicated through the same or different MAC CEs. In this case, the base station may adjust a BWP ID field and CSI-ReportConfigId for the UE through the same or different MAC CEs, thereby determining a detailed CSI report configuration, among detailed CSI report configurations of a corresponding CSI-ReportConfig, for which a CSI report is to be received from the UE, and/or a detailed CSI report configuration for which the UE is to compute and report.

This indication may involve a trade-off between the CSI computation overhead at the UE and the reception of information from the UE for network energy saving at the base station. However, different CSI-ReportConfigs including all the same configuration information except for detailed CSI report configurations being configured may correspond to an inefficient higher layer signaling configuration scheme, considering the constraint on the UE capable of receiving up to 48 different CSI-ReportConfig configurations.

[Method 4-2]

According to an embodiment, the UE may receive a MAC CE from the base station and transmit a PUCCH-based semi-persistent CSI report, and the MAC CE may have a part partially identical to the structure of FIG. 12 and may be a different form. If multiple detailed CSI report configurations are included in CSI-ReportConfig indicated through a MAC CE from the base station, the UE may be notified by the base station through a particular field in the MAC CE of a detailed CSI report configuration, among the multiple detailed CSI report configurations in the indicated CSI-ReportConfig, which the UE is to use and transmit a PUCCH-based semi-persistent CSI report.

For example, the UE may define a MAC CE including, in addition to the two octets as in FIG. 12 described above, a total of four fields, for respective $S_i$s, indicating a detailed CSI report configuration which the UE is to use, among multiple detailed CSI report configurations in CSI-ReportConfig, based on a maximum number of detailed CSI report configurations configurable for the UE in CSI-ReportConfig.

If the maximum number of detailed CSI report configurations configurable in CSI-ReportConfig is smaller than or equal to 4, the UE may add two octets to the two octets in the MAC CE of FIG. 12, configure fields each having four bits, and map the fields to the respective $S_i$ fields. A detailed CSI report configuration, among all the detailed CSI report configurations included in CSI-ReportConfig corresponding to each $S_i$, which the UE considers and transmits a PUCCH-based semi-persistent CSI report may be indicated to the UE through a corresponding 4-bit field. For example, if the maximum number of detailed CSI report configurations configurable in CSI-ReportConfig is 8, the UE may add four octets to the two octets in the MAC CE of FIG. 12, and may map each field configured by N (<=8) bits starting from the rightmost bit of a corresponding additional octet to a corresponding $S_i$ field, and a detailed CSI report configuration, among all the detailed CSI report configurations included in CSI-ReportConfig corresponding to each $S_i$, which is to be used to transmit a PUCCH-based semi-persistent CSI report may be indicated to the UE through a corresponding N (<=8)-bit field.

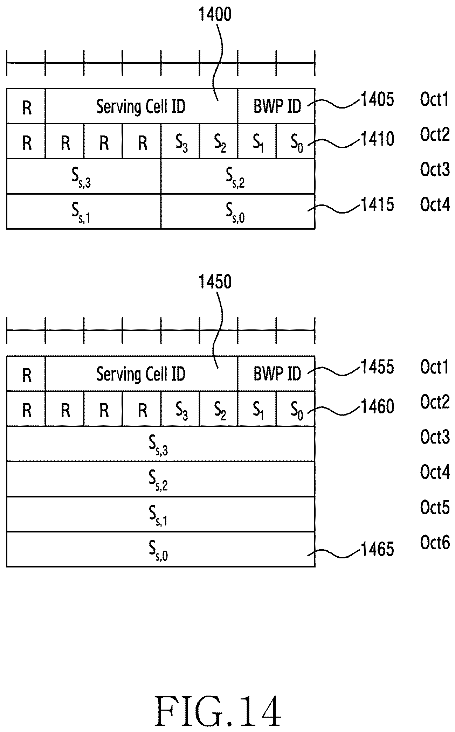

FIG. 14 is a diagram illustrating a structure of a MAC CE indicating activation or deactivation of a PUCCH-based semi-persistent CSI report in consideration of a detailed CSI report configuration according to an embodiment.

Referring to FIG. 14, a MAC CE indicating activation or deactivation of a semi-persistent CSI report transmitted through a PUCCH, based on a detailed CSI report configuration according to an embodiment may be identified or determined through a MAC subheader including an LCID or an extended LCID (eLCID). The MAC CE indicating activation or deactivation of a CSI report may have a fixed length of 32 bits or 48 bits. A description of each field in the MAC CE may be as follows.

- Serving Cell ID 1400 or 1405: This field may indicate an ID of a serving cell to which the MAC CE is to be applied, and the length thereof may be 5 bits.
- BWP ID 1405 or 1455: This field may indicate an uplink bandwidth part to which the MAC CE is to be applied, may indicate a codepoint in a bandwidth part indicator field in DCI, and the length thereof may be 2 bits.
- $S_i$ 1410 or 1460: This field may indicate an activated or deactivated state of a semi-persistent CSI report configuration in the higher layer signaling csi-ReportConfigToAddModList.

   - An $S_0$ field may include a PUCCH resource associated with or included in a bandwidth part indicated through the BWP ID field, and the $S_0$ field may indicate a CSI report configuration which has type configured as semiPersistentOnPUCCH and the lowest ID (e.g., CSI-ReportConfigId) among CSI-ReportConfigs in the higher layer signaling csi-ReportConfigToAddModList.

- An $S_1$ field may include a PUCCH resource associated with or included in a bandwidth part indicated through the BWP ID field, and the $S_1$ field may indicate a CSI report configuration which has type configured as semiPersistentOnPUCCH and the second lowest ID (e.g., CSI-ReportConfigId) among CSI-ReportConfigs in the higher layer signaling csi-ReportConfigToAddModList.
- In the same way, $S_2$ and $S_3$ fields may also be considered.
- PUCCH format 2, 3, or 4 may be available for the PUCCH resource associated with or included in a particular bandwidth part, and the format may be identified or recognized using an ID of a PUCCH resource configured in the higher layer signaling PUCCH-Config.
- If the number of semi-persistent CSI report configurations which have type configured as semiPersistentOnPUCCH among CSI-ReportConfigs in the higher layer signaling csi-ReportConfigToAddModList and include a PUCCH resource associated with or included in a bandwidth part indicated through the BWP ID field is smaller than i+1, the UE may disregard the $S_i$ field. For example, if the number of the semi-persistent CSI report configurations is 2, the UE may interpret the $S_0$ field and the $S_1$ field, but disregard the $S_2$ field and the $S_3$ field.
- If the $S_i$ field is indicated as 1, the UE may understand that this implies that a corresponding semi-persistent CSI report configuration needs to be activated.
- If the $S_i$ field is indicated as 0, the UE may understand that this implies that a corresponding semi-persistent CSI report configuration needs to be deactivated.

- $S_{s,i}$ 1415 or 1465: The $S_{s,i}$ field may indicate a detailed CSI report configuration, the activation or deactivation of which is indicated among multiple detailed CSI report configurations included in CSI-ReportConfig indicating a semi-persistent CSI report configuration in the higher layer signaling csi-ReportConfigToAddModList. The length of the field may be configured to, in a case of a bitmap form, be the same as a length corresponding to the maximum number of detailed CSI report configurations configurable in CSI-ReportConfig and, in a case of a different form, be smaller or larger than that of a bitmap form.

- For example, if the maximum number of detailed CSI report configurations configurable in CSI-ReportConfig is 4, the UE may configure one field having four bits as the length of the field and map same to each $S_i$ field (1415). A detailed CSI report configuration, among all the detailed CSI report configurations included in CSI-ReportConfig corresponding to each $S_i$, which the UE considers and transmits a PUCCH-based semi-persistent CSI report may be indicated to the UE through a corresponding 4-bit field. The field may be a bitmap form and indicate, to the UE, which detailed CSI report configuration is to be activated or deactivated among four or fewer detailed CSI report configurations. For example, when the UE receives four detailed CSI report configurations in CSI-ReportConfig corresponding to the $S_0$ field in the MAC CE from the base station, if the base station is to active or deactivate, for the UE, a first detailed CSI report configuration and a third detailed CSI report configuration among the four detailed CSI report configurations, the UE may expect, through the $S_{s,0}$ field 1415 in the MAC CE from the base station, that the first and third bits starting from the MSB (or LSB) are 1 and the second and fourth bits are 0.

  ♦ If the CSI-ReportConfig corresponding to the $S_i$ field 1410 does not include a detailed CSI report configuration, the UE may disregard the $S_{s,i}$ field 1415.

- As another example, if the maximum number of detailed CSI report configurations configurable in CSI-ReportConfig is 8, the UE may configure fields each having a 8-bit length and map same to the respective $S_i$ fields (1465), and a detailed CSI report configuration, among all the detailed CSI report configurations included in CSI-ReportConfig corresponding to each $S_i$, which is to be considered to transmit a PUCCH-based semi-persistent CSI report may be indicated to the UE through a corresponding 8-bit field. The field may be a bitmap form and indicate, to the UE, which detailed CSI report configuration is to be activated or deactivated among eight or fewer detailed CSI report configurations. For example, when the UE receives eight detailed CSI report configurations in CSI-ReportConfig corresponding to the $S_0$ field in the MAC CE from the base station, if the base station is to active or deactivate, for the UE, a first detailed CSI report configuration and a third detailed CSI report configuration among the eight detailed CSI report configurations, the UE may expect, through the $S_{s,0}$ field 1415 in the MAC CE from the base station, that the first and third bits starting from the MSB (or LSB) are 1 and the second and fourth bits are 0.

  ♦ If the CSI-ReportConfig corresponding to the $S_i$ field 1460 does not include a detailed CSI report configuration, the UE may disregard the $S_{s,i}$ field 1465.

▪ As another example, as well as a 4-bit or 8-bit bitmap, the UE may assume, as described above, that a field indicating a particular combination of detailed CSI report configurations is included in a MAC CE, and the UE may also assume that a field for selecting one of detailed CSI report configuration lists configured in CSI-ReportConfig is included in a MAC CE. In this case, if an $S_{s,i}$ field is defined to indicate a combination or allow selection of one of lists described above, the field may be configured by fewer or more bits than those of the $S_{s,i}$ field 1415 or 1465.

- R: This indicates a reserved bit and may be configured as 0.

According to an embodiment, through a MAC CE in FIG. 14, a maximum of four PUCCH-based semi-persistent CSI reports may be activated for the UE in a particular bandwidth part, and one or more detailed CSI report configurations may be activated for each PUCCH-based semi-persistent CSI report. In this case, the UE may report, to the base station as a UE capability, a maximum number of PUCCH-based semi-persistent CSI reports including one or more detailed CSI report configurations, among the PUCCH-based semi-persistent CSI reports activatable within the particular bandwidth part.

In addition, a maximum number of PUCCH-based semi-persistent CSI reports actually activatable by the base station may be configured for the UE by the base station through higher layer signaling, as a response from the base station for the UE capability. In addition, the UE may report, as a UE capability to the base station, a maximum number of all detailed CSI report configurations included in all the PUCCH-based semi-persistent CSI reports activatable within the particular bandwidth part. In addition, a maximum number of all detailed CSI report configurations included in PUCCH-based semi-persistent CSI reports actually activatable by the base station may be configured for the UE by the base station through higher layer signaling, as a response from the base station for the UE capability. According to higher layer signaling from the base station, the UE may determine a total bit length of a MAC CE.

According to an embodiment, through a MAC CE in FIG. 14, a maximum of four CSI-ReportConfigs which include a PUCCH resource associated with or included in a bandwidth part indicated through the BWP ID field 1405 or 1455 and have type configured as semiPersistentOnPUCCH and the lowest IDs (e.g., CSI-ReportConfigId) among CSI-Report-Configs in the higher layer signaling csi-ReportConfigToAddModList may be selected for the UE by the base station in a method of indicating the $S_i$ field 1410 or 1460. Therefore, if at least four CSI-ReportConfigs having the four lowest IDs among one or more CSI-ReportConfigs having no detailed CSI report configuration, which are configured by the base station through higher layer signaling, are configured for the UE, CSI-ReportConfig having a detailed CSI report configuration may fail to be activated for the UE through a corresponding MAC CE. On the contrary, if CSI-ReportConfigs having a detailed CSI report configuration are configured in a sequence from the lowest ID to the highest, CSI-ReportConfig having no detailed CSI report configuration may fail to be activated for the UE through a MAC CE and this may cause a CSI computation burden to the UE. Therefore, IDs of CSI-ReportConfig including or not including a detailed CSI report configuration may be properly configured for the UE by the base station and the UE may report PUCCH-based semi-persistent CSI reports to the base station through a MAC CE.

[Method 4-3]

According to an embodiment, the UE may receive a MAC CE from the base station to receive an activation indication for reporting of a PUCCH-based semi-persistent CSI report including multiple detailed CSI report configurations. For example, a MAC CE may indicate, to the UE through an individual field in the MAC CE, whether reporting of a PUCCH-based semi-persistent CSI report for which the UE receives an activation indication from the base station includes a detailed CSI report configuration.

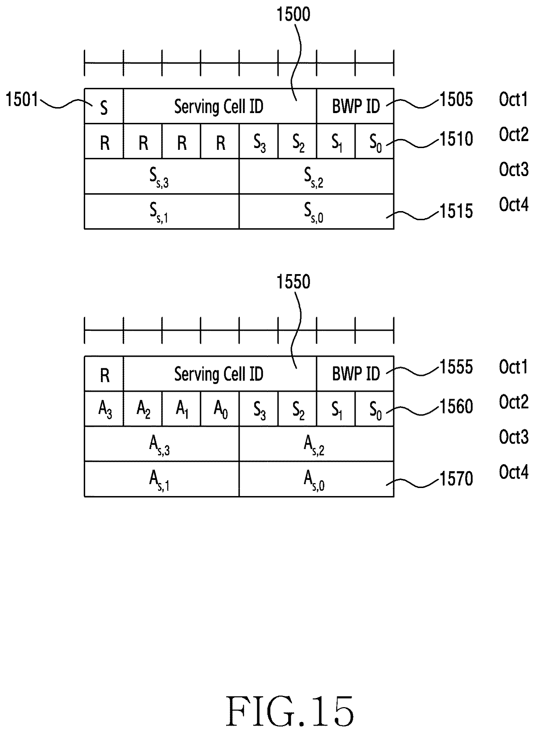

FIG. 15 is a diagram illustrating a structure of another MAC CE indicating activation or deactivation of a PUCCH-based semi-persistent CSI report in consideration of a detailed CSI report configuration according to an embodiment.

Referring to FIG. 15, a MAC CE indicating activation or deactivation of a semi-persistent CSI report transmitted through a PUCCH in consideration of a detailed CSI report configuration according to an embodiment may be determined or identified through a MAC subheader including an LCID or an extended LCID (eLCID), and the MAC CE indicating activation or deactivation of a semi-persistent CSI report may have a variable bit length.

According to an embodiment, the upper MAC CE illustrated in FIG. 15 may individually indicate, through a particular field, two options on whether a PUCCH-based semi-persistent CSI report to be activated or deactivated through the MAC CE includes a detailed CSI report configuration or not, and only one type of CSI-ReportConfig including or not including a detailed CSI report configuration may be able to be activated or deactivated through the MAC CE.

- Serving Cell ID 1500: The serving Cell ID field may indicate an ID of a serving cell to which the MAC CE is to be applied, and the length thereof may be 5 bits.
- BWP ID 1505: The BWP ID field may indicate an uplink bandwidth part to which the MAC CE is to be applied, may indicate a codepoint in a bandwidth part indicator field in DCI, and the length thereof may be 2 bits.

- S 1501: The S field may indicate, to the UE, whether activation or deactivation is for CSI-ReportConfig including a detailed CSI report configuration or for CSI-ReportConfig not including a detailed CSI report configuration. If the corresponding bit is 0, this may indicate activation or deactivation for CSI-ReportConfig not including a detailed CSI report configuration, and if the bit is 1, this may indicate a case including a detailed CSI report configuration.

- $S_i$ 1510: The $S_i$ field may indicate an activated or deactivated state of a semi-persistent CSI report configuration in the higher layer signaling csi-ReportConfigToAddModList.

  ■ If the S field 1501 is 1, the $S_i$ field may indicate a CSI report configuration which includes a PUCCH resource associated with or included in a bandwidth part indicated through the BWP ID field and has type configured as semiPersistentOnPUCCH, includes a detailed CSI report configuration, and has the (i+1)th lowest ID (e.g., CSI-ReportConfigId) among CSI-ReportConfigs in the higher layer signaling csi-ReportConfigToAddModList.

    ♦ If the number of semi-persistent CSI report configurations which have type configured as semiPersistentOnPUCCH among CSI-ReportConfigs in the higher layer signaling csi-ReportConfigToAddModList, include a PUCCH resource associated with or included in a bandwidth part indicated through the BWP ID field, and include a detailed CSI report configuration is smaller than i+1, the UE may disregard the $S_i$ field. For example, if the number of the semi-persistent CSI report configurations is 2, the UE may interpret the $S_0$ field and the $S_1$ field, but disregard the $S_2$ field and the $S_3$ field.

  ■ If the S field 1501 is 0, the $S_i$ field may indicate a CSI report configuration which includes a PUCCH resource associated with or included in a bandwidth part indicated through the BWP ID field and has type configured as semiPersistentOnPUCCH, does not include a detailed CSI report configuration, and has the (i+1)th lowest ID (e.g., CSI-ReportConfigId) among CSI-ReportConfigs in the higher layer signaling csi-ReportConfigToAddMod-List.

    ♦ If the number of semi-persistent CSI report configurations which have type configured as semiPersistentOnPUCCH among CSI-ReportConfigs in the higher layer signaling csi-ReportConfigToAddModList, include a PUCCH resource associated with or included in a bandwidth part indicated through the BWP ID field, and do not include a detailed CSI report configuration is smaller than i+1, the UE may disregard the $S_i$ field. For example, if the number of the semi-persistent CSI report configurations is 2, the UE may interpret the $S_0$ field and the $S_1$ field, but disregard the $S_2$ field and the $S_3$ field.

  ■ PUCCH format 2, 3, or 4 may be available for the PUCCH resource associated with or included in a particular bandwidth part, and the format may be identified or recognized using an ID of a PUCCH resource configured in the higher layer signaling PUCCH-Config.
  ■ If the $S_i$ field is indicated as 1, the UE may understand that this implies that a corresponding semi-persistent CSI report configuration needs to be activated.
  ■ If the $S_i$ field is indicated as 0, the UE may understand that this implies that a corresponding semi-persistent CSI report configuration needs to be deactivated.

- $S_{s,i}$ 1515: The $S_{s,i}$ field may indicate, when the S field 1501 is 1, a detailed CSI report configuration, the activation or deactivation of which is indicated among multiple detailed CSI report configurations included in CSI-ReportConfig indicating a semi-persistent CSI report configuration in the higher layer signaling csi-ReportConfigToAddModList. The length of the field may be configured to, in a case of a bitmap form, be the same as a length corresponding to the maximum number of detailed CSI report configurations configurable in CSI-ReportConfig and, in a case of a different form, be smaller or larger than that of a bitmap form. If the S field 1501 is 1, all octets having the $S_{s,i}$ field 1515 may not exist.

  ■ For example, if the maximum number of detailed CSI report configurations configurable in CSI-ReportConfig is 4, the UE may configure fields each having a 4-bit length and map same to the respective $S_i$ fields (1515), and a detailed CSI report configuration, among all the detailed CSI report configurations included in CSI-ReportConfig corresponding to each $S_i$, which is to be considered to transmit a PUCCH-based semi-persistent CSI report may be indicated to the UE through a corresponding 4-bit field. The field may be a bitmap form and indicate, to the UE, which detailed CSI report configuration is to be activated or deactivated among four or fewer detailed CSI report configurations. For example, when the UE receives four detailed CSI report configurations in CSI-ReportConfig corresponding to the $S_0$ field in the MAC CE from the base station, if the base station is to active or deactivate, for the UE, a first detailed CSI report configuration and a third detailed CSI report configuration among the four detailed CSI report configurations, the UE may expect or identify, through the $S_{s,0}$ field 1515 in the MAC CE from the base station, that the first and third bits starting from the MSB (or LSB) are 1 and the second and fourth bits are 0.

▪ As another example, as well as a 4-bit bitmap, a 8-bit bitmap may also be considered, the UE may assume that a field indicating a particular combination of detailed CSI report configurations is included in a MAC CE, and the UE may also assume that a field for selecting one of detailed CSI report configuration lists configured in CSI-ReportConfig is included in a MAC CE. In this case, if the $S_{s,i}$ field 1515 is defined to indicate a combination or allow selection of one of lists, the field may be configured by fewer or more bits than those of the $S_{s,i}$ field 1515.

- R: This indicates a reserved bit and may be configured as 0.

Through the lower MAC CE illustrated in FIG. 15, the UE may receive, from the base station, activation or deactivation of a PUCCH-based semi-persistent CSI report by considering both CSI-ReportConfig including a detailed CSI report configuration and CSI-ReportConfig not including a detailed CSI report configuration.

- Serving Cell ID 1550: The serving Cell ID field may indicate an ID of a serving cell to which the MAC CE is to be applied, and the length thereof may be 5 bits.
- BWP ID 1555: The BWP ID field may indicate an uplink bandwidth part to which the MAC CE is to be applied, may indicate a codepoint in a bandwidth part indicator field in DCI, and the length thereof may be 2 bits.
- $A_i$ 1565: The $A_i$ field may indicate an activated or deactivated state of a semi-persistent CSI report configuration for a particular CSI-ReportConfig including a detailed CSI report configuration among CSI-ReportConfigs in the higher layer signaling csi-ReportConfigToAddModList.

▪ The $A_i$ field may indicate a CSI report configuration which includes a PUCCH resource associated with or included in a bandwidth part indicated through the BWP ID field and has type configured as semiPersistentOn-PUCCH, includes a detailed CSI report configuration, and has the (i+1)th lowest ID (e.g., CSI-ReportConfigId) among CSI-ReportConfigs in the higher layer signaling csi-ReportConfigToAddModList.
▪ PUCCH format 2, 3, or 4 may be available for a PUCCH resource associated with or included in a particular bandwidth part, and the format may be identified using an ID of a PUCCH resource configured in the higher layer signaling PUCCH-Config.
▪ If the number of semi-persistent CSI report configurations which have type configured as semiPersistentOn-PUCCH among CSI-ReportConfigs in the higher layer signaling csi-ReportConfigToAddModList, include a PUCCH resource associated with or included in a bandwidth part indicated through the BWP ID field, and include a detailed CSI report configuration is smaller than i+1, the UE may disregard the $A_i$ field. For example, if the number of the semi-persistent CSI report configurations is 2, the UE may interpret the $A_0$ field and the $A_1$ field, but disregard the $A_2$ field and the $A_3$ field.
▪ If the $A_i$ field is indicated as 1, the UE may understand that this implies that a semi-persistent CSI report configuration needs to be activated.
▪ If the $A_i$ field is indicated as 0, the UE may understand that this implies that a semi-persistent CSI report configuration needs to be deactivated.

- $A_{s,i}$ 1570: The $A_{s,i}$ field may indicate a detailed CSI report configuration, the activation or deactivation of which is indicated among multiple detailed CSI report configurations included in CSI-ReportConfig indicating a semi-persistent CSI report configuration in the higher layer signaling csi-ReportConfigToAddModList. The length of the field may be configured to, in a case of a bitmap form, be the same as a length corresponding to the maximum number of detailed CSI report configurations configurable in CSI-ReportConfig and, in a case of a different form, be smaller or larger than that of a bitmap form. If all the $A_i$ fields 1570 are 0, all octets having the $A_{s,i}$ field 1570 may not exist.

▪ For example, if the maximum number of detailed CSI report configurations configurable in CSI-ReportConfig is 4, the UE may configure fields each having a 4-bit length and map same to the respective $A_i$ fields (1565), and a detailed CSI report configuration, among all the detailed CSI report configurations included in CSI-ReportConfig corresponding to each $A_i$, which is to be considered to transmit a PUCCH-based semi-persistent CSI report may be indicated to the UE through a corresponding 4-bit field. The field may be a bitmap form and indicate, to the UE, which detailed CSI report configuration is to be activated or deactivated among four or fewer detailed CSI report configurations. For example, if the UE receives four detailed CSI report configurations in CSI-ReportConfig corresponding to the $A_0$ field in the MAC CE from the base station, and if the base station is to active or deactivate, for the UE, first and third detailed CSI report configurations among the four detailed CSI report configurations, the UE may expect, through the $A_{s,0}$ field 1570 in the MAC CE from the base station, that the first and third bits starting from the MSB (or LSB) are 1 and the second and fourth bits are 0.

- As another example, as well as a 4-bit bitmap, a 8-bit bitmap may also be considered, the UE may assume that a field indicating a particular combination of detailed CSI report configurations is included in a MAC CE, and the UE may also assume that a field for selecting one of detailed CSI report configuration lists configured in CSI-ReportConfig is included in a MAC CE. In this case, if the $A_{s,i}$ field 1570 is defined to indicate a combination or allow selection of one of lists, the field may be configured by fewer or more bits than those of the $A_{s,i}$ field 1570.

- $S_i$ 1570: The $S_i$ field may indicate an activated or deactivated state of a semi-persistent CSI report configuration for a particular CSI-ReportConfig not including a detailed CSI report configuration among CSI-ReportConfigs in the higher layer signaling csi-ReportConfigToAddModList.

  - The $S_i$ field may indicate a CSI report configuration which includes a PUCCH resource associated with or included in a bandwidth part indicated through the BWP ID field and has type configured as semiPersistentOn-PUCCH, does not include a detailed CSI report configuration, and has the (i+1)th lowest ID (e.g., CSI-ReportConfigId) among CSI-ReportConfigs in the higher layer signaling csi-ReportConfigToAddModList.
  - PUCCH format 2, 3, or 4 may be available for the PUCCH resource associated with or included in a particular bandwidth part, and the format may be identified or recognized using an ID of a PUCCH resource configured in the higher layer signaling PUCCH-Config.
  - If the number of semi-persistent CSI report configurations which have type configured as semiPersistentOn-PUCCH among CSI-ReportConfigs in the higher layer signaling csi-ReportConfigToAddModList and include a PUCCH resource associated with or included in a bandwidth part indicated through the BWP ID field is smaller than i+1, the UE may disregard the $S_i$ field. For example, if the number of the semi-persistent CSI report configurations is 2, the UE may interpret the $S_0$ field and the $S_1$ field, but disregard the $S_2$ field and the $S_3$ field.
  - If the $S_i$ field is indicated as 1, the UE may understand that this implies that a corresponding semi-persistent CSI report configuration needs to be activated.
  - If the $S_i$ field is indicated as 0, the UE may understand that this implies that a corresponding semi-persistent CSI report configuration needs to be deactivated.

- R: This indicates a reserved bit and may be configured as 0.

According to an embodiment, through the upper MAC CE in FIG. 15, a maximum of four PUCCH-based semi-persistent CSI reports may be activated for the UE in a particular bandwidth part, and all the activated semi-persistent CSI reports may include or not include a detailed CSI report configuration. The base station may exclude a situation where CSI-ReportConfigId is differentially activated or deactivated for the UE according to whether the CSI-ReportConfigId includes a detailed CSI report configuration, described above. In addition, through the lower MAC CE in FIG. 15, the UE may be able to activate or deactivate both types of CSI-ReportConfig including or not including a detailed CSI report configuration. In this case, the UE may report, to the base station as a UE capability, a maximum number of CSI-ReportConfigs including or not including a detailed CSI report configuration, and a maximum number of CSI reports actually reportable by the UE. Through a single MAC CE described above, it may be possible to activate or deactivate CSI-ReportConfig including or not including a detailed CSI report configuration.

[Method 4-4]

According to an embodiment, the UE may receive a MAC CE from the base station so that reporting of a PUCCH-based semi-persistent CSI report for some or all of multiple detailed CSI report configurations in a single CSI-ReportConfig may be activated. For example, if there are five detailed CSI report configurations corresponding to 2, 4, 8, 16, and 32 antenna ports in a single CSI-ReportConfig, the UE may receive a MAC CE from the base station to receive activation information relating to which detailed CSI report configurations, among the total of five detailed CSI report configurations, for which the UE is to transmit a CSI report. For example, when three detailed CSI report configurations corresponding to 2, 8, and 32 antenna ports have been activated through a MAC CE, if a codepoint of a CSI request including the CSI-ReportConfig is indicated to the UE through DCI, the UE may report a CSI report for the activated three detailed CSI report configurations to the base station.

According to an embodiment, in consideration of whether there is a need for network energy saving at the base station, and the CSI computation burden at the UE, whether to report a CSI report for some or all of detailed CSI report configurations may be activated for the UE through a MAC CE transmitted by the base station, and the UE may report the CSI report. Although there may be a latency until the UE receives the MAC CE from the base station and activation thereof is completed, it is likely that the situation in which the base station needs to change the amount of information required from the UE for network energy saving does not dynamically change, unlike the L1 signaling based on DCI. Therefore, a method of selecting some or all of the entire detailed CSI report configurations through a MAC CE may provide appropriate signaling flexibility, while not causing unnecessary overhead of CSI-ReportConfig configuration information as in [Method] 4-1. However, if it is possible to select some or all of the detailed CSI report configurations for only a single CSI-ReportConfig through one MAC CE signaling, multiple MAC CEs may be required when changes for a plurality of CSI-ReportConfigs are needed. To this end, a method of changing detailed CSI report configurations of a maximum of N CSI-ReportConfigs through one MAC CE may also be possible. N may be configured through higher layer signaling, may be fixedly defined in a specification, or may be associated with a maximum length of a MAC CE.

According to an embodiment, [Method 4-4] may also be applicable to a PUCCH-based periodic CSI report, and the PUCCH-based periodic CSI report may include multiple detailed CSI report configurations. Therefore, when [Method 4-4] above is applied to a PUCCH-based periodic CSI report, the UE may be activated by the base station through MAC CE to transmit a CSI report for some or all of multiple detailed CSI report configurations configured in CSI-ReportConfig for a PUCCH-based periodic CSI report.

For example, if there are five detailed CSI report configurations corresponding to 2, 4, 8, 16, and 32 antenna ports in CSI-ReportConfig for a PUCCH-based periodic CSI report, the UE may receive a MAC CE from the base station to receive activation information relating to which detailed CSI report configurations, among the total of five detailed CSI report configurations, for which the UE is to transmit a CSI report. For example, when three detailed CSI report configurations corresponding to 2, 8, and 32 antenna ports have been activated through a MAC CE, the UE may report a PUCCH-based periodic CSI report for the three detailed CSI report configurations after 3 ms after PUCCH transmission including a HARQ-ACK corresponding to a PDSCH including the MAC CE received from the base station.

According to an embodiment, the UE may report whether the UE supports a combination of at least one of [Method 4-1] to [Method 4-4] above, to the base station through UE capability signaling. A combination of at least one of [Method 4-1] to [Method 4-4] above may be configured for the UE by the base station through higher layer signaling, may be activated through MAC CE, may be indicated through L1 signaling, or may be notified through a combination of at least one of higher layer signaling, MAC CE, and L1 signaling. Alternatively, the UE may follow a scheme fixedly supported in a specification.

According to an embodiment, the UE and the base station may use a combination of a combination of at least one of [Method 4-1] to [Method 4-4] and a combination of at least one of [Method 1-1-1] to [Method 1-1-4] above. For example, the UE may report a CSI report to the base station only for a particular number of detailed CSI report configurations among multiple detailed CSI report configurations in a particular CSI-ReportConfig from the base station as in [Method 1-1-2]. For example, if there are four detailed CSI report configurations in a particular CSI-ReportConfig and the UE is notified by the base station to transmit a CSI report for particular two detailed CSI report configurations thereamong, the UE may autonomously select actually reported two detailed CSI report configurations among the four detailed CSI report configurations. To this end, as a method of notifying the UE by the base station, [Method 4-1] based on higher layer signaling, and [Method 4-2] or [Method 4-3] for activating or deactivating based on a modified MAC CE may be considered.

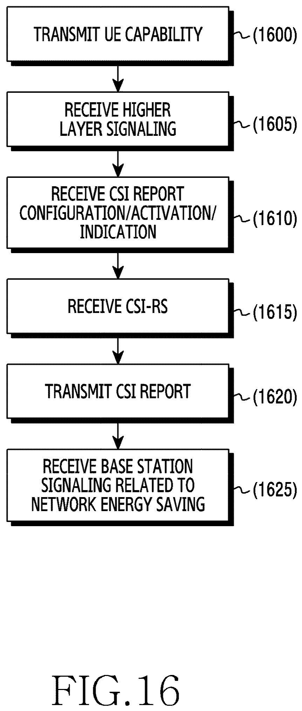

FIG. 16 is a diagram illustrating an operation of a UE according to an embodiment.

Referring to FIG. 16, in operation 1600 according to an embodiment, a UE may transmit a UE capability to a base station. The UE capability which may be transmitted by the UE may include a combination of at least one of the above various CSI report and CSI-RS resource set configuration methods, a maximum number of CSI-RS ports per cell or per all the cells, a maximum number of CSI-RS resources per cell or per all the cells, [Method 1-1] to [Method 1-5], [Method 1-1-1] to [Method 1-1-4], [Method 2-1] to [Method 2-4], [Method 3-1] to [Method 3-4], and [Method 4-1] to [Method 4-4].

According to an embodiment, in operation 1605, the UE may receive higher layer signaling from the base station. The higher layer signaling which may be received by the UE from the base station may be configuration information including a combination of at least one of the above various CSI report and CSI-RS resource set configuration methods, a maximum number of CSI-RS ports per cell or per all the cells, a maximum number of CSI-RS resources per cell or per all the cells, [Method 1-1] to [Method 1-5] above, [Method 1-1-1] to [Method 1-1-4], [Method 2-1] to [Method 2-4], [Method 3-1] to [Method 3-4] above, and [Method 4-1] to [Method 4-4] above.

According to an embodiment, in operation 1610, the UE may receive a configuration, activation, and/or an indication for a CSI report for network energy saving from the base station. In this case, the UE may receive a configuration, activation, and/or an indication for a CSI report for network energy saving from the base station through a combination of at least one of higher layer signaling, a MAC CE, and L1 signaling indicating a combination of at least one of [Method 2-1] to [Method 2-4] above, [Method 3-1] to [Method 3-4] above, and [Method 4-1] to [Method 4-4].

According to an embodiment, in operation 1615, the UE may receive a CSI-RS from the base station. A CSI-RS resource of the CSI-RS may follow various methods for configuring a CSI report and a CSI-RS resource set for the UE by the base station, mentioned in the above embodiments. For example, the UE may receive multiple CSI-RS resources having different numbers of ports, or may receive one CSI-RS resource, but perform channel estimation based on different numbers of CSI-RS ports for the CSI-RS resource through a CSI report configuration.

According to an embodiment, in operation 1620, the UE may transmit a CSI report to the base station. In this case, the UE may determine whether to transmit some or all of corresponding CSI reports to the base station, according to the above various CSI report and CSI-RS resource set configuration methods and various CPU calculation methods. In addition, a UCI form for the CSI report may vary according to various methods of considering a restriction during CSI computation. In addition, the UE may perform channel estimation for CSI-RS resources corresponding to different numbers of CSI-RS ports and calculate and report corresponding CSI. The UE may also receive one CSI-RS resource, but estimate channels based on different numbers of CSI-RS ports for the CSI-RS resource through a CSI report configuration and calculate and report CSI corresponding to the estimated channels. The UE may perform CSI report transmission by being notified by the base station of a combination of at least one of [Method 2-1] to [Method 2-4], [Method 3-1] to [Method 3-4], and [Method 4-1] to [Method 4-4]. The UE may transmit a corresponding CSI report for scheduling and network operation for network energy saving of the base station, and the base station may perform scheduling and network operation for the purpose of network energy saving, based on the corresponding information.

According to an embodiment, in operation 1625, the UE may receive base station signaling associated with network energy saving from the base station. For example, the base station may receive the CSI report of the UE and transmit signaling associated with network energy saving. The base station may transmit signaling associated with to network energy saving to UEs capable of reporting such a CSI report, or all normal UEs. For example, the signaling associated with network energy saving may be signaling obtained by combining at least one of higher layer signaling, MAC CE, and L1 signaling, such as DCI, which is transmitted from the base station and indicates that the base station is to control downlink transmission power. The signaling associated with network energy saving may be UE-specific or UE common. As another example, signaling indicating that the power of the base station is cut off may not be excluded. The UE having received such signaling may understand that the base station performs a network energy saving operation.

The above-described flowchart illustrates an exemplary method that may be implemented according to the principle of the disclosure, and various changes may be made to the method shown in the flowchart herein. For example, although shown as a series of operations, various operations in each figure may overlap, occur in parallel, occur in a different order, or occur multiple times. In another example, the operations may be omitted or replaced by other operations.

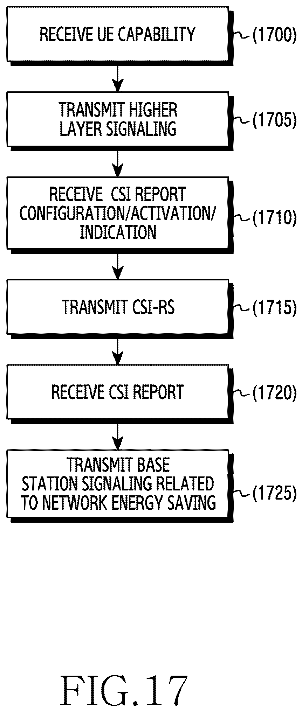

FIG. 17 is a diagram illustrating an operation of a base station according to an embodiment.

According to an embodiment, in operation 1700, a base station may receive a UE capability from a UE. The UE capability (e.g., information on the UE capability) which may be received by the base station may include a combination of at least one of a CSI report and CSI-RS resource set configuration method, a maximum number of CSI-RS ports per cell or per all the cells, a maximum number of CSI-RS resources per cell or per all the cells, [Method 1-1] to [Method 1-5], [Method 1-1-1] to [Method 1-1-4], [Method 2-1] to [Method 2-4], [Method 3-1] to [Method 3-4], and [Method 4-1] to [Method 4-4], which are mentioned in the above embodiments.

According to an embodiment, in operation 1705, the base station may transmit higher layer signaling to the UE. The higher layer signaling which may be transmitted by the base station to the UE may be configuration information including a combination of at least one of a CSI report and CSI-RS resource set configuration methods, a maximum number of CSI-RS ports per cell or per all the cells, a maximum number of CSI-RS resources per cell or per all the cells, [Method 1-1] to [Method 1-5], [Method 1-1-1] to [Method 1-1-4], [Method 2-1] to [Method 2-4], [Method 3-1] to [Method 3-4], and [Method 4-1] to [Method 4-4], which are mentioned in the above embodiments.

According to an embodiment, in operation 1710, the base station may transmit a configuration, activation, and/or an indication for a CSI report for network energy saving to the UE. In this case, the base station may transmit a configuration, activation, and/or an indication for a CSI report for network energy saving to the UE through a combination of at least one of higher layer signaling, a MAC CE, and L1 signaling indicating a combination of at least one of [Method 2-1] to [Method 2-4], [Method 3-1] to [Method 3-4], and [Method 4-1] to [Method 4-4] above.

According to an embodiment, in operation 1715, the base station may transmit a CSI-RS to the UE. A CSI-RS resource of the CSI-RS may follow a method for configuring a CSI report and a CSI-RS resource set for the UE by the base station. For example, the base station may transmit multiple CSI-RS resources having different numbers of ports. Alternatively, the base station may transmit one CSI-RS resource, but the UE may perform channel estimation based on different numbers of CSI-RS ports for the CSI-RS resource through a CSI report configuration.

According to an embodiment, in operation 1720, the base station may receive a CSI report from the UE. In this case, the CSI report may correspond to some or all of CSI reports configured as CSI reports determined by the UE to be transmitted to the base station according to a CSI report and CSI-RS resource set configuration method and a CPU calculation method which are mentioned in the above embodiments. In addition, a UCI form included in the CSI report may vary according to the method of considering a restriction during CSI computation. In addition, the CSI report may include CSI based on channel estimation for CSI-RS resources corresponding to different numbers of CSI-RS ports, and/or CSI according to a result of transmitting one CSI-RS resource, but performing channel estimation based on different numbers of CSI-RS ports for the CSI-RS resource through a CSI report configuration. The UE may perform CSI report transmission by being notified by the base station of a combination of at least one of [Method 2-1] to [Method 2-4], [Method 3-1] to [Method 3-4], and [Method 4-1] to [Method 4-4] above. The UE may transmit a corresponding CSI report for scheduling and network operation for network energy saving of the base station, and the base station may perform scheduling and network operation for the purpose of network energy saving, based on the corresponding information.

According to an embodiment, in operation 1725, the base station may transmit base station signaling related to network energy saving to the UE. For example, the base station may receive the CSI report of the UE, and transmit signaling to UEs capable of reporting such a CSI report or all normal UEs, the signaling obtained by combining at least one of higher layer signaling, MAC CE, and L1 signaling, such as DCI, which indicates that the base station is to control downlink transmission power. The signaling related to network energy saving may be UE-specific or UE common. As another example, signaling indicating that the power of the base station is cut off may not be excluded. The UE having received such signaling may understand that the base station performs a network energy saving operation.

The above-described flowchart illustrates an exemplary method that may be implemented according to the principle of the disclosure, and various changes may be made to the method shown in the flowchart herein. For example, although shown as a series of operations, various operations in each figure may overlap, occur in parallel, occur in a different order, or occur multiple times. In another example, the operations may be omitted or replaced by other operations.

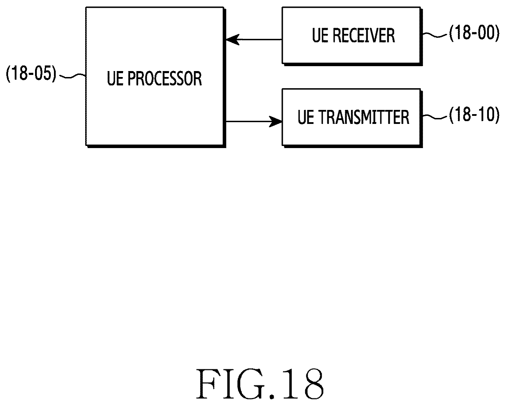

FIG. 18 illustrates a structure of a UE in a wireless communication system according to an embodiment of the disclosure.

Referring to FIG. 18, the UE may include a transceiver, which refers to a UE receiver 18-00 and a UE transmitter 18-10 as a whole, a memory (not illustrated), and a UE processor 18-05 (or UE controller or processor). The UE transceiver 18-00 and 18-10, the memory, and the UE processor 18-05 may operate according to the above-described communication methods of the UE. However, components of the UE are not limited to the above-described example. For example, the UE may include a larger or smaller number of components than the above-described components. Furthermore, the transceiver, the memory, and the processor may be implemented in the form of a single chip.

The UE described in FIG. 18 may correspond to the UE described in FIGS. 1 to 17. For example, the components of the UE described in FIG. 18 may substantially correspond to the components of the UE described in FIGS. 1 to 17.

According an embodiment, the transceiver may transmit and/or receive signals with base stations. The signals may include control information and data. To this end, the transceiver may include a radio frequency (RF) transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

According to an embodiment, the transceiver may receive signals through a radio channel, output the same to the processor, and transmit signals output from the processor through the radio channel.

According to an embodiment, the memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

According to an embodiment, the processor (or at least one processor) may control a series of processes so that the UE can operate according to the above-described embodiments of the disclosure. For example, the processor may control components of the UE to receive DCI configured in two layers so as to simultaneously receive multiple PDSCHs. The processor may include multiple processors, and the processor may perform the operation of controlling the components of the UE by executing programs stored in the memory.

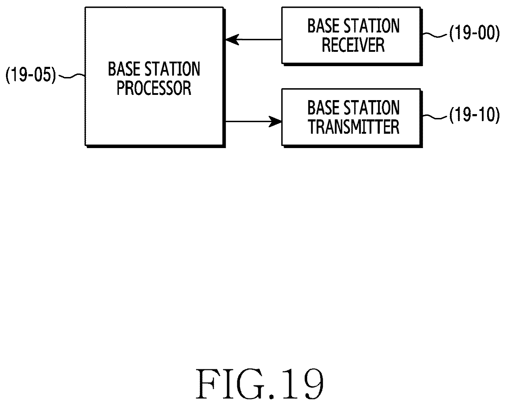

FIG. 19 illustrates a structure of a base station in a wireless communication system according to an embodiment.

Referring to FIG. 19, the base station may include a transceiver, which refers to a base station receiver 19-00 and a base station transmitter 19-10 as a whole, a memory (not illustrated), and a base station processor 19-05 (or base station controller or processor). The base station transceiver 19-00 and 19-10, the memory, and the base station processor 19-05 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The base station in FIG. 19 may correspond to the base station described in FIGS. 1 to 17. For example, the components of the base station described in FIG. 19 may substantially correspond to the components of the base station described in FIGS. 1 to 18.

According an embodiment, the transceiver may transmit and/or receive signals with UEs. The signals may include control information and data. To this end, the transceiver may include an RF transmitter configured to perform amplification and up-conversion of a frequency of a transmitted signal, an RF receiver configured to perform low-noise amplification of a received signal and downconversion of a frequency, and the like. However, this is only an embodiment of the transceiver, and the components of the transceiver are not limited to the RF transmitter and the RF receiver.

According to an embodiment, the transceiver may receive signals through a radio channel, output the same to the processor, and transmit signals output from the processor through the radio channel.

According to an embodiment, the memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

## EP 4 709 009 A1

According to an embodiment, the processor (or at least one processor) may control a series of processes so that the base station can operate according to the above-described embodiments of the disclosure. For example, the processor may control components of the base station to configure DCI configured in two layers including allocation information on multiple PDSCHs and to transmit the same. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method performed by a user equipment (UE) in a wireless communication system, the method comprising:

   receiving, from a base station, first information comprising information on at least one configuration for a channel state information (CSI) report, wherein the information on the at least one configuration comprises information on sub-configurations;

receiving, from the base station, second information for the CSI report, wherein at least one sub-configuration among the sub-configurations is indicated based on the second information; and

transmitting, to the base station, the CSI report for the at least one sub-configuration.

2. The method of claim 1, wherein the first information comprises information on at least one trigger state associated with a portion of the sub-configurations,

wherein the second information comprises downlink control information (DCI), and the DCI comprises a CSI request field associated with information on a trigger state corresponding to the at least one sub-configuration among the at least one trigger state, and

wherein the information on the at least one trigger state corresponds to an aperiodic CSI report or a semi-persistent (SP) CSI report on a physical uplink shared channel (PUSCH).

3. The method of claim 1, wherein the second information comprises a medium access control (MAC) control element (CE) for a semi-persistent (SP) CSI report on a physical uplink control channel (PUCCH),

wherein the MAC CE comprises a first field indicating whether the at least one configuration for the CSI report is activated and a second field indicating whether sub-configurations included in an activated configuration among the at least one configuration are activated, and

wherein the at least one sub-configuration is indicated to be activated, based on the second field.

4. The method of claim 1, wherein the information on the sub-configurations is based on first capability information on a maximum number of sub-configurations configured in a configuration for the CSI report and second capability information on a number of CSI reports corresponding to the sub-configurations.

5. A user equipment (UE) in a wireless communication system, the UE comprising:

a transceiver; and
a controller coupled with the transceiver,
wherein the controller is configured to:

receive, from a base station, first information comprising information on at least one configuration for a channel state information (CSI) report, wherein the information on the at least one configuration comprises information on sub-configurations;

receive, from the base station, second information for the CSI report, wherein at least one sub-configuration among the sub-configurations is indicated based on the second information; and

transmit, to the base station, the CSI report for the at least one sub-configuration.

6. The UE of claim 5, wherein the first information comprises information on at least one trigger state associated with a portion of the sub-configurations,

wherein the second information comprises downlink control information (DCI), and the DCI comprises a CSI request field associated with information on a trigger state corresponding to the at least one sub-configuration among the at least one trigger state, and

wherein the information on the at least one trigger state corresponds to an aperiodic CSI report or a semi-persistent (SP) CSI report on a physical uplink shared channel (PUSCH).

7. The UE of claim 5, wherein the second information comprises a medium access control (MAC) control element (CE) for a semi-persistent (SP) CSI report on a physical uplink control channel (PUCCH),

wherein the MAC CE comprises a first field indicating whether the at least one configuration for the CSI report is activated and a second field indicating whether sub-configurations included in an activated configuration among the at least one configuration are activated, and

wherein the at least one sub-configuration is indicated to be activated, based on the second field.

8. The UE of claim 5, wherein the information on the sub-configurations is based on first capability information on a maximum number of sub-configurations configured in a configuration for the CSI report and second capability information on a number of CSI reports corresponding to the sub-configurations.

9. A method performed by a base station in a wireless communication system, the method comprising:

transmitting, to a user equipment (UE), first information comprising information on at least one configuration for a channel state information (CSI) report, wherein the information on the at least one configuration comprises information on sub-configurations;
transmitting, to the UE, second information for the CSI report, wherein at least one sub-configuration among the sub-configurations is indicated based on the second information; and
receiving, from the UE, the CSI report for the at least one sub-configuration.

10. The method of claim 9, wherein the first information comprises information on at least one trigger state associated with a portion of the sub-configurations,

wherein the second information comprises downlink control information (DCI), and the DCI comprises a CSI request field associated with information on a trigger state corresponding to the at least one sub-configuration among the at least one trigger state, and
wherein the information on the at least one trigger state corresponds to an aperiodic CSI report or a semi-persistent (SP) CSI report on a physical uplink shared channel (PUSCH).

11. The method of claim 9, wherein the second information comprises a medium access control (MAC) control element (CE) for a semi-persistent (SP) CSI report on a physical uplink control channel (PUCCH),

wherein the MAC CE comprises a first field indicating whether the at least one configuration for the CSI report is activated and a second field indicating whether sub-configurations included in an activated configuration among the at least one configuration are activated, and
wherein the at least one sub-configuration is indicated to be activated, based on the second field.

12. The method of claim 9, wherein the information on the sub-configurations is based on first capability information on a maximum number of sub-configurations configured in a configuration for the CSI report and second capability information on a number of CSI reports corresponding to the sub-configurations.

13. A base station in a wireless communication system, the base station comprising:

a transceiver; and
a controller coupled with the transceiver,
wherein the controller is configured to:

transmit, to a user equipment (UE), first information comprising information on at least one configuration for a channel state information (CSI) report, wherein the information on the at least one configuration comprises information on sub-configurations;
transmit, to the UE, second information for the CSI report, wherein at least one sub-configuration among the sub-configurations is indicated based on the second information; and
receive, from the UE, the CSI report for the at least one sub-configuration.

14. The base station of claim 13, wherein the first information comprises information on at least one trigger state associated with a portion of the sub-configurations,

wherein the second information comprises downlink control information (DCI), and the DCI comprises a CSI request field associated with information on a trigger state corresponding to the at least one sub-configuration among the at least one trigger state, and
wherein the information on the at least one trigger state corresponds to an aperiodic CSI report or a semi-persistent (SP) CSI report on a physical uplink shared channel (PUSCH).

15. The base station of claim 13, wherein the second information comprises a medium access control (MAC) control element (CE) for a semi-persistent (SP) CSI report on a physical uplink control channel (PUCCH),

wherein the MAC CE comprises a first field indicating whether the at least one configuration for the CSI report is activated and a second field indicating whether sub-configurations included in an activated configuration among the at least one configuration are activated, and
wherein the at least one sub-configuration is indicated to be activated, based on the second field.

FIG.1

FIG.2

EP 4 709 009 A1

FIG.3

FIG.4

FIG.5

EP 4 709 009 A1

FIG.6

FIG.7

DMRS port B

830

820

835

825

DMRS port A

Frequency domain

TRP A  TRP B

850

DMRS port A, B

810

815

805

800

DMRS port A, B

Frequency domain

TRP A  TRP B

845

Frequency domain

TRP A  TRP B

840

FIG.8

| Control information for TRP #0 | — | DCI #0 |
| Control information for TRP #1 | — | DCI #1 |
| ⋮ | | |
| Control information for TRP #(N-1) | — | DCI #(N-1) |

Case #1 (900)

| Control information for TRP #0 | — | DCI #0 |
| Control information for TRP #1 | — | sDCI #0 |
| ⋮ | | ⋮ |
| Control information for TRP #(N-1) | — | sDCI #(N-2) |

Case #2 (905)

| Control information for TRP #0 | — | DCI |
| Control information for TRP #1 | | sDCI |
| ⋮ | | |
| Control information for TRP #(N-1) | | |

Case #3 (910)

| Control information for TRP #0 | | |
| Control information for TRP #1 | — | Long DCI |
| ⋮ | | |
| Control information for TRP #(N-1) | | |

Case #4 (915)

FIG.9

(1000) (1005) (1010) (1025) (1030)

| CSI-AperiodicTriggerState #1 | → | CSI-AssociatedReportConfigInfo #1 | → | CSI-ReportConfig | → | CSI-ResourceConfig | → | NZP-CSI-RS-ResourceSet #1 |

CSI-AperiodicTriggerState #2 → CSI-AssociatedReportConfigInfo #2

resourceForChannel (1015)

NZP-CSI-RS-ResourceSet #2 (1035)

CSI-AperiodicTriggerState #N → CSI-AssociatedReportConfigInfo #M

nzp-CSI-RS

(1020)

NZP-CSI-RS-ResourceSet #L

N = 128(max) N = 16(max) L = 16(max)

FIG.10

FIG.11

| R | Serving Cell ID | | | | | BWP ID | | Oct1 |
| R | R | R | R | $S_3$ | $S_2$ | $S_1$ | $S_0$ | Oct2 |

1200

1205

# FIG.12

FIG.13

$I_0 = 0 \sim$(10-00)

(10-10)

(10-11)

(10-12)

(10-04)$\sim K_3 = 9$

(10-03)$\sim K_2 = 6$

(10-02)$\sim K_1 = 3$

(10-01)$\sim K_0 = 0$

Time

Frequency

1400

| R | Serving Cell ID | BWP ID | | ~1405 | Oct1 |
| R | R | R | R | $S_3$ | $S_2$ | $S_1$ | $S_0$ | ~1410 | Oct2 |
| $S_{s,3}$ | | | | $S_{s,2}$ | | | | | Oct3 |
| $S_{s,1}$ | | | | $S_{s,0}$ | | | | ~1415 | Oct4 |

1450

| R | Serving Cell ID | BWP ID | | ~1455 | Oct1 |
| R | R | R | R | $S_3$ | $S_2$ | $S_1$ | $S_0$ | ~1460 | Oct2 |
| $S_{s,3}$ | | | | | | | | | Oct3 |
| $S_{s,2}$ | | | | | | | | | Oct4 |
| $S_{s,1}$ | | | | | | | | | Oct5 |
| $S_{s,0}$ | | | | | | | | ~1465 | Oct6 |

# FIG.14

## 1500

| 1501 | S | Serving Cell ID | | BWP ID | 1505 | Oct1 |
|------|---|-----------------|---|--------|------|------|
| | R | R | R | R | $S_3$ | $S_2$ | $S_1$ | $S_0$ | 1510 | Oct2 |
| | $S_{s,3}$ | | | $S_{s,2}$ | | | Oct3 |
| | $S_{s,1}$ | | | $S_{s,0}$ | | 1515 | Oct4 |

## 1550

| R | Serving Cell ID | | BWP ID | 1555 | Oct1 |
|---|-----------------|---|--------|------|------|
| $A_3$ | $A_2$ | $A_1$ | $A_0$ | $S_3$ | $S_2$ | $S_1$ | $S_0$ | 1560 | Oct2 |
| $A_{s,3}$ | | | $A_{s,2}$ | | | Oct3 |
| $A_{s,1}$ | | | $A_{s,0}$ | | 1570 | Oct4 |

# FIG.15

FIG.16

RECEIVE UE CAPABILITY ~(1700)

TRANSMIT HIGHER
LAYER SIGNALING ~(1705)

RECEIVE CSI REPORT
CONFIGURATION/ACTIVATION/
INDICATION ~(1710)

TRANSMIT CSI-RS ~(1715)

RECEIVE CSI REPORT ~(1720)

TRANSMIT BASE
STATION SIGNALING RELATED
TO NETWORK ENERGY SAVING ~(1725)

# FIG.17

(18-05) UE PROCESSOR

UE RECEIVER (18-00)

UE TRANSMITTER (18-10)

FIG.18

(19-05) ~ BASE STATION PROCESSOR

BASE STATION RECEIVER ~ (19-00)

BASE STATION TRANSMITTER ~ (19-10)

FIG.19

## INTERNATIONAL SEARCH REPORT

| International application No. |
|---|
| **PCT/KR2024/095809** |

| | |
|---|---|
| **A.** | **CLASSIFICATION OF SUBJECT MATTER** |
| | **H04W 72/23**(2023.01)i; **H04B 7/06**(2006.01)i; **H04L 5/00**(2006.01)i; **H04W 24/10**(2009.01)i; **H04W 52/02**(2009.01)i |

According to International Patent Classification (IPC) or to both national classification and IPC

| | |
|---|---|
| **B.** | **FIELDS SEARCHED** |

Minimum documentation searched (classification system followed by classification symbols)

H04W 72/23(2023.01); H04L 12/24(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI report, sub-configuration, trigger state, DCI, MAC-CE, activation, semi-persistent CSI report, capability

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X<br>Y | SAMSUNG. Techniques in spatial and power domains. R1-2305526, 3GPP TSG RAN WG1 #113. Incheon, Korea. 13 May 2023.<br>See sections 3.4-4.2. | 1,3-5,7-9,11-13,15<br>2,6,10,14 |
| Y | HUAWEI et al. CSI enhancements for network energy saving. R1-2304644, 3GPP TSG-RAN WG1 Meeting #113. Incheon, Korea. 22-26 May, 15 May 2023.<br>See section 2.4. | 2,6,10,14 |
| A | VIVO. Discussions on techniques in spatial and power domains. R1-2304492, 3GPP TSG RAN WG1 #113. Incheon, Korea. 15 May 2023.<br>See sections 2.2-2.2.2. | 1-15 |
| A | KT CORP. On network energy saving techniques in spatial and power domains. R1-2305552, 3GPP TSG RAN WG1 #113. Incheon, Korea. 15 May 2023.<br>See sections 2-3. | 1-15 |
| A | WO 2022-040046 A1 (QUALCOMM INCORPORATED) 24 February 2022 (2022-02-24)<br>See paragraphs [0174]-[0177]; and claim 1. | 1-15 |

| ☐ Further documents are listed in the continuation of Box C. | ☑ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 September 2024** | **04 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
**Information on patent family members**

International application No.

**PCT/KR2024/095809**

| Patent document cited in search report | | | Publication date (day/month/year) | Patent family member(s) | | | Publication date (day/month/year) |
|---|---|---|---|---|---|---|---|
| WO | 2022-040046 | A1 | 24 February 2022 | CN | 116210263 | A | 02 June 2023 |
| | | | | EP | 4201036 | A1 | 28 June 2023 |
| | | | | US | 2023-0328559 | A1 | 12 October 2023 |

Form PCT/ISA/210 (patent family annex) (July 2022)